(19)

Europäisches
Patentamt
European
Patent Office
Office européen
des brevets

(11) **EP 4 068 673 A1**

(12) **EUROPEAN PATENT APPLICATION**

(43) Date of publication:
**05.10.2022 Bulletin 2022/40**

(51) International Patent Classification (IPC):
***H04L 5/00*** *(2006.01)*

(21) Application number: **22165509.5**

(52) Cooperative Patent Classification (CPC):
**H04L 5/0053; H04L 5/0098**

(22) Date of filing: **30.03.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2021 US 202163168019 P**

(71) Applicant: **Comcast Cable Communications LLC Philadelphia, Pennsylvania 19103 (US)**

(72) Inventors:
• **CIRIK, Ali Cagatay**
**Philadelphia, 19103 (US)**
• **ZHOU, Hua**
**Philadelphia, 19103 (US)**
• **DINAN, Esmael Hejazi**
**Philadelphia, 19103 (US)**
• **YI, Yunjung**
**Philadelphia, 19103 (US)**

(74) Representative: **V.O.**
**P.O. Box 87930**
**2508 DH Den Haag (NL)**

(54) **MONITORING OVERLAPPING CORESETS**

(57)    Beam management and control resource set (CORESET) monitoring may be used in wireless communications. Multiple CORESETs associated with different TCI states may overlap in time. A first CORESET, of the multiple CORESETs, may be activated with a plurality of TCI states and may be selected for monitoring. Other CORESETs, of the multiple CORESETs, having the same TCI states or at least one of the TCI states of the first CORESET may also be monitored.

EP 4 068 673 A1

**Description**

CROSS-REFERENCE TO RELATED APPLICATIONS

This application claims the benefit of U.S. Provisional Application No. 63/168,019, filed on March 30, 2021. The above-referenced application is hereby incorporated by reference in its entirety.

BACKGROUND

Beams may be used for wireless communications. A wireless device may communicate with a base station to perform beam management and/or refinement.

SUMMARY

The following summary presents a simplified summary of certain features. The summary is not an extensive overview and is not intended to identify key or critical elements.

Wireless communications may use one or more beams. A base station may configure a wireless device with one or more control resource sets (coresets) for at least one search space where the wireless device may monitor and/or identify control information, such as downlink control information (DCI). When multiple control resource sets (coresets) associated with different beams overlap, a coreset may be selected for monitoring and other coresets having the same beam as the selected coreset may be monitored. However, if a coreset is activated with two beams, when multiple coresets overlap, only the selected coreset and other coresets having the same two beams of the selected coreset may be monitored. This may result in fewer coresets being monitored, which may reduce the achieved data rate since fewer DCI may be transmitted and may reduce the flexibility of the base station due to a reduced number of corrects with which to send a DCI. This may also result in inefficient beam management and reduce the reliability of communication between the base station and wireless device, for example, due to other coresets being available for monitoring. The wireless device and/or a base station may reduce a likelihood of such unreliability by monitoring all coresets that have the same two beams, or at least one of the two beams, as the selected coreset. The wireless device and/or the base station may communicate based on at least one of the two beams of the selected coreset, which may provide advantages such as increased flexibility and reliability for wireless communications.

Downlink control information may be used to schedule reception by a wireless device and/or transmission by a base station of a transport block (e.g., PDSCH transmission). The transport block may be received based on default beam(s) if the transport block overlaps in time with a coreset and if a beam activated for the coreset is different from the default beam(s). However, if a coreset is activated with at least two beams and/or if two coresets have different activated beams that are linked for frequency domain multiplexing (FDM) repetition, the base station may not be aware which of the at least two beams the wireless device may use to receive the transport block. This may result in unreliable communication and inefficient use of system resources, for example, due to beam misalignment and a decrease in the likelihood of receiving the transport block. The wireless device and/or a base station may reduce a likelihood of such unreliability by receiving the transport block based on one or more beams, of the at least two beams, of the coreset(s), for example, if the transport block overlaps with the coreset(s) and the default beam is different from the at least two beams. The wireless device and/or the base station may communicate based on one or more of the at least two beams or the default beam, which may provide advantages such as improved reliability, improved performance of beam determinations and/or more efficient use of communication resources.

One or more beams may be determined by a base station and/or by a wireless device. For a random access procedure, a random access preamble associated with a selected beam may be sent by the wireless device. The selected beam may be used as a default pathlosss reference signal. However, using the selected beam as a default pathlosss reference signal may be inefficient, for example, if the wireless device indicates a candidate beam via an uplink transmission (e.g., MsgA transmission, Msg3 transmission of a random access procedure). This may result in increased transmission power, for example, due to using a wider, omnidirectional beam to determine the transmission power, rather than a narrower/candidate beam. The wireless device and/or a base station may reduce a likelihood of such inefficiency and/or power consumption by indicating, via a transport block, a new/candidate beam that may be used as the default pathloss reference signal, which may provide advantages such as decreased power consumption and increased data rate and precision of beamforming.

These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example group of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein

FIG. 16A, FIG. 16B, FIG. 16C, and FIG. 16D show examples of uplink and downlink signal transmission.

FIG. 17 shows an example of beam refinement.

FIG. 18 shows an example of beam refinement.

FIG. 19 shows an example method of beam refinement.

FIG. 20 shows an example method of beam refinement as per an aspect of an embodiment of the present disclosure.

FIG. 21 shows an example of beam refinement.

FIG. 22 shows an example method of beam refinement.

FIG. 23A and FIG. 23B show example methods of beam refinement.

FIG. 24 shows an example of a medium access control control element (MAC CE) format.

FIG. 25A shows an example of coreset overlapping.

FIG. 25B and FIG. 25C show example methods of monitoring overlapping coresets.

FIG. 26 shows an example of a default TCI state.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems. More particularly, the technology disclosed herein may relate to wireless communication exposure detection and/or reporting.

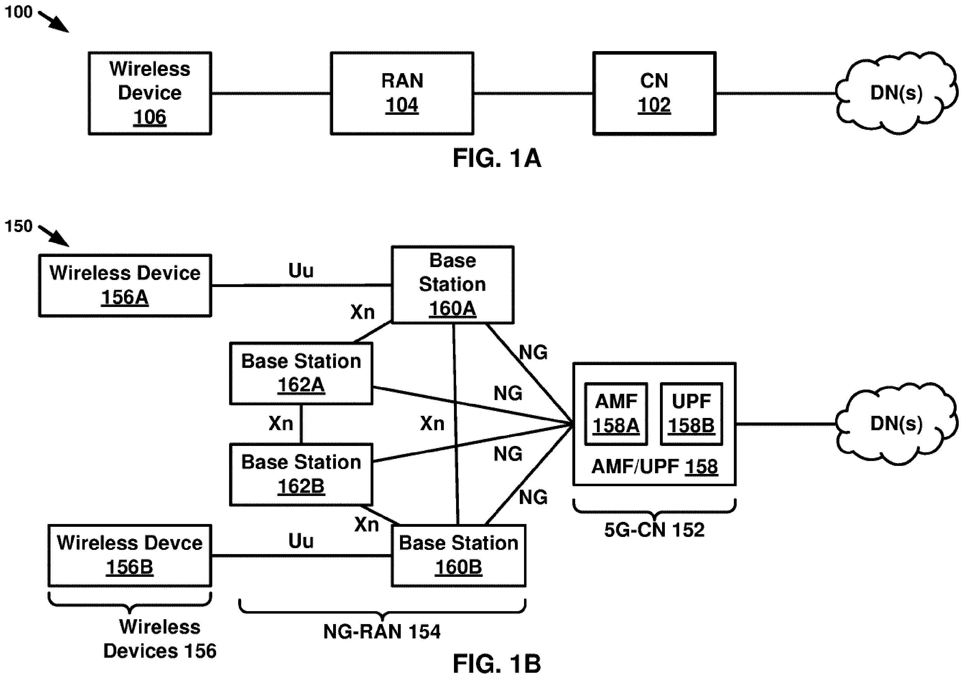

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors).The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

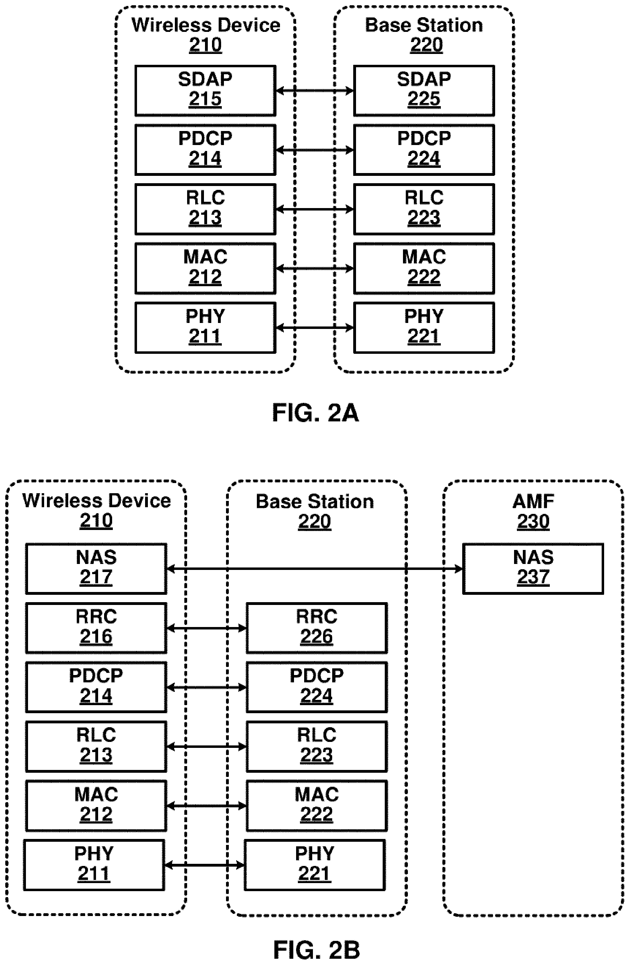

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

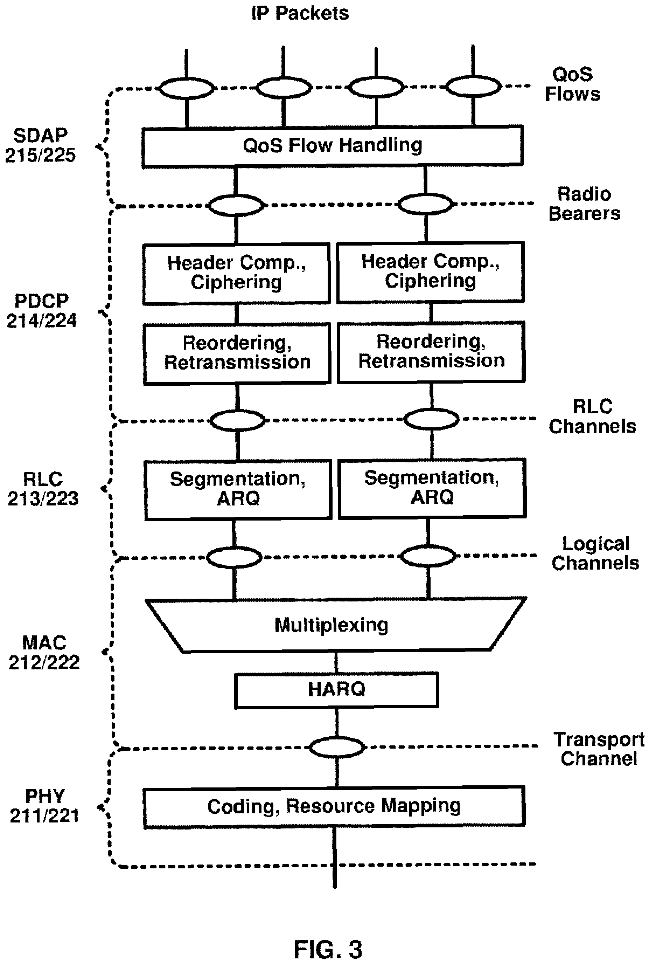

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/demapping between the one or more QoS flows 310 and one or more radio bearers 320 (e.g., data radio bearers). The mapping/de-mapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)).The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

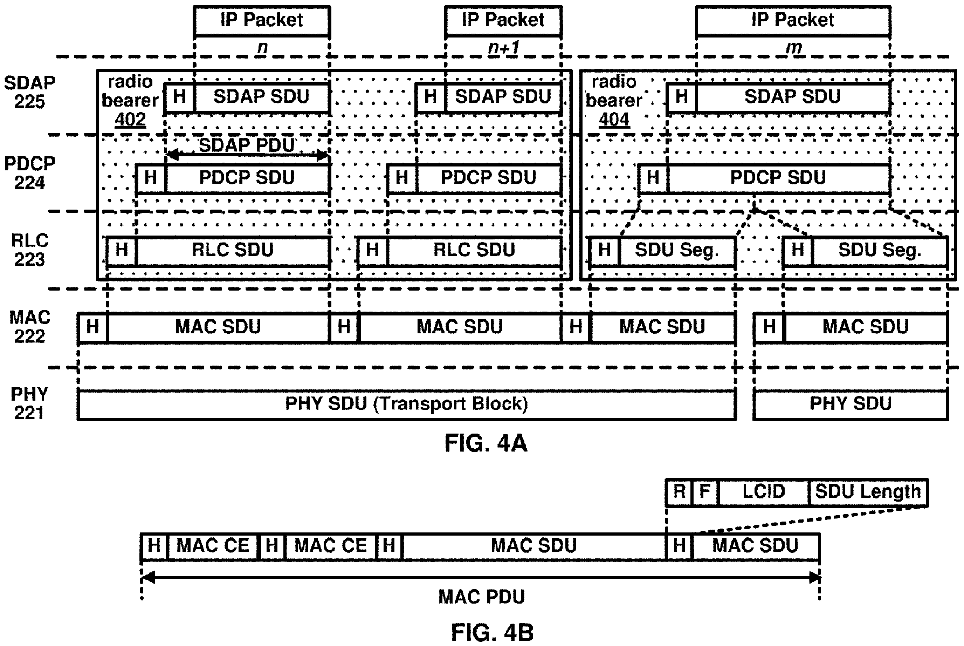

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

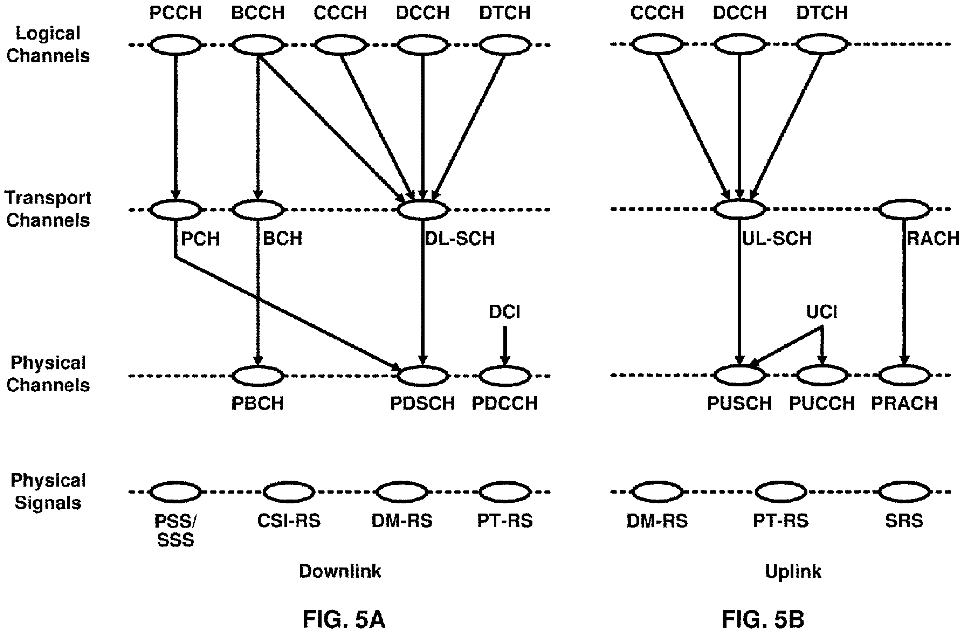

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless device).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

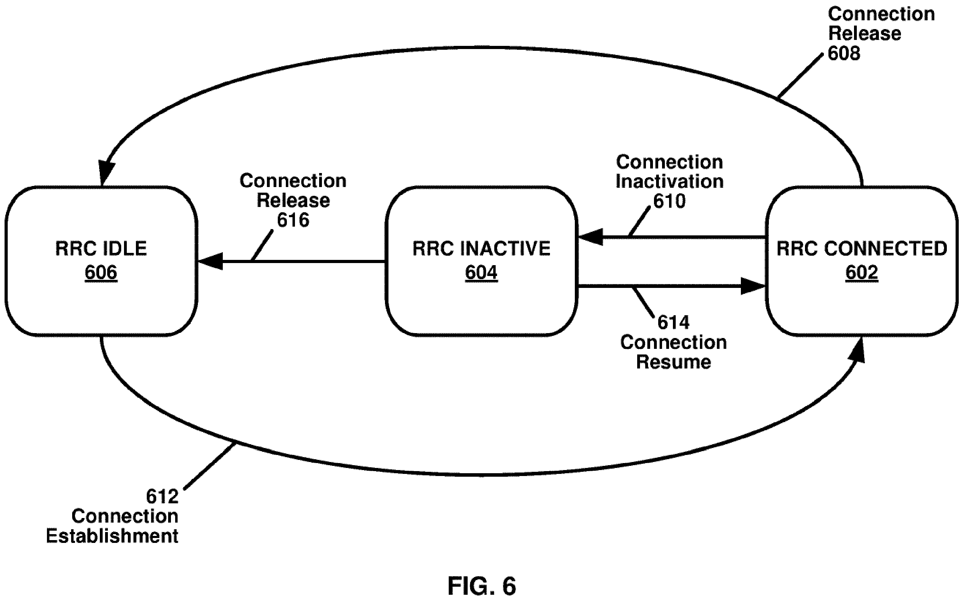

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area,.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

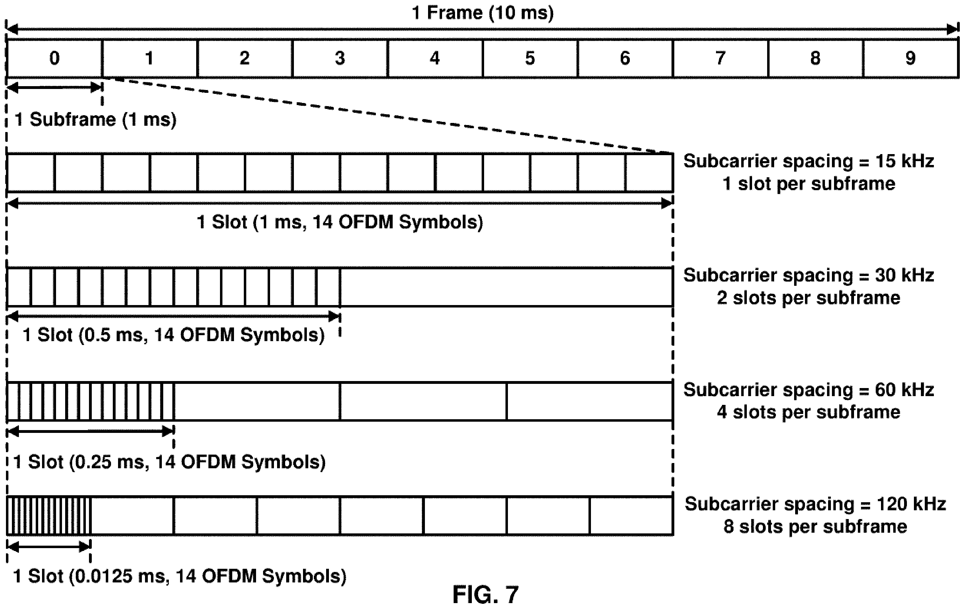

FIG. 7 shows an example configuration of a frame. The frame may comprise, for example, an NR radio frame into which OFDM symbols may be grouped. A frame (e.g., an NR radio frame) may be identified/indicated by a system frame number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed number/quantity of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

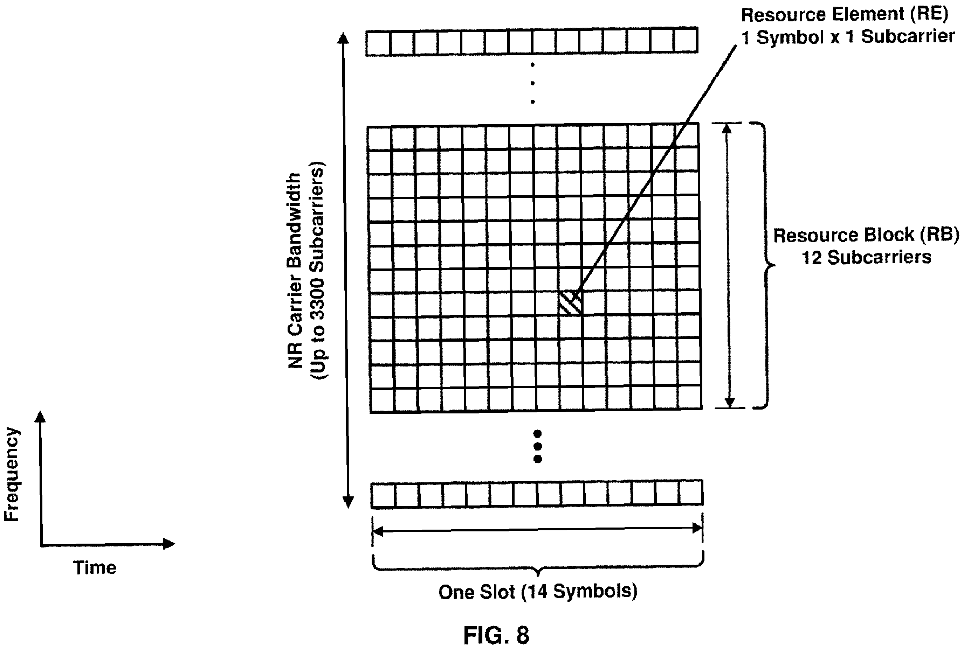

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or $275 \times 12 = 3300$ subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

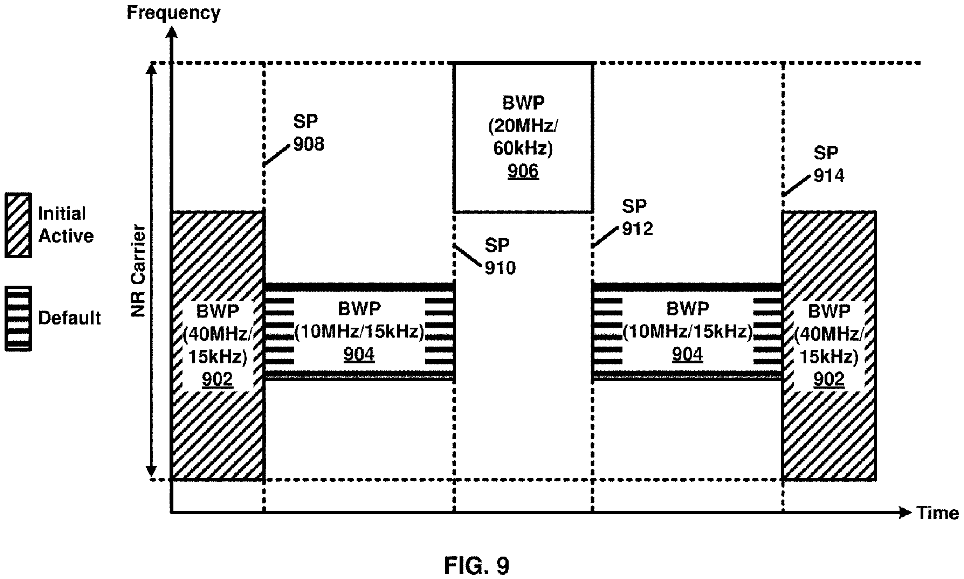

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response receiving DCI indicating BWP 904 as a new active BWP. The wireless device may switch at a switching point 914 from an active BWP 904 to the BWP 902, for example, after or in response receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a number/quantity of serving cells for the wireless device (e.g., one serving cell for a CC), for example, if CA is configured/used. The CCs may have multiple configurations in the frequency domain.

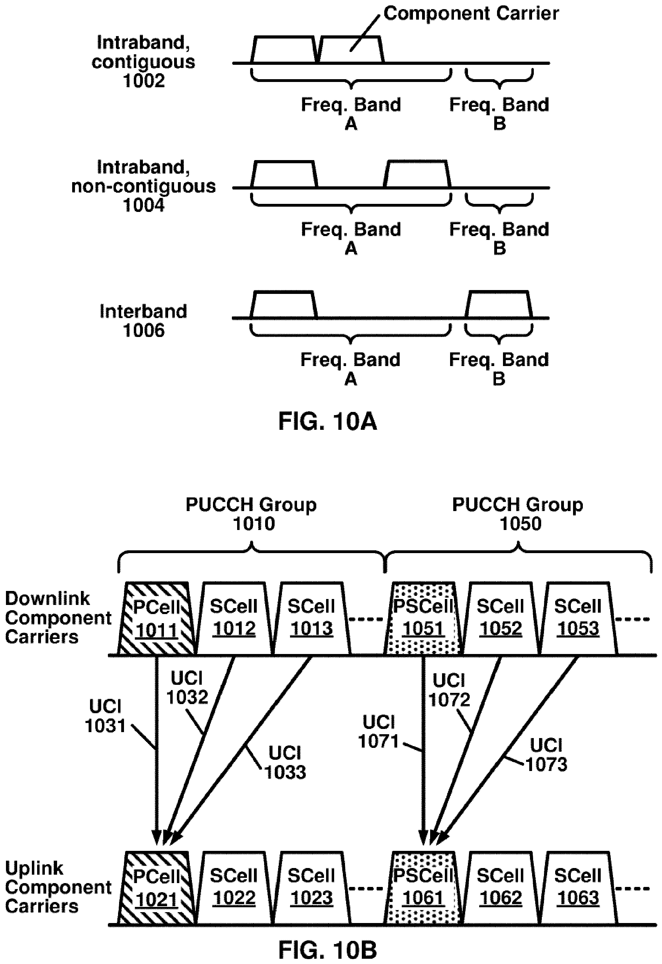

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC).

The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

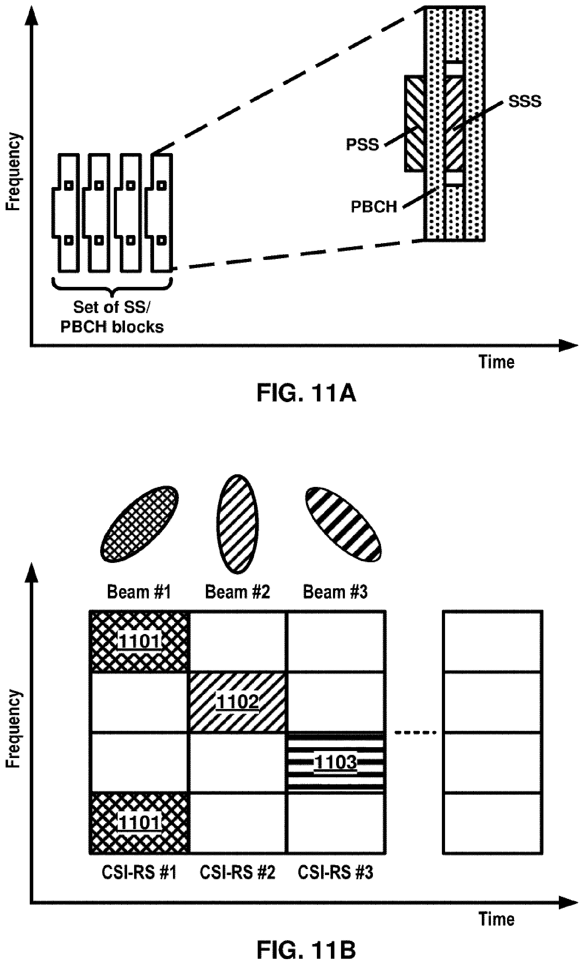

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms).The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB 1.The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a number/quantity (e.g. a maximum number/quantity) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO). A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DMRSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a number/quantity (e.g. the maximum number/quantity) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DMRSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in a SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of: a CSI-RS resource configuration identity, a number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication (TCI) states comprising a number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

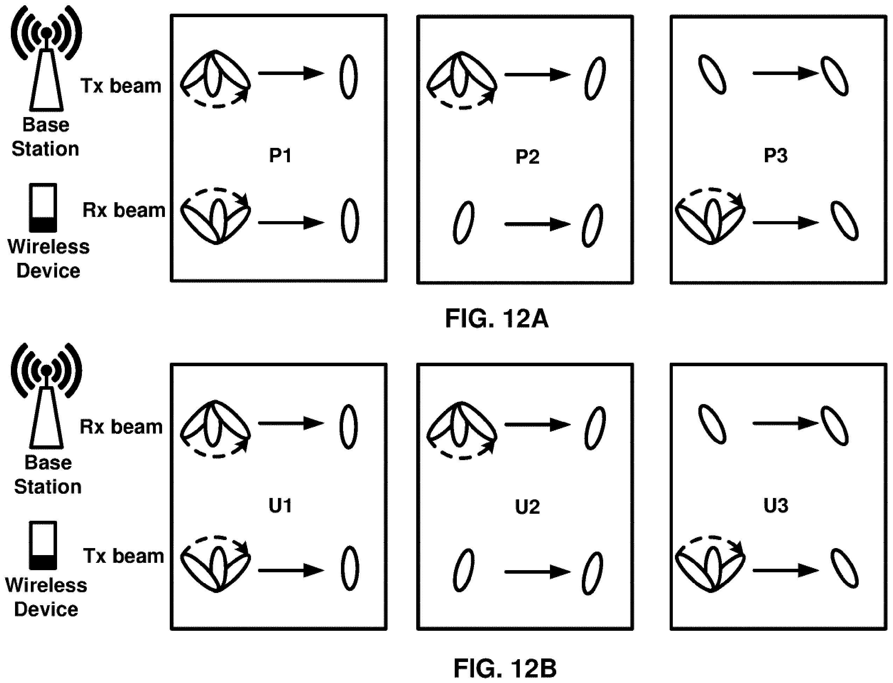

FIG. 12A shows examples of downlink beam management procedures. One or more downlink beam management procedures (e.g., downlink beam management procedures P1, P2, and P3) may be performed. Procedure PI may enable a measurement (e.g., a wireless device measurement) on Tx beams of a TRP (or multiple TRPs) (e.g., to support a selection of one or more base station Tx beams and/or wireless device Rx beams). The Tx beams of a base station and the Rx beams of a wireless device are shown as ovals in the top row of PI and bottom row of P1, respectively. Beamforming (e.g., at a TRP) may comprise a Tx beam sweep for a set of beams (e.g., the beam sweeps shown, in the top rows of PI and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of PI and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure PI. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station to perform a measurement on Tx beams of a wireless device (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

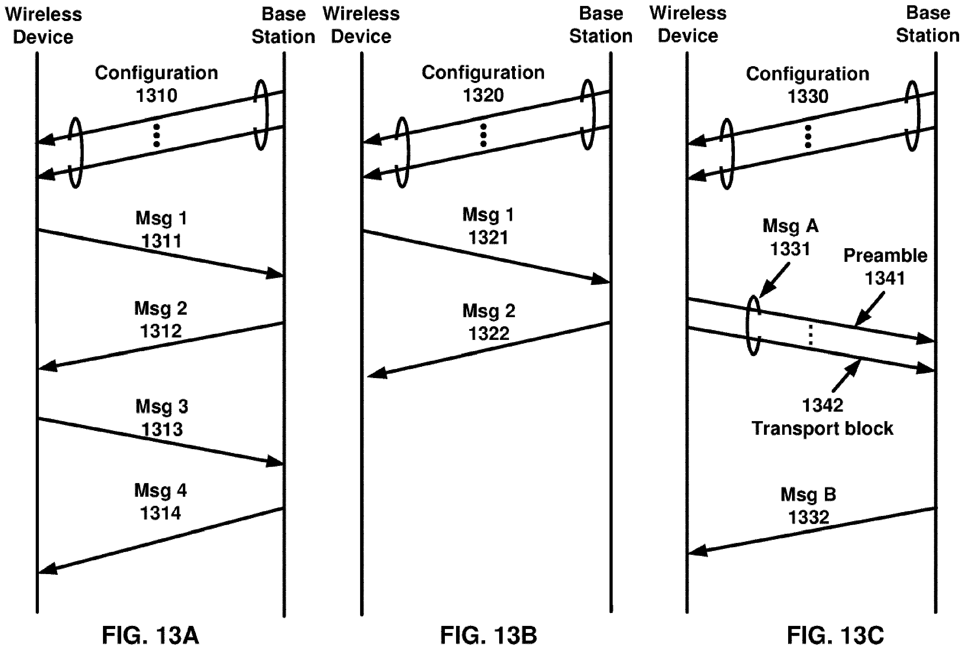

FIG. 13A shows an example four-step random access procedure. The four-step random access procedure may comprise a four-step contention-based random access procedure. A base station may send/transmit a configuration message 1310 to a wireless device, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-configGeneral); cell-specific parameters (e.g., RACH-ConfigCommon); and/or dedicated parameters (e.g., RACH-configDedicated). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g.,

ra-ssb-OccasionMskIndex and/or ra-OccasionList) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE_POWER_RAMPING_STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE_TRANSMISSION_COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type 1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$\text{RA-RNTI} = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \leq s\_id < 14$), t_id may be an index of a first slot of the PRACH occasion in a system frame (e.g., $0 \leq t\_id < 80$), f_id may be an index of the PRACH occasion in the frequency domain (e.g., $0 \leq f\_id < 8$), and ul_carrier id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station may, prior to initiation of the procedure, send/transmit a configuration message 1320 to the wireless device. The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station may, prior to initiation of the procedure, send/transmit a configuration message 1330 to the wireless device. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by abase station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a number of contiguous control channel elements (CCEs), for example, based on a payload size of the DCI and/or a coverage of the base station. The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

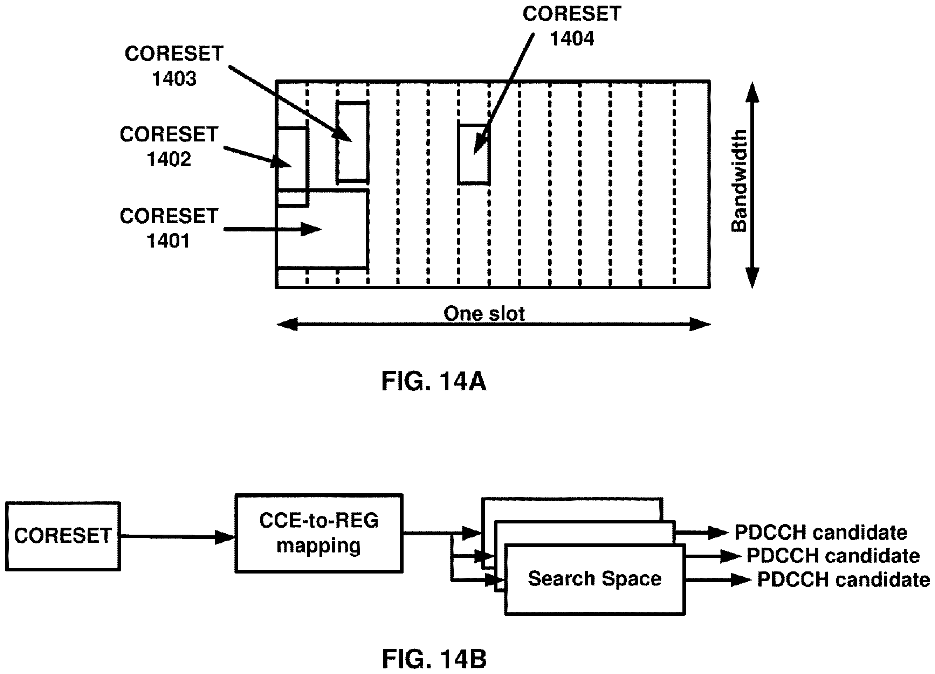

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the number of CCEs, the number of PDCCH candidates in common search spaces, and/or the number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a number of OFDM symbols (e.g., between four and fourteen OFDM symbols) and may comprise two or fewer bits. The wireless device may use PUCCH format 1, for example, if the transmission is over/via four or more symbols and the number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a number (e.g. a maximum number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

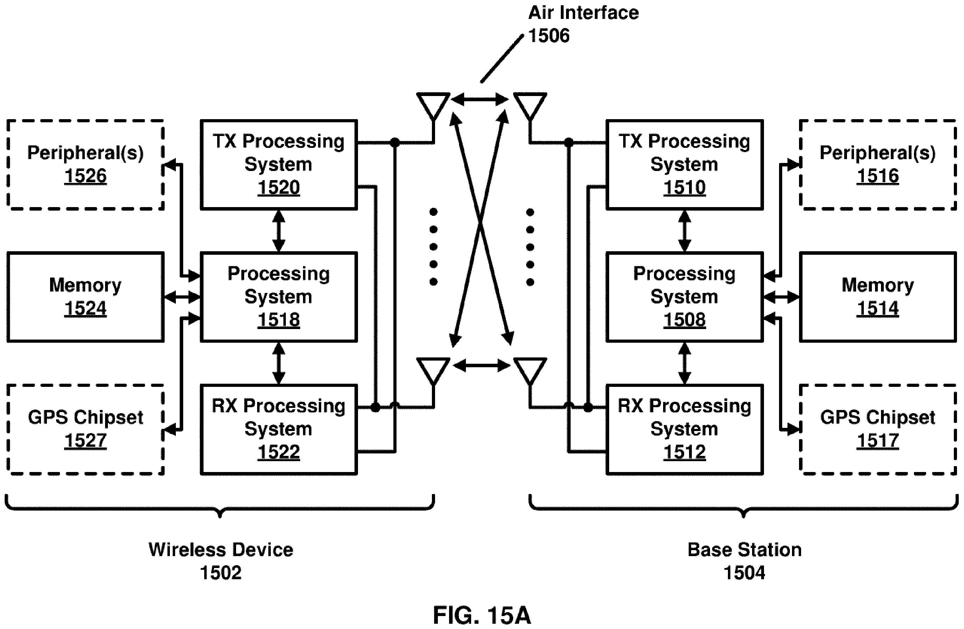

FIG. 15A shows an example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

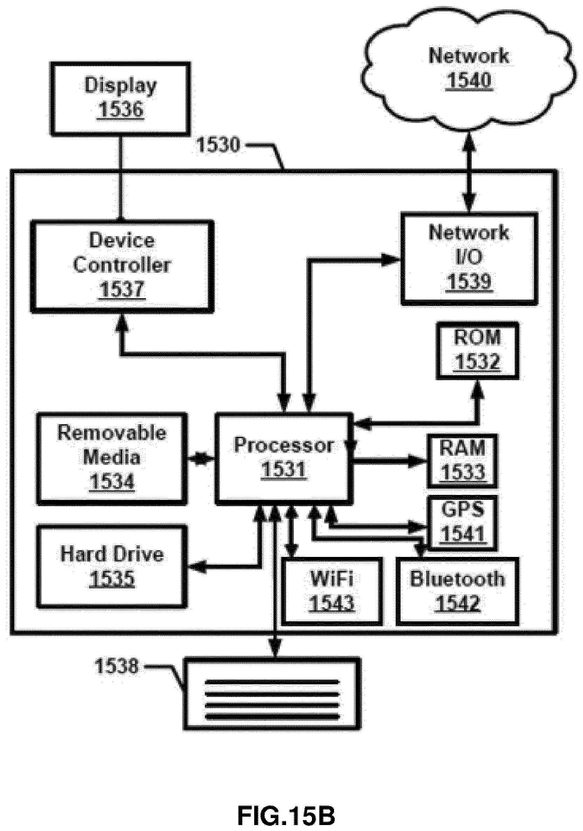

FIG. 15B shows example elements of a computing device that may be used to implement any of the various devices described herein, including, for example, the base station 160A, 160B, 162A, 162B, 220, and/or 1504, the wireless device 106, 156A, 156B, 210, and/or 1502, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

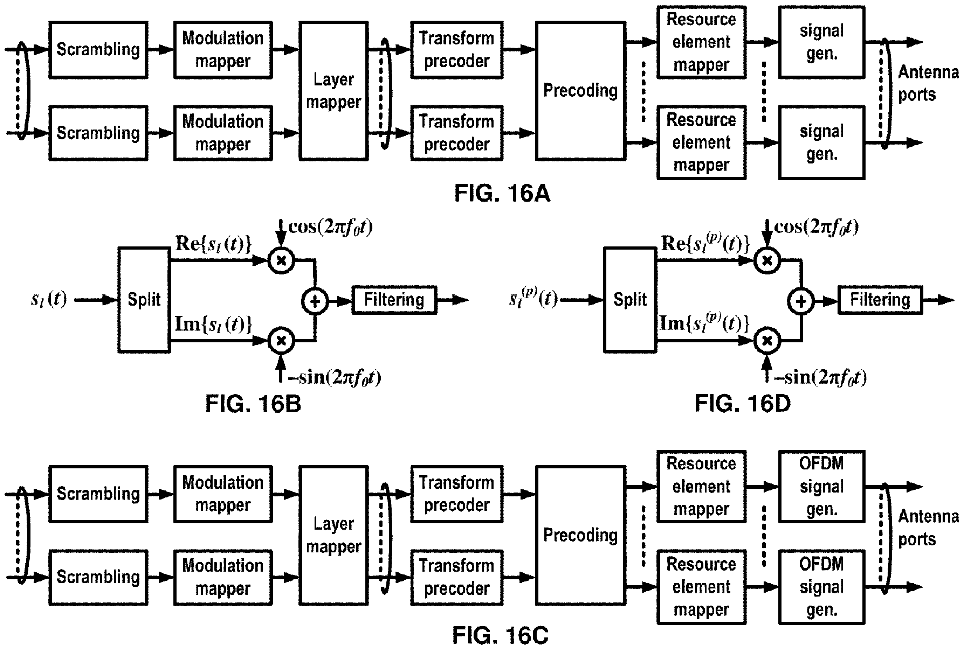

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, once it is started and continue running until it is stopped or until it expires. A timer may be started, for example, if it is not running or restarted if it is running. A timer may be associated with a value (e.g., the timer may be started or restarted from a value or may be started from zero and expire once it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

A wireless device may use a reference signal (e.g., SS/PBCH block) to obtain master information block (MIB). The wireless device may determine and/or obtain the MIB based on the reference signal. The wireless device may determine a transmission power based on the reference signal. The wireless device may send (e.g., transmit) an uplink signal (e.g., transport block, UCI, PUSCH/PUCCH/SRS) with the transmission power. The wireless device may determine the transmission power based on the reference signal. The wireless device may determine the transmission power using the reference signal, for example, based on (e.g., in response to) one or more configuration parameters not indicating at least one pathloss reference signal (e.g., pathlossReferenceRSs). The wireless device may receive one or more messages comprising the one or more configuration parameters. The wireless device may determine the transmission power using the reference signal, for example, based on (e.g., in response to) not receiving one or more configuration parameters. The wireless device may not receive one or more messages comprising the one or more configuration parameters. The one or more configuration parameters may be dedicated to the wireless device. The wireless device may determine the transmission power using the reference signal, for example, before receiving one or more configuration parameters. The one or more configuration parameters may be dedicated to the wireless device.

A wireless device may initiate a random-access procedure. The wireless device may send (e.g., transmit) a random-access preamble that is associated with a reference signal (e.g., SS/PBCH block). The reference signal associated with the reference signal may be, for example, the same as the reference signal used to obtain MIB. The reference signal associated with the reference signal may be, for example, different from the reference signal used to obtain MIB. The wireless device may indicate a new/candidate reference signal. The new/candidate reference signal may comprise, for example, a CSI-RS or a SS/PBCH block. The wireless device may indicate a new/candidate reference signal in a PUSCH transmission of the random-access procedure. The PUSCH transmission may be a Msg3 transmission. The PUSCH transmission may be a Msg3 transmission, for example, if the random-access procedure is a 4-step random-access procedure. The PUSCH transmission may be a MsgA transmission. The PUSCH transmission may be a MsgA transmission, for example, if the random-access procedure is a 2-step random-access procedure. The PUSCH transmission may comprise a MAC CE that comprises and/or indicates the new/candidate reference signal. The wireless device may perform beam refinement. The wireless device may perform beam refinement, for example, based on indicating the new/candidate reference signal that is different from the reference signal associated with the random-access preamble. The new/candidate reference signal and the reference signal associated with the random-access preamble may be quasi co-located. The new/candidate reference signal and the reference signal associated with the random-access preamble may not be quasi co-located.

Beam refinement may be useful for cells operating in a high frequency band. The high frequency band may be higher than 20 GHz. The high frequency band may be higher than 40 GHz. The high frequency band may be higher than 52 GHz. The high frequency band may be between 52 GHz and 71 GHz. The high frequency band may be higher than 71 GHz. The new/candidate reference signal may be narrower than the reference signal (e.g., SS/PBCH block) associated with the random-access preamble. Sending (e.g., transmitting) and/or receiving a transport block (e.g., PUSCH, PDSCH), based on the new/candidate reference signal that is narrower than the reference signal associated with the random-access preamble may improve the performance the system (e.g., higher data rate, lower error rate, lower transmission power, less interference to other cells/UEs, and the like).

Beam refinement may be useful for unlicensed cells. A wireless device may determine, for transmission of a random-access preamble, an optimal reference signal. The wireless device may determine, for transmission of a random-access preamble, an optimal reference signal, for example, a reference signal with the highest L1-RSRP, a more robust reference signal, a more reliable reference signal, a reference signal with less interference, and the like. The wireless device may perform a listen before talk (LBT) procedure for transmission of a random-access preamble associated with the optimal reference signal. The wireless device may determine a failure of the LBT. The wireless device may not transmit the random-access preamble associated with the optimal reference signal. The wireless device may not transmit the random-access preamble associated with the optimal reference signal, for example, based on determining the failure of the LBT. The wireless device may transmit the random-access preamble associated with the reference signal. The wireless device may transmit the random-access preamble associated with the reference signal, for example, based on determining the failure of the LBT. The new/candidate reference signal may be, for example, the optimal reference signal. The wireless device may indicate the optimal reference signal as the new/candidate reference signal. The wireless device may indicate the optimal reference signal as the new/candidate reference signal, for example, based on not transmitting the random-access preamble associated with the optimal reference signal. Sending (e.g., transmitting) and/or receiving a transport block (e.g., PUSCH, PDSCH, data) based on the new/candidate reference signal that is more optimal (e.g., higher L1-RSP, higher L3-RSRP, more robust, more reliable, less interference, and the like) than the reference signal associated with the random-access preamble may improve the performance of the communication system (e.g., higher data rate, lower error rate, lower transmission power, less interference to other cells/UEs, and the like).

As described herein, a wireless device may indicate a new/candidate reference signal (e.g., CSI-RS, SS/PBCH block) in a PUSCH transmission of a random-access procedure, which may improve pathloss reference signal determination. The wireless device may determine a transmission power based on the new/candidate reference signal. The wireless device may send (e.g., transmit) an uplink signal (e.g., transport block, UCI, PUSCH/PUCCH/SRS) with the transmission power. The wireless device may determine the transmission power based on the new/candidate reference signal. The wireless device may determine the transmission power using the new/candidate reference signal, for example, based on (e.g., in response to) one or more configuration parameters not indicating at least one pathloss reference signal (e.g., pathlos sReferenceRSs). The wireless device may receive one or more messages comprising the one or more configuration parameters. The wireless device may determine the transmission power using the new/candidate reference signal, for example, based on (e.g., in response to) not receiving one or more configuration parameters. The wireless device may not receive one or more messages comprising the one or more configuration parameters. The one or more configuration parameters may be dedicated to the wireless device. The wireless device may determine the transmission power based on the new/candidate reference signal, for example, before receiving one or more configuration parameters. The one or more configuration parameters may be dedicated to the wireless device. As described herein, the wireless device may improve the performance of the communication system (e.g., higher data rate, lower error rate, lower transmission power, less interference to other cells/UEs, and the like).

A wireless device may receive one or more messages. The wireless device may receive the one or more messages from a base station. The one or more messages may comprise one or more configuration parameters. The one or more configuration parameters may be RRC configuration parameter(s). The one or more configuration parameters may be RRC reconfiguration parameter(s). The one or more configuration parameters may be broadcast parameters. The one or more configuration parameters may be shared and/or used among/by a plurality of wireless devices. The one or more configuration parameters may be for one or more cells. The one or more cells may comprise a cell. At least one configuration parameter of the one or more configuration parameters may be for a cell. The cell may be a primary cell (PCell). The cell may be a secondary cell (SCell). The cell may be a secondary cell configured with PUCCH (e.g., PUCCH SCell). The cell may be an unlicensed cell. The cell may be, for example, operating in an unlicensed band. The cell may be a licensed cell, for example, a cell operating in a licensed band. The cell may operate in a first frequency range (FR1). The FR1 may, for example, comprise frequency bands below 6 GHz. The cell may operate in a second frequency range (FR2). The FR2 may, for example, comprise frequency bands from 24 GHz to 52.6 GHz. The cell may operate in a third frequency range (FR3). The FR3 may, for example, comprise frequency bands from 52.6 GHz to 71 GHz. The FR3 may, for example, comprise frequency bands starting from 52.6 GHz.

The wireless device may perform uplink transmissions. The uplink transmissions may comprise a PUSCH transmission, a PUCCH transmission, or a SRS. The wireless device may perform uplink transmissions, for example, via the cell in a first time and in a first frequency. The wireless device may perform downlink receptions. The downlink receptions may comprise, for example, PDCCH or PDSCH. The wireless device may perform downlink receptions, for example, via the cell in a second time and in a second frequency. The cell may operate in a time-division duplex (TDD) mode. In the TDD mode, the first frequency and the second frequency may be the same. In the TDD mode, the first time and the second time may be different. The cell may operate in a frequency-division duplex (FDD) mode. In the FDD mode, the first frequency and the second frequency may be different. In the FDD mode, the first time and the second time may be the same. The wireless device may be in an RRC connected mode. The wireless device may be in an RRC idle mode. The wireless device may be in an RRC inactive mode.

The cell may comprise a plurality of BWPs. The plurality of BWPs may comprise one or more uplink BWPs comprising an uplink BWP of the cell. The plurality of BWPs may comprise one or more downlink BWPs comprising a downlink BWP of the cell.

A BWP of the plurality of BWPs may be in one of an active state and an inactive state. In the active state of a downlink BWP of the one or more downlink BWPs. The wireless device may receive a PDSCH on/via/for a downlink BWP. The wireless device may receive a PDSCH on/via/for a downlink BWP of the one or more downlink BWPs, for example, in the active state of the downlink BWP. The wireless device may not monitor a downlink channel/signal (e.g., PDCCH, DCI, CSI-RS, PDSCH) on/via/for a downlink BWP. The wireless device may not monitor a downlink channel/signal on/via/for a downlink BWP of the one or more downlink BWPs, for example, in the inactive state of the downlink BWP. The wireless device may stop monitoring (and/or receiving) a downlink channel/signal (e.g., PDCCH, DCI, CSI-RS, PDSCH) on/via/for a downlink BWP. The wireless device may stop monitoring (and/or receiving) a downlink channel/signal on/via/for a downlink BWP of the one or more downlink BWPs, for example, in the inactive state of the downlink BWP. The wireless device may not receive a PDSCH on/via/for a downlink BWP. The wireless device may not receive a PDSCH on/via/for a downlink BWP of the one or more downlink BWPs, for example, in the inactive state of the downlink BWP. The wireless device may stop receiving a PDSCH on/via/for a downlink BWP. The wireless device may stop receiving a PDSCH on/via/for a downlink BWP of the one or more downlink BWPs, for example, in the inactive state of the downlink BWP.

The wireless device may send and/or transmit an uplink signal/channel (e.g., PUCCH, preamble, PUSCH, PRACH, SRS, etc) on/via an uplink BWP. The wireless device may send and/or transmit an uplink signal/channel (e.g., PUCCH, preamble, PUSCH, PRACH, SRS, etc) on/via an uplink BWP of the one or more uplink BWPs, for example, in the active state of the uplink BWP. The wireless device may not transmit an uplink signal/channel (e.g., PUCCH, preamble, PUSCH, PRACH, SRS, etc) on/via an uplink BWP. The wireless device may not transmit an uplink signal/channel (e.g., PUCCH, preamble, PUSCH, PRACH, SRS, etc) on/via an uplink BWP of the one or more uplink BWPs, for example, in the inactive state of the uplink BWP.

The wireless device may activate the downlink BWP, of the one or more downlink BWPs, of the cell. The activating the downlink BWP may comprise the wireless device setting (and/or switching to) the downlink BWP as an active downlink BWP of the cell. The activating the downlink BWP may comprise the wireless device setting the downlink BWP in the active state. The activating the downlink BWP may comprise switching the downlink BWP from the inactive state to the active state.

The wireless device may activate the uplink BWP, of the one or more uplink BWPs, of the cell. The activating the uplink BWP may comprise the wireless device setting (and/or switching to) the uplink BWP as an active uplink BWP of the cell. The activating the uplink BWP may comprise the wireless device setting the uplink BWP in the active state. The activating the uplink BWP may comprise switching the uplink BWP from the inactive state to the active state.

The one or more configuration parameters may be for the (active) downlink BWP of the cell. At least one configuration parameter, of the one or more configuration parameters, may be for the downlink BWP of the cell. The one or more configuration parameters may be for the (active) uplink BWP of the cell. At least one configuration parameter, of the one or more configuration parameters, may be for the uplink BWP of the cell.

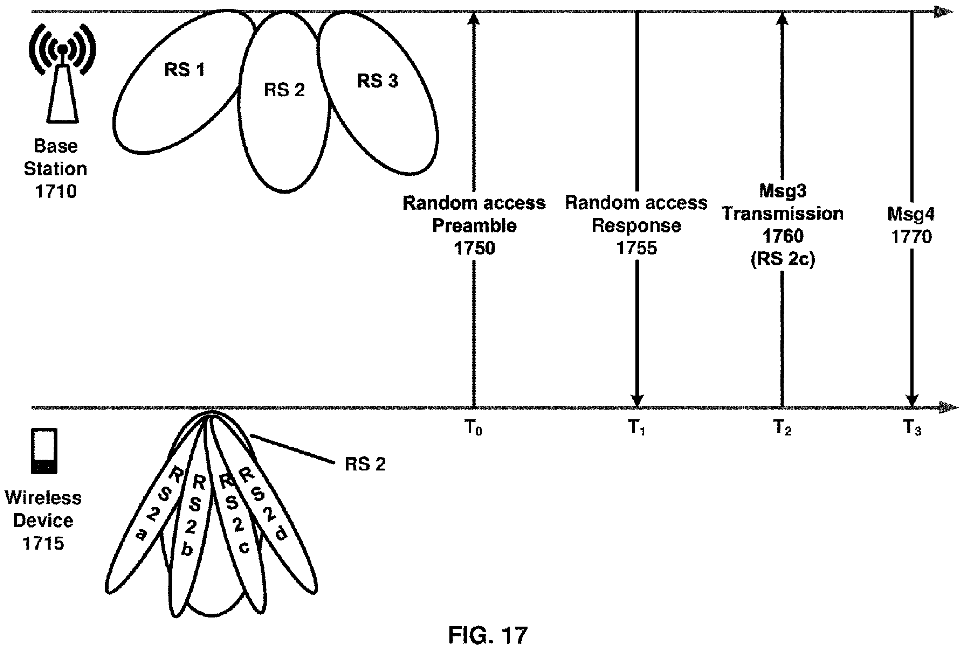

FIG. 17 shows an example of beam refinement. A wireless device (e.g., wireless device 1715) may perform a random access procedure with abase station (e.g., base station 1710). The wireless device may initiate the random-access procedure. The wireless device may initiate the random-access procedure, for example, for a cell (e.g., PCell, SCell). The random-access procedure may comprise, for example, a four-step random-access procedure. The random-access procedure may comprise, for example, a two-step random-access procedure. The wireless device may perform, for example, a four-step contention-based random access procedure with a base station (e.g., as shown in FIG. 13A) and/or a two-step random access procedure with a base station (e.g., as shown in FIG. 13C). The random access procedure may comprise transmission of various messages. The random access procedure may comprise, for example, transmission of four messages. The random access procedure may comprise, for example, transmission of a first message (e.g., Msg 1), a second message (e.g., Msg 2), a third message (e.g., Msg 3), and a fourth message (e.g., Msg 4). The first message (e.g., Msg 1) may comprise a preamble or a random access preamble (e.g., random access preamble 1750). The first message (e.g., Msg 1) may be referred to as a preamble. The second message (e.g., Msg 2) may comprise a random access response (RAR) (e.g., random access response 1755). The second message (e.g., Msg 2) may be referred to as an RAR. The wireless device may send (e.g., transmit) the first message (e.g., Msg 1) to the base station (e.g., as shown at T0 in FIG. 17). The wireless device may also send (e.g., transmit) the third message (e.g., Msg 3) to the base station (e.g., as shown at time T2 in FIG. 17). The wireless device may receive the second message (e.g., Msg 2) from the base station (e.g., as shown at time T1 in FIG. 17). The wireless device may also receive the fourth message (e.g., Msg 4 1770) from the base station (e.g., as shown at time T3 in FIG. 17). The wireless device may send (e.g., transmit), to the base station, a first message (e.g., Msg 1) comprising a preamble (e.g., at time T0 as shown in FIG. 17).

The wireless device may initiate a random-access procedure. The wireless device may initiate the random-access procedure, for example, for an initial access. The wireless device may initiate the random-access procedure, for example, to be in a radio resource control (RRC) connected mode and/or state. The wireless device may be in an RRC inactive mode and/or state. The wireless device may initiate the random-access procedure, for example, to be in an RRC connected mode/state. The wireless device may initiate the random-access procedure, for example, to switch from the RRC inactive mode to an RRC connected mode/state. The wireless device may be in an RRC idle mode/state. The wireless device may initiate the random-access procedure, for example, to switch from the RRC idle mode to an RRC connected mode/state.

The wireless device may measure and/or assess one or more reference signals (e.g., RS 1, RS 2, RS 3 as shown in FIG. 17). The wireless device may measure and/or assess one or more reference signals, for example, for the random-access procedure. The wireless device may measure and/or assess a reference signal by determining a radio link quality of the reference signal. The wireless device may measure and/or assess the one or more reference signals by determining one or more radio link qualities (e.g., L1-RSRP, L3-RSRP, SINR, BLER, SNR, and the like) of the one or more reference signals. The wireless device may determine a radio link quality for at least one reference signal of the one or more reference signals. The wireless device may determine a respective radio link quality for at least one reference signal (e.g., each reference signal) of the one or more reference signals. The one or more reference signals may comprise a plurality of reference signals. As shown in FIG 17, the one or more reference signals may comprise, for example, a first reference signal (e.g., RS 1), a second reference signal (e.g., RS 2), and a third reference signal (e.g., RS 3). The wireless device may determine a first radio link quality for the first reference signal. The wireless device may determine a second radio link quality for the second reference signal. The wireless device may determine a third radio link quality for the third reference signal. The one or more reference signals may comprise, for example, one or more SS/PBCH blocks. The one or more reference signals may comprise, for example, one or more CSI-RSs.

The wireless device may determine/select a selected reference signal of the one or more reference signals. The wireless device may determine/select a reference signal (e.g., as a selected reference signal) of the one or more reference signals. The wireless device may select the selected reference signal, of the one or more reference signals, for example, based on the one or more radio link qualities. The wireless device may determine and/or select the selected reference signal, of the one or more reference signals, for example, based on the one or more radio link qualities associated with the one or more reference signals. As shown in FIG. 17, the wireless device may, for example, determine and/or select the second reference signal (e.g., RS 2). The wireless device may determine and/or select the second reference signal (e.g., RS 2), for example, based on the second radio link quality of the second reference signal. The wireless device may determine and/or select the second reference signal (e.g., RS 2), for example, based on the second radio link quality of the second reference signal being better than the first radio link quality of the first reference signal (e.g., RS 1) and the third radio link quality of the third reference signal (e.g., RS 3). The second radio link quality of the second reference signal may be better than the first radio link quality of the first reference signal and the third radio link quality of the third reference signal, for example, in view of a higher L1-RSRP, a higher L3-RSRP, a higher SINR, a lower BLER, and the like.

The wireless device may send (e.g., transmit), for the random-access procedure, a random-access preamble (e.g., Random-access preamble 1750 at time T0, as shown in FIG. 17). The base station may receive, from the wireless device, the random-access preamble. The wireless device may send (e.g., transmit), via a random-access resource, the random-access preamble. The wireless device may send (e.g., transmit), via a random-access resource (e.g., PRACH resource), the random-access preamble. The random-access resource may comprise, for example, a time resource. The random-access resource may comprise, for example, a frequency resource. The random-access preamble may be, for example, associated with the selected reference signal. The random-access preamble may be, for example, mapped to the selected reference signal. The selected reference signal may indicate the random-access preamble. The one or more configuration parameters may indicate an association between the random-access preamble and the selected reference signal. The one or more configuration parameters may indicate a mapping between the random-access preamble and the selected reference signal. The random-access resource may be, for example, associated with the selected reference signal. The random-access resource may be, for example, mapped to the selected reference signal. The selected reference signal may indicate the random-access resource. The one or more configuration parameters may indicate an association between the random-access resource and the selected reference signal. The one or more configuration parameters may indicate a mapping between the random-access resource and the selected reference signal.

The wireless device may monitor, for downlink control information (DCI), downlink control channels. The wireless device may monitor, for DCI, downlink control channels, for example, PDCCH or in a coreset. The wireless device may monitor the downlink control channels, for example, based on sending (e.g., transmitting) the random-access preamble. A CRC of the DCI may be scrambled with an RA-RNTI. The wireless device may determine, calculate, and/or compute the RA-RNTI. The wireless device may determine, calculate, and/or compute the RA-RNTI, for example, based on the random-access resource. The DCI may schedule and/or indicate a random-access response corresponding to the random-access preamble. The DCI may schedule and/or indicate a random-access response associated with the random-access preamble. The wireless device may receive the DCI. The base station may send, to the wireless device, the DCI. The wireless device may receive the random-access response (e.g., random-access response 1755 at time T1, as shown in in FIG. 17). The base station may send (e.g., transmit) the random-access response to the wireless device.

The wireless device may send (e.g., transmit), for the random-access procedure, a transport block. The wireless device may send (e.g., transmit), for the random-access procedure, a PUSCH transmission. The base station may receieve, from the wireless device, a transport block or a PUSCH transmission. The wireless device may send (e.g., transmit) the transport block, for example, based on receiving the random-access response. The wireless device may send (e.g., transmit), via an uplink resource (e.g., PUSCH resource), the transport block. The base station may receive, via the uplink resource (e.g., PUSCH resource), the transport block. The random-access response may indicate, for transmission of the transport block, the uplink resource. Transmission of the transport block may be, for example, a Msg3 transmission of the random-access procedure. Transmission of the transport block may be, for example, a Msg3 transmission (e.g., Msg3 transmission 1760) of the random-access procedure, as shown at time T2 in FIG. 17). Transmission of the transport block may be, for example, a MsgA transmission of the random-access procedure (e.g., two-step random-access procedure).

The transport block may indicate a new/candidate reference signal. The PUSCH transmission may indicate a new/candidate reference signal. The Msg3 transmission may indicate a new/candidate reference signal. The MsgA transmission may indicate a new/candidate reference signal. The transport block (or the PUSCH transmission or the Msg3 transmission or the MsgA transmission) may comprise and/or be an activation command (e.g., MAC-CE) indicating the new/candidate reference signal. The PUSCH transmission may comprise and/or be an activation command (e.g., MAC-CE) indicating the new/candidate reference signal. The Msg3 transmission may comprise and/or be an activation command (e.g., MAC-CE) indicating the new/candidate reference signal. The MsgA transmission may comprise and/or be an activation command (e.g., MAC-CE) indicating the new/candidate reference signal. The transport block may carry the activation command. The PUSCH transmission may carry the activation command. The Msg3 transmission may carry the activation command. The MsgA transmission may carry the activation command. The activation command may comprise a field indicating the new/candidate reference signal. The field may, for example, comprise a reference signal index indicating and/or identifying the new/candidate reference signal. The one or more configuration parameters may indicate, for the new/candidate reference signal, the reference signal index. The field may, for example, comprise an index indicating location and/or position of the new/candidate reference signal in a list of reference signals.

The selected reference signal and the new/candidate reference signal may be, for example, quasi co-located. The selected reference signal may be quasi co-located, for example, with one or more new/candidate reference signals comprising the new/candidate reference signal. A transmitting beam to send (e.g., transmit) the selected reference signal may be broader than a transmitting beam to send (e.g., transmit) the new/candidate reference signal. A receiving beam to receive the selected reference signal may be broader than a receiving beam to receive the new/candidate reference signal. The transmitting beam to send (e.g., transmit) the selected reference signal may comprise the transmitting beam to send (e.g., transmit) the new/candidate reference signal. The receiving beam to receive the selected reference signal may comprise the receiving beam to receive the new/candidate reference signal.

Referring to the example shown in FIG. 17, the selected reference signal may be the second reference signal (e.g., RS 2). The selected reference signal may be quasi co-located with at least one reference signal. The selected reference signal may be quasi co-located with one or more reference signals, for example, first new/candidate reference signal (e.g., RS 2a), a second new/candidate reference signal (e.g., RS 2b), a third new/candidate reference signal (e.g., RS 2c), and a fourth new/candidate reference signal (e.g., RS 2d). The one or more new/candidate reference signals may comprise one or more reference signals, for example, the first new/candidate reference signal (e.g., RS 2a), the second new/candidate reference signal (e.g., RS 2b), the third new/candidate reference signal (e.g., RS 2c), and the fourth new/candidate reference signal. The transport block may indicate and/or include a new candidate reference signal. The transport block may indicate and/or include a new candidate reference signal, for example, the third new/candidate reference signal (e.g., RS 2c). The PUSCH transmission may indicate and/or include a new candidate reference signal. The PUSCH transmission may indicate and/or include a new candidate reference signal, for example, the third new/candidate reference signal (e.g., RS 2c). The Msg3 transmission may indicate and/or include a new candidate reference signal. The Msg3 transmission may indicate and/or include a new candidate reference signal, for example, the third new/candidate reference signal (e.g., RS 2c, as shown in FIG. 17). The MsgA transmission may indicate and/or include a new candidate reference signal. The MsgA transmission may indicate and/or include a new candidate reference signal, for example, the third new/candidate reference signal (e.g., RS 2c).

The wireless device may determine and/or select the new/candidate reference signal. The wireless device may determine and/or select the new/candidate reference signal among/of the one or more new/candidate reference signals. The wireless device may determine and/or select, to indicate by/in the transport block, the new/candidate reference signal among/of the one or more new/candidate reference signals. The wireless device may determine and/or select, to indicate by/in the PUSCH transmission, the new/candidate reference signal among/of the one or more new/candidate reference signals. The wireless device may determine and/or select, to indicate by/in the Msg3 transmission, the new/candidate reference signal among/of the one or more new/candidate reference signals. The wireless device may determine and/or select, to indicate by/in the MsgA transmission, the new/candidate reference signal among/of the one or more new/candidate reference signals. The wireless device may determine and/or select the new/candidate reference signal among/of the one or more new/candidate reference signals, for example, based on one or more radio link qualities. The wireless device may determine and/or select the new/candidate reference signal among/of the one or more new/candidate reference signals, for example, based on one or more radio link qualities (e.g., L1-RSRP, L3-RSRP, SINR, BLER, SNR, and the like) of the one or more new/candidate reference signals. Referring to FIG. 17, the wireless device (e.g., wireless device 1715) may select and/or determine the third new/candidate reference signal (e.g., RS 2c) based on a radio link quality of the third new/candidate reference signal. The wireless device (e.g., wireless device 1715) may select and/or determine the third new/candidate reference signal (e.g., RS 2c), for example, based on a radio link quality of the third new/candidate reference signal being better than one or more new/candidate reference signals (e.g., a radio link quality of the first new/candidate reference signal, a radio link quality of the second new/candidate reference signal, and/or a radio link quality of the fourth new/candidate reference signal). The wireless device (e.g., wireless device 1715) may select and/or determine the third new/candidate reference signal (e.g., RS 2c), for example, based on a radio link quality of the third new/candidate reference signal having a higher L1-RSRP than a radio link quality of the first new/candidate reference signal, a radio link quality of the second new/candidate reference signal, and/or radio link quality of the fourth new/candidate reference signal. The wireless device (e.g., wireless device 1715) may select and/or determine the third new/candidate reference signal (e.g., RS 2c), for example, based on a radio link quality of the third new/candidate reference signal having a higher L3-RSRP than a radio link quality of the first new/candidate reference signal, a radio link quality of the second new/candidate reference signal, and/or radio link quality of the fourth new/candidate reference signal. The wireless device (e.g., wireless device 1715) may select and/or determine the third new/candidate reference signal (e.g., RS 2c), for example, based on a radio link quality of the third new/candidate reference signal having a higher SINR than a radio link quality of the first new/candidate reference signal, a radio link quality of the second new/candidate reference signal, and/or radio link quality of the fourth new/candidate reference signal. The wireless device (e.g., wireless device 1715) may select and/or determine the third new/candidate reference signal (e.g., RS 2c), for example, based on a radio link quality of the third new/candidate reference signal having a lower BLER than a radio link quality of the first new/candidate reference signal, a radio link quality of the second new/candidate reference signal, and/or radio link quality of the fourth new/candidate reference signal.

A radio link quality (e.g. L1-RSRP, L3-RSRP, BLER, SINR, SNR, and the like) of the new/candidate reference signal may be better than a radio link quality of the selected reference signal. A radio link quality (e.g. L1-RSRP, L3-RSRP, BLER, SINR, SNR, and the like) of the new/candidate reference signal may be better, for example, having a higher L1-RSRP, a higher L3 -RSRP, a higher SINR, a lower BLER, and the like, than a radio link quality of the selected reference signal. The wireless device may send (e.g., transmit) the transport block indicating the new/candidate reference signal, for example, based on the radio link quality of the new/candidate reference signal being better than the radio link quality of the selected reference signal. The wireless device may send (e.g., transmit) the PUSCH transmission indicating the new/candidate reference signal, for example, based on the radio link quality of the new/candidate reference signal being better than the radio link quality of the selected reference signal. The wireless device may send (e.g., transmit) the Msg3 transmission indicating the new/candidate reference signal, for example, based on the radio link quality of the new/candidate reference signal being better than the radio link quality of the selected reference signal. The wireless device may send (e.g., transmit) the MsgA transmission indicating the new/candidate reference signal, for example, based on the radio link quality of the new/candidate reference signal being better than the radio link quality of the selected reference signal. The base station may receive the transport block (or PUSCH transmission or Msg 3 transmission, or MsgA transmission) indicating the new/candidate reference signal.

The wireless device may determine the radio link quality of the new/candidate reference signal. The wireless device may determine the radio link quality of the new/candidate reference signal, for example, based on the radio link quality of the selected reference signal. The wireless device may determine the radio link quality of the new/candidate reference signal, for example, based on an offset. The wireless device may determine the radio link quality of the new/candidate reference signal, for example, based on a radio link quality offset. The radio link quality of the new/candidate reference signal may be equal to, for example, the radio link quality of the selected reference signal plus the offset. The radio link quality of the new/candidate reference signal may be equal to, for example, the radio link quality of the selected reference signal minus the offset. The radio link quality of the new/candidate reference signal may be equal to, for example, the radio link quality of the selected reference signal multiplied by the offset. The radio link quality of the new/candidate reference signal may be equal to, for example, the radio link quality of the selected reference signal divided by the offset (e.g., the radio link quality offset). The one or more configuration parameters may indicate the offset, for example, the radio link quality offset.

The one or more reference signals may comprise the new/candidate reference signal. The wireless device may select and/or determine, for the random-access procedure, the new/candidate reference signal. The wireless device may select and/or determine, for the random-access procedure, the new/candidate reference signal, for example, based on the one or more radio link qualities of the one or more reference signals. The wireless device may not send (e.g., transmit), for the random-access procedure and via a second random-access resource, a second random-access preamble. The wireless device may not send (e.g., transmit), for the random-access procedure and via a second random-access resource, a second random-access preamble associated with the new/candidate reference signal. The wireless device may not send (e.g., transmit), for the random-access procedure and via a second random-access resource, a second random-access preamble mapped to the new/candidate reference signal. The wireless device may not send (e.g., transmit), for the random-access procedure and via a second random-access resource, a second random-access preamble mapped to the new/candidate reference signal, for example, based on determining an LBT failure on/for/via the second random-access resource mapped to the new/candidate reference signal. The wireless device may not send (e.g., transmit), for the random-access procedure and via a second random-access resource, a second random-access preamble associated with the new/candidate reference signal, for example, based on determining an LBT failure on/for/via the second random-access resource associated with the new/candidate reference signal. The wireless device may send (e.g., transmit), for the random-access procedure and via the second random-access resource, the random-access preamble associated with the selected reference signal. The base station may receive, for the random-access procedure, via the second random-access resource and from the wireless device, the random-access preamble associated with the selected reference signal. The wireless device may send (e.g., transmit), for the random-access procedure and via the second random-access resource, the random-access preamble mapped to the selected reference signal The wireless device may send (e.g., transmit), for the random-access procedure and via the second random-access resource, the random-access preamble associated with the selected reference signal, for example, based on determining the LBT failure on/for/via the second random-access resource associated with the new/candidate reference signal. The wireless device may send (e.g., transmit), for the random-access procedure and via the second random-access resource, the random-access preamble associated with the selected reference signal, for example, based on determining the LBT failure on/for/via the second random-access resource associated with the new/candidate reference signal. The wireless device may select and/or determine, for the random-access procedure, the selected reference signal, for example, based on determining the LBT failure on/for/via the second random-access resource associated with the new/candidate reference signal. The wireless device may select/determine, for the random-access procedure, the selected reference signal, for example, based on determining the LBT failure on/for/via the second random-access resource mapped to the new/candidate reference signal. The wireless device may not determine an LBT failure on/for/via the random-access resource associated with the selected reference signal. The wireless device may not determine an LBT failure on/for/via the random-access resource mapped to the selected reference signal. The wireless device may send (e.g., transmit) the transport block (or the PUSCH transmission or the Msg3 transmission or the MsgA transmission) indicating the new/candidate reference signal, for example, based on determining the LBT failure on/for/via the second random-access resource associated with (or mapped to) the new/candidate reference signal. The wireless device may send (e.g., transmit) the PUSCH transmission indicating the new/candidate reference signal, for example, based on determining the LBT failure on/for/via the second random-access resource associated with (or mapped to) the new/candidate reference signal. The wireless device may send (e.g., transmit) the Msg3 transmission indicating the new/candidate reference signal, for example, based on determining the LBT failure on/for/via the second random-access resource associated with (or mapped to) the new/candidate reference signal. The wireless device may send (e.g., transmit) the MsgA transmission indicating the new/candidate reference signal, for example, based on determining the LBT failure on/for/via the second random-access resource associated with (or mapped to) the new/candidate reference signal.

The wireless device may receive and/or detect downlink control information (DCI). The DCI may schedule a PDSCH transmission. The DCI may schedule a PDSCH transmission, for example, a Msg4 transmission (e.g., Msg4 1770, as shown at time T3 in FIG. 17). The wireless device may complete the random-access procedure, for example, based on receiving and/or detecting the DCI. The wireless device may complete the random-access procedure, for example, based on receiving and/or decoding the PDSCH transmission, for example, the Msg4 transmission.

In at least some technologies, the wireless device may select an SS/PBCH blocks (SSB) for a random access procedure. The wireless device may use the selected SSB (e.g., RS2 as shown in FIG. 17) as a default pathloss reference signal. The wireless device may use the selected SSB as the default pathloss reference signal during a random access procedure and prior to the wireless device being configured with RRC parameters indicating and/or activating a pathloss reference signal. After completing the random access procedure, the wireless device may perform beam management to determine a candidate beam. However, using the selected SSB as a default pathloss reference signal may not be efficient, for example, if the wireless device has already indicated and/or determined a candidate beam. The inability of the wireless device to use a candidate beam as the default pathloss reference signal may increase the complexity and power consumption of beam refinement and decrease the performance of the whole communication system at least because the narrower, candidate beam may be directed toward a base station, unlike the omnidirectional SSB. By implementing at least some technologies, beam management and refinement may be enhanced by reducing power consumption and latency. A wireless device may determine a candidate beam, and indicate the candidate beam via an uplink transmission. The wireless device may use the candidate beam as the default pathloss RS for uplink transmissions. Using the candidate beam for uplink transmissions, rather than the selected SSB, may require less transmission power and/or provide increased transmission precision, higher data rate, lower error rate and less interference to other cells or wireless devices, which may increase the efficiency of the communication system.

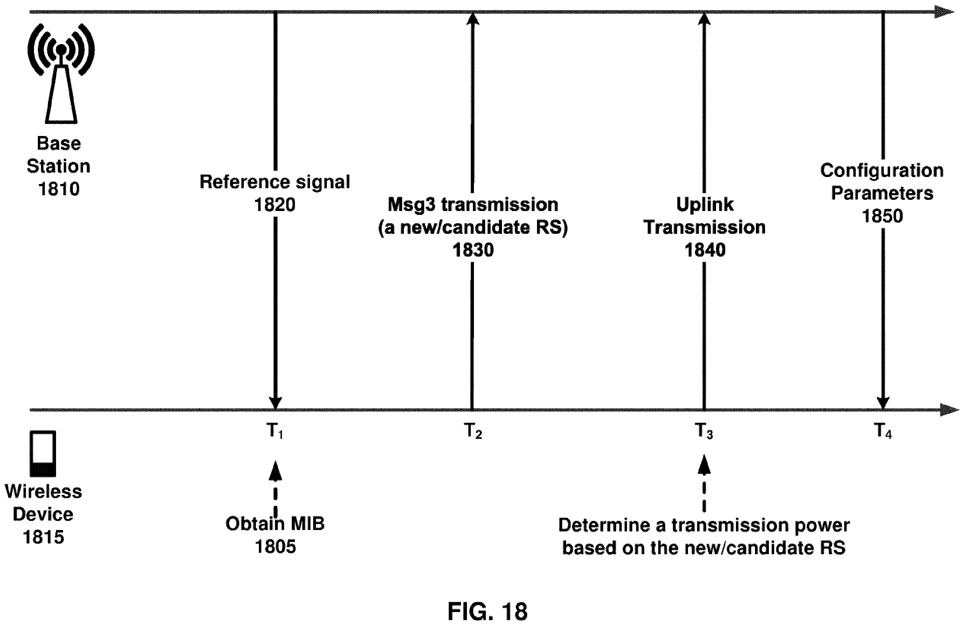

FIG. 18 shows an example of beam refinement. A wireless device (e.g., wireless device 1815) may obtain a master information block (MIB). The wireless device may obtain a MIB (e.g., MIB 1805), for example, based on a reference signal (e.g., reference signal 1820). The wireless device may receive, from a base station (e.g., base station 1810), the reference signal. The base station may send (e.g., transmit), to the wireless device, the reference signal. The wireless device may determine the MIB based on the reference signal. The reference signal may, for example, indicate the MIB. The wireless device may use the reference signal to determine and/or obtain the MIB. The reference signal used to determine and/or obtain the MIB and the selected reference signal used in the random-access procedure may be, for example, the same reference signal. The reference signal used to determine and/or obtain the MIB and the selected reference signal associated with the random-access procedure may be, for example, the same reference signal. The reference signal used to determine and/or obtain the MIB and the selected reference signal used in the random-access procedure may be, for example, different reference signals. The reference signal used to determine and/or obtain the MIB and the selected reference signal associated with the random-access procedure may be, for example, different reference signals. The reference signal may, for example, be a SS/PBCH block. The one or more configuration parameters may indicate, for the reference signal, a reference signal index (e.g., a SS/PBCH block index).

The wireless device may receive one or more messages. The wireless device (e.g., wireless device 1815) may receive the one or more messages from a base station (e.g., base station 1810). The base station may send (e.g., transmit), to the wireless device, the one or more messages. The one or more messages may comprise one or more configuration parameters. The one or more messages may comprise one or more configuration parameters, for example, the configuration parameters 1850 at time T4, as shown in FIG. 18. The wireless device may receive the one or more messages at/in/during a reception time (e.g., time T4 as shown in FIG. 18). The wireless device may receive the one or more configuration parameters at/in/during a reception time (e.g., time T4 as shown in FIG. 18). The one or more configuration parameters may be RRC configuration parameter(s). The one or more configuration parameters may be dedicated configuration parameters. The one or more configuration parameters may not be shared and/or used among/by a plurality of wireless devices. The one or more configuration parameters may not be broadcast configuration parameters. A second wireless device, different from the wireless device (e.g., wireless device 1815), may not use the one or more configuration parameters, for example, based on the one or more configuration parameters being dedicated.

The wireless device may send (e.g., transmit), via an uplink resource, an uplink signal. The wireless device may send (e.g., transmit), via an uplink resource, an uplink signal (e.g., uplink transmission 1840 as shown at time T3 in FIG. 18). The base station may receive, via the uplink resource, the uplink signal. The wireless device may send (e.g., transmit), in/at/during a transmission time (e.g., time slot, mini-slot, symbol, subframe, and the like), the uplink signal. The wireless device may, for example, send (e.g., transmit), via the uplink resource, the uplink signal, for example, before (or prior to) receiving the one or more configuration parameters (e.g., before time T4, as shown in FIG. 18). The wireless device may send (e.g., transmit), via the uplink resource, the uplink signal, for example, before (or prior to) the reception time (e.g., before time T4, as shown in FIG. 18). The wireless device may send (e.g., transmit), via the uplink resource, the uplink signal at/during/in the transmission time (e.g., time slot, symbol, and the like) that occurs, for example, before (or prior to) receiving the one or more configuration parameters. The wireless device may send (e.g., transmit), via the uplink resource, the uplink signal if the transmission time (e.g., time slot, symbol, and the like) occurs, for example, before (or prior to) receiving the one or more configuration parameters. The wireless device may send (e.g., transmit), via the uplink resource, the uplink signal at/during/in the transmission time that occurs, for example, before (or prior to) the reception time (e.g., time slot, mini-slot, symbol, subframe, and the like). The wireless device may send (e.g., transmit), via the uplink resource, the uplink signal, for example, if the transmission time occurs, for example, before (or prior to) the reception time (e.g., time slot, mini-slot, symbol, subframe, and the like). The uplink resource may, for example, occur before (or prior to) the reception time.

The wireless device may send (e.g., transmit), via the uplink resource, the uplink signal. The wireless device may receive, via the uplink resource, the uplink signal. The base station may send (e.g., transmit), via the uplink resource, the uplink signal, for example, based on (e.g., after) sending (e.g., transmitting) the transport block. The wireless device may send (e.g., transmit), via the uplink resource, the uplink signal, for example, based on (e.g., after) sending (e.g., transmitting) the PUSCH transmission. The wireless device may send (e.g., transmit), via the uplink resource, the uplink signal, for example, based on (e.g., after) sending (e.g., transmitting) the MsgA transmission. The wireless device may send (e.g., transmit), via the uplink resource, the uplink signal, for example, based on (e.g., after) sending (e.g., transmitting) the Msg3 transmission (e.g., Msg3 1830). The wireless device may send (e.g., transmit), via the uplink resource, the uplink signal, for example, based on (e.g., after) sending (e.g., transmitting) the Msg3 transmission (e.g., as shown at time T2 in FIG. 17 and FIG. 18). The wireless device may send (e.g., transmit), via the uplink resource, the uplink signal at/during/in a transmission time. The transmission time may occur, for example, based on (e.g., after) sending (e.g., transmitting) the transport block. The transmission time may occur, for example, based on (e.g., after) the PUSCH transmission. The transmission time may occur, for example, based on (e.g., after) the MsgA transmission. The transmission time may occur, for example, based on (e.g., after) the Msg3 transmission (e.g., as shown at time T2 in FIG. 17 and FIG. 18). The wireless device may send (e.g., transmit), via the uplink resource, the uplink signal, for example, if the transmission time occurs based on (e.g., after) sending (e.g., transmitting) the transport block, based on (e.g., after) the PUSCH transmission, based on (e.g., after) the MsgA transmission, or based on (e.g., after) the Msg3 transmission.

The uplink resource may occur, for example, based on (e.g., after) sending (e.g., transmitting) the transport block. The wireless device may, for example, send (e.g., transmit), via the uplink resource, the uplink signal based on (e.g., after) receiving DCI. The wireless device may, for example, send (e.g., transmit), via the uplink resource, the uplink signal based on (e.g., after) receiving DCI scheduling a PDSCH transmission, for example Msg4 (e.g., Msg4 1770), at time T3 as shown in in FIG. 17). The wireless device may send (e.g., transmit), via the uplink resource, the uplink signal at/during/in a transmission time. The transmission time may occur based on (e.g., after) receiving the DCI scheduling the PDSCH transmission (e.g., Msg4 as shown at time T3 in FIG. 17). The wireless device may send (e.g., transmit), via the uplink resource, the uplink signal, for example, if the transmission time occurs based on (e.g., after) receiving the DCI scheduling the PDSCH transmission. The uplink resource may occur, for example, based on (e.g., after) receiving the DCI. The wireless device may send (e.g., transmit), via the uplink resource, the uplink signal. The wireless device may send (e.g., transmit), via the uplink resource, the uplink signal, for example, based on (e.g., after) receiving the PDSCH transmission (e.g., Msg4 as shown at time T3 in FIG. 17). The wireless device may send (e.g., transmit), via the uplink resource, the uplink signal at/during/in a transmission time. The transmission time may occur, for example, based on (e.g., after) receiving the PDSCH transmission (e.g., Msg4 as shown at time T3 in FIG. 17). The wireless device may send (e.g., transmit), via the uplink resource, the uplink signal, for example, if the transmission time occurs, for example, based on (e.g., after) receiving the PDSCH transmission. The uplink resource may, for example, occur based on (e.g., after) receiving the PDSCH transmission.

The uplink signal may be a PUSCH transmission. The uplink signal may be a transport block. The uplink signal may be an SRS. The uplink signal may be a PUCCH transmission. The uplink signal may be an uplink control information (UCI). The UCI may comprise a scheduling request. The UCI may comprise a CSI report. The UCI may comprise a HARQ-ACK codebook. The uplink resource may be a PUSCH resource. The uplink resource may be an SRS resource. The uplink resource may be a PUCCH resource. The wireless device may send (e.g., transmit), via the uplink resource, the uplink signal with and/or using a transmission power. The wireless device may send (e.g., transmit), with and/or using the transmission power, the uplink signal.

The wireless device may determine, compute, and/or calculate, for transmission of the uplink signal, the transmission power. The wireless device may determine, compute, and/or calculate, for transmission of the uplink signal, the transmission power, for example, based on the new/candidate reference signal (e.g., at time T3 as shown in FIG. 18). The wireless device may determine, compute, and/or calculate, for transmission of an uplink signal, a transmission power based on a reference signal by determining, computing, and/or calculating, for the transmission power, a downlink pathloss estimate. The wireless device may determine, compute, and/or calculate the downlink pathloss estimate based on one or more measurement (or one or more radio link) qualities (e.g., L1-RSRP, L3-RSRP, or a higher filtered RSRP measurement(s)) of the reference signal. The wireless device may determine, compute, and/or calculate, for transmission of an uplink signal, a transmission power based on a reference signal by determining, computing, and/or calculating, for the transmission power, a pathloss measurement. The wireless device may determine, compute, and/or calculate the pathloss measurement based on one or more measurement (or one or more radio link) qualities (e.g., L1-RSRP, L3-RSRP, or a higher filtered RSRP measurement(s)) of the reference signal. The wireless device may use the downlink pathloss estimate in determining, computing and/or calculating the transmission power for transmission of the uplink signal. The transmission power may comprise the downlink pathloss estimate. The wireless device may determine, calculate, compute, and/or measure, for the downlink pathloss estimate, a filtered RSRP value (e.g., L1-RSRP, L3-RSRP) of the reference signal. The wireless device may measure the reference signal. The wireless device may measure the reference signal as a pathloss reference signal. The wireless device may determine, calculate, compute, and/or measure the filtered RSRP value for transmission of the uplink signal.

The wireless device may determine, compute, and/or calculate the transmission power based on one or more power terms. The wireless device may determine, compute, and/or calculate the transmission power based on one or more power terms, for example, by adding, subtracting, multiplying, dividing, taking a logarithm, power, and/or any mathematical expression of the one or more power terms.. The one or more power terms may comprise, for example, the reference signal. The one or more power terms may comprise, for example, the reference signal as a pathloss reference signal. The one or more power terms may comprise, for example, the reference signal as the downlink pathloss estimate. The one or more power terms may comprise, for example, a target received power. The one or more power terms may comprise, for example, a pathloss compensation factor. The one or more power terms may comprise, for example, a closed-loop process number/index, and so on.

A wireless device may determine, calculate, and/or compute a transmission power (e.g., for a PUSCH transmission) in a PUSCH transmission occasion """ on an active uplink BWP "b" of carrier "f" of a serving cell "c" and with a PUSCH power control adjustment state with index "*l*", for example, based on the equation below:

$$P_{\text{PUSCH},b,f,c}(i,j,q_d,l) = \min\begin{cases} P_{\text{CMAX},f,c}(i), \\ P_{\text{O\_PUSCH},b,f,c}(j) + 10\log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{cases}$$

[dBm], where

$P_{\text{CMAX},f,c}(i)$ is the wireless device configured maximum output power for carrier "*f*" of serving cell "c" in PUSCH transmission occasion "*i*".

$P_{\text{O\_PUSCH},f,c}(j)$ is a parameter composed of the sum of a component $P_{\text{O\_NOMINAL\_PUSCH},f,c}(j)$ and a component $P_{\text{O\_UE\_PUSCH}b,f,c}(j)$

$M_{\text{RB},b,f,c}^{\text{PUSCH}}(i)$ is the bandwidth of the PUSCH resource assignment expressed in number of resource blocks for PUSCH transmission occasion "*i*" on active UL BWP "*b*" of carrier "*f*" of serving cell "c" and $\mu$ is a SCS configuration

$PL_{b,f,c}(q_d)$ is a downlink pathloss estimate in dB calculated by the wireless device using reference signal (RS) index $q_d$ for the active DL BWP of carrier "*f*" of serving cell "c"

$\Delta_{\text{TF},b,f,c}(i) = 10\log_{10}\left(\left(2^{\text{BPREK}_s} - 1\right) \cdot \beta_{\text{offset}}^{\text{PUSCH}}\right)$ for $K_S$ = 1.25 and $\Delta_{\text{TF},b,f,c}(i) = 0$ for $K_S$=0 where $K_S$ is provided by *deltaMCS* for each uplink (UL) bandwidth part (BWP) "*b*" of each carrier "*f*" and serving cell "c". If the PUSCH transmission is over at least one layer (e.g., more than one layer), $\Delta_{\text{TF},b,f,c}(i) = 0$.

$f_{b,f,c}(i,l) = f_{b,f,c}(i-i_0,l) + \sum_{m=0}^{\mathcal{C}(D_i)-1} \delta_{\text{PUSCH},b,f,c}(m,l)$ is the PUSCH power control adjustment state "*l*" for active uplink (UL) BWP "*b*" of carrier "*f*" of serving cell "c" and PUSCH transmission occasion "*i*".

The wireless device may determine the transmission power based on the new/candidate reference signal. The wireless device may determine the transmission power based on the new/candidate reference signal, for example, based on (e.g., after or in response to) the transport block indicating the new/candidate reference signal. The wireless device may determine the transmission power based on the new/candidate reference signal, for example, based on (e.g., after or in response to) the PUSCH transmission indicating the new/candidate reference signal. The wireless device may determine the transmission power based on the new/candidate reference signal, for example, based on (e.g., after or in response to) the MsgA transmission indicating the new/candidate reference signal. The wireless device may determine the transmission power based on the new/candidate reference signal, for example, based on (e.g., after or in response to) the Msg3 transmission indicating the new/candidate reference signal. The wireless device may determine the transmission power based on the new/candidate reference signal, for example, based on (e.g., after or in response to) the transport block comprising an activation command (e.g., MAC-CE) that indicates the new/candidate reference signal. The wireless device may determine the transmission power based on the new/candidate reference signal, for example, based on (e.g., after or in response to) the PUSCH transmission comprising an activation command (e.g., MAC-CE) that indicates the new/candidate reference signal. The wireless device may determine the transmission power based on the new/candidate reference signal, for example, based on (e.g., after or in response to) the MsgA transmission comprising an activation command (e.g., MAC-CE) that indicates the new/candidate reference signal. The wireless device may determine the transmission power based on the new/candidate reference signal, for example, based on (e.g., after or in response to) the Msg3 transmission comprising an activation command (e.g., MAC-CE) that indicates the new/candidate reference signal. The wireless device may determine the transmission power based on the new/candidate reference signal, for example, based on (e.g., after or in response to) sending (e.g., transmitting) the transport block. The wireless device may determine the transmission power based on the new/candidate reference signal, for example, based on (e.g., after or in response to) sending (e.g., transmitting) the PUSCH transmission. The wireless device may determine the transmission power based on the new/candidate reference signal, for example, based on (e.g., after or in response to) sending (e.g., transmitting) the MsgA transmission. The wireless device may determine the transmission power based on the new/candidate reference signal, for example, based on (e.g., after or in response to) sending (e.g., transmitting) the Msg3 transmission that indicates the new/candidate reference signal.

The wireless device may determine the transmission power based on the new/candidate reference signal, for example, before (or prior to) receiving the one or more configuration parameters (e.g., before T4 as shown in FIG. 18). The wireless device may determine the transmission power based on the new/candidate reference signal, for example, before (or prior to) the reception time (e.g., time T4 as shown in FIG. 18). The wireless device may determine the transmission power based on the new/candidate reference signal, for example, based on (e.g., after or in response to) the transmission time occurring. The transmission time may occur, for example, before (or prior to) receiving the one or more configuration parameters (e.g., configuration parameters 1850). The wireless device may determine the transmission power based on the new/candidate reference signal, for example, based on (e.g., after or in response to) the transmission time occurring before (or prior to) the reception time.

The wireless device may determine the transmission power based on the new/candidate reference signal. The wireless device may determine the transmission power based on the new/candidate reference signal, for example, based on (e.g., after) sending (e.g., transmitting) the transport block. The wireless device may determine the transmission power based on the new/candidate reference signal, for example, based on (e.g., after) the PUSCH transmission. The wireless device may determine the transmission power based on the new/candidate reference signal, for example, based on (e.g., after) the MsgA transmission. The wireless device may determine the transmission power based on the new/candidate reference signal, for example, based on (e.g., after) the Msg3 transmission (e.g., as shown at time T2 in FIG. 17 and FIG. 18). The wireless device may determine the transmission power based on the new/candidate reference signal. The wireless device may determine the transmission power based on the new/candidate reference signal, for example, based on (e.g., after or in response to) the transmission time. The transmission time may occur, for example, based on (e.g., after) sending (e.g., transmitting) the transport block. The transmission time may occur, for example, based on (e.g., after) the PUSCH transmission. The transmission time may occur, for example, based on (e.g., after) the MsgA transmission. The transmission time may occur, for example, based on (e.g., after) sending (e.g., transmitting) the Msg3 transmission (e.g., as shown at time T2 in FIG. 17 and FIG. 18). The wireless device may determine the transmission power based on the new/candidate reference signal, for example, based on (e.g., after) receiving DCI . The wireless device may determine the transmission power based on the new/candidate reference signal, for example, based on (e.g., after) receiving DCI scheduling the PDSCH transmission (e.g., Msg4 as shown at time T3 in FIG. 17). The wireless device may determine the transmission power based on the new/candidate reference signal, for example, based on (e.g., after or in response to) the transmission time. The transmission time may occur, for example, based on (e.g., after) receiving the DCI that schedules the PDSCH transmission (e.g., Msg4 as shown at time T3 in FIG. 17). The wireless device may determine the transmission power based on the new/candidate reference signal. The wireless device may determine the transmission power based on the new/candidate reference signal, for example, by measuring the new/candidate reference signal and identifying a power value associated with an RSRP of the measured new/candidate reference signal. The wireless device may determine the transmission power, for example, based on (e.g., after) receiving a PDSCH transmission. The wireless device may determine the transmission power, for example, based on (e.g., after) receiving the PDSCH transmission (e.g., Msg4 as shown at time T3 in FIG. 17). The wireless device may determine the transmission power, for example, based on (e.g., after or in response to) the transmission time. The transmission time may occur based on (e.g., after) receiving the PDSCH transmission (e.g., Msg4 as shown at time T3 in FIG. 17).

The transport block may, for example, not indicate a new/candidate reference signal. The transport block may not comprise and/or be an activation command (e.g., MAC-CE) indicating a new/candidate reference signal. The PUSCH transmission may not indicate a new/candidate reference signal. The PUSCH transmission may not comprise and/or be an activation command (e.g., MAC-CE) indicating a new/candidate reference signal. The MsgA transmission may not indicate a new/candidate reference signal. The MsgA transmission may not comprise and/or be an activation command (e.g., MAC-CE) indicating a new/candidate reference signal. The Msg3 transmission may not indicate a new/candidate reference signal. The Msg3 transmission may not comprise/be an activation command (e.g., MAC-CE) indicating a new/candidate reference signal.

The wireless device may determine, compute, and/or calculate, for transmission of the uplink signal, the transmission power. The wireless device may determine, compute, and/or calculate, for transmission of the uplink signal, the transmission power, for example, based on the reference signal used to obtain and/or determine the MIB. The wireless device may determine, compute, and/or calculate the transmission power based on the reference signal. The wireless device may determine, compute, and/or calculate the transmission power, for example, based on a reference signal resource obtained from a source reference signal (e.g., SS/PBCH block) with a reference signal index that is the same as the reference signal index of the reference signal. The wireless device may determine, compute, and/or calculate the transmission power, for example, by using a reference signal resource obtained from a source reference signal (e.g., SS/PBCH block) with a reference signal index that is the same as the reference signal index of the reference signal.

The wireless device may determine the transmission power based on the reference signal used to obtain/determine the MIB. The reference signal (e.g., SS/PBCH block) may comprise the MIB. The wireless device may determine the transmission power using the reference signal for obtaining and/or determining the MIB, for example, based on (e.g., after or in response to) the transport block not indicating the new/candidate reference signal. The wireless device may determine the transmission power using the reference signal for obtaining and/or determining the MIB, for example, based on (e.g., after or in response to) PUSCH transmission not indicating the new/candidate reference signal. The wireless device may determine the transmission power using the reference signal for obtaining and/or determining the MIB, for example, based on (e.g., after or in response to) the MsgA transmission not indicating the new/candidate reference signal. The wireless device may determine the transmission power using the reference signal for obtaining and/or determining the MIB, for example, based on (e.g., after or in response to) the Msg3 transmission not indicating the new/candidate reference signal. The wireless device may determine the transmission power using the reference signal for obtaining and/or determining the MIB , for example, in response to the transport block (or the PUSCH transmission or the MsgA transmission or the Msg3 transmission) not comprising the activation command (e.g., MAC-CE) that indicates the new/candidate reference signal. The wireless device may determine the transmission power using the reference signal for obtaining and/or determining the MIB, for example, in response to the PUSCH transmission not comprising the activation command (e.g., MAC-CE) that indicates the new/candidate reference signal. The wireless device may determine the transmission power using the reference signal for obtaining and/or determining the MIB, for example, in response to the MsgA transmission not comprising the activation command (e.g., MAC-CE) that indicates the new/candidate reference signal. The wireless device may determine the transmission power using the reference signal for obtaining and/or determining the MIB, for example, in response to the Msg3 transmission not comprising the activation command (e.g., MAC-CE) that indicates the new/candidate reference signal. The wireless device may determine the transmission power using the reference signal for obtaining and/or determining the MIB, for example, based on (e.g., after or in response to) sending (e.g., transmitting) the transport block (or the PUSCH transmission or the MsgA transmission or the Msg3 transmission) that does not indicate the new/candidate reference signal. The wireless device may determine the transmission power using the reference signal for obtaining and/or determining the MIB, for example, in response to not sending (e.g., transmitting) the transport block (or the PUSCH transmission or the MsgA transmission or the Msg3 transmission) that indicates the new/candidate reference signal.

The wireless device may determine the transmission power based on the reference signal used to obtain and/or determine the MIB, for example, before (or prior to) receiving the one or more configuration parameters (e.g., before T4 as shown in FIG. 18). The wireless device may determine the transmission power based on the reference signal used to obtain and/or determine the MIB, for example, before (or prior to) the reception time (e.g., time T4 as shown in FIG. 18). The wireless device may determine the transmission power based on the reference signal used to obtain and/or determine the MIB, for example, based on (e.g., after or in response to) the transmission time occurring. The transmission time may occur, for example, before (or prior to) receiving the one or more configuration parameters. The wireless device may determine the transmission power based on the reference signal used to obtain and/or determine the MIB, for example, based on (e.g., after or in response to) the transmission time occurring before (or prior to) the reception time.

The wireless device may determine the transmission power based on the reference signal used to obtain and/or determine the MIB. The wireless device may determine the transmission power based on the reference signal used to obtain/determine the MIB, for example, based on (e.g., after) sending (e.g., transmitting) the transport block. The wireless device may determine the transmission power based on the reference signal used to obtain/determine the MIB, for example, based on (e.g., after) the PUSCH transmission. The wireless device may determine the transmission power based on the reference signal used to obtain/determine the MIB, for example, based on (e.g., after) the MsgA transmission. The wireless device may determine the transmission power based on the reference signal used to obtain/determine the MIB, for example, based on (e.g., after) the Msg3 transmission (e.g., as shown at time T2 in FIG. 17 and FIG. 18). The wireless device may determine the transmission power based on the reference signal used to obtain and/or determine the MIB, for example, based on (e.g., after or in response to) the transmission time occurring. The transmission time may occur, for example, based on (e.g., after) sending (e.g., transmitting) the transport block. The transmission time may occur, for example, based on (e.g., after) the PUSCH transmission. The transmission time may occur, for example, based on (e.g., after) the MsgA transmission. The transmission time may occur, for example, based on (e.g., after) the Msg3 transmission (e.g., as shown at time T2 in FIG. 17 and FIG. 18).

The wireless device may determine the transmission power based on the reference signal used to obtain and/or determine the MIB, for example, based on (e.g., after) receiving DCI scheduling a PDSCH transmission. The wireless device may determine the transmission power based on the reference signal used to obtain and/or determine the MIB, for example, based on (e.g., after) receiving DCI scheduling a PDSCH transmission (e.g., Msg4 as shown at time T3 in FIG. 17). The wireless device may determine the transmission power based on the reference signal used to obtain and/or determine the MIB, for example, based on (e.g., after or in response to) the transmission time occurring. The transmission time may occur, for example, based on (e.g., after) receiving the DCI that schedules the PDSCH transmission (e.g., Msg4 as shown at time T3 in FIG. 17). The wireless device may determine the transmission power based on the reference signal used to obtain and/or determine the MIB, for example, based on (e.g., after) receiving the PDSCH transmission (e.g., Msg4 as shown at time T3 in FIG. 17). The wireless device may determine the transmission power based on the reference signal used to obtain and/or determine the MIB, for example, based on (e.g., after or in response to) the transmission time occurring. The transmission time may occur, for example, based on (e.g., after) receiving the PDSCH transmission (e.g., Msg4 as shown at time T3 in FIG. 17).

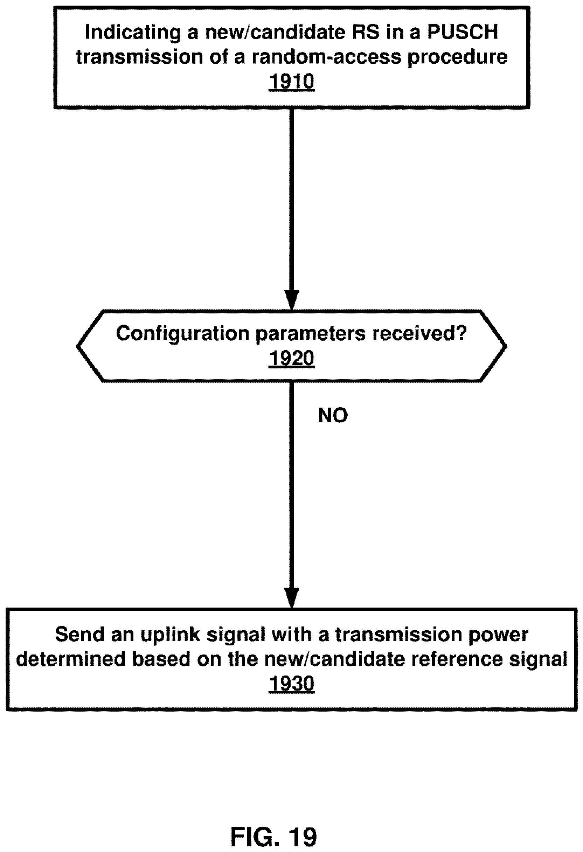

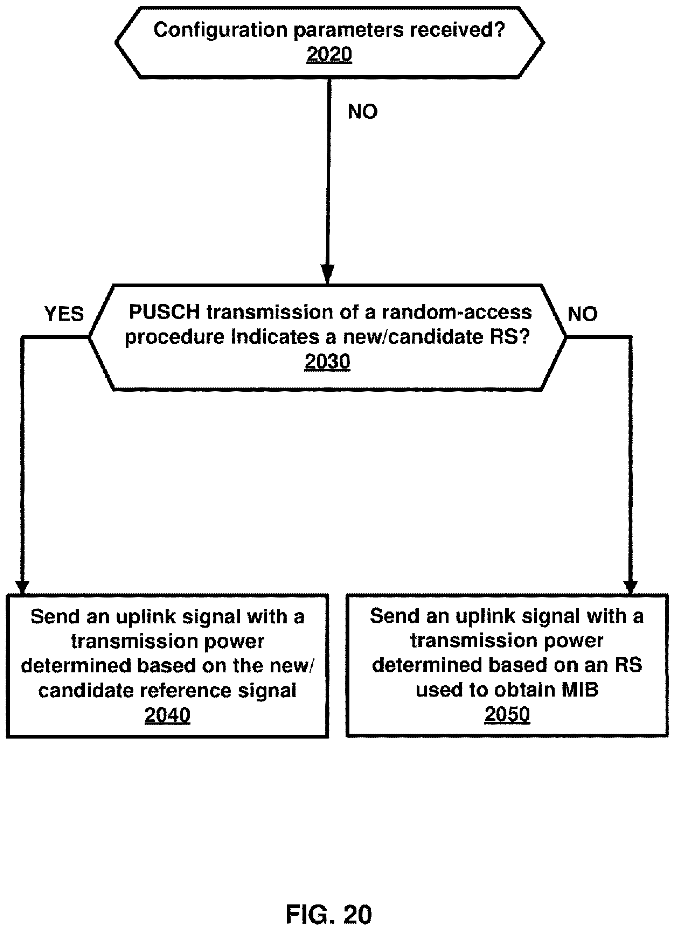

FIG. 19 and FIG. 20 show example methods of beam refinement. A wireless device may obtain a MIB. The wireless device may obtain a MIB, for example, based on a reference signal. The wireless device may use the reference signal to obtain the MIB. The reference signal may indicate and/or comprise the MIB.

The wireless device may receive one or more messages. The wireless device may receive the one or more messages from a base station. The one or more messages may comprise one or more configuration parameters. The wireless device may receive the one or more messages at/in/during a reception time. The wireless device may receive the one or more configuration parameters at/in/during a reception time. The wireless device may determine whether the one or more configuration parameters have been received. (e.g., at step 1920 as shown in FIG. 19, at step 2020 as shown in FIG. 20). The wireless device may determine whether the one or more configuration parameters indicate at least one pathloss RS. The one or more configuration parameters may be RRC configuration parameter(s). The one or more configuration parameters may comprise, for example, RRC reconfiguration parameter(s). The one or more configuration parameters may be one or more dedicated configuration parameters. The one or more configuration parameters may not be shared and/or used among/by a plurality of wireless devices. The one or more configuration parameters may not be broadcast configuration parameters. A second wireless device, different from the wireless device, may not use the one or more configuration parameters. A second wireless device, different from the wireless device, may not use the one or more configuration parameters, for example, based on the one or more configuration parameters being dedicated.

The wireless device may send (e.g., transmit), via an uplink resource, an uplink signal. The wireless device may send (e.g., transmit) the uplink signal via an uplink resource, for example, a PUSCH resource, a PUCCH resource, or a SRS resource. The wireless device may send (e.g., transmit), via an uplink resource, an uplink signal, for example a PUSCH transmission, a SRS, a PUCCH transmission, a UCI, or a transport block. The wireless device may send (e.g., transmit), in/at/during a transmission time, the uplink signal The wireless device may send (e.g., transmit) the uplink signal in/at/during a transmission time, for example, a time slot, a mini-slot, a symbol, a subframe, and the like. The wireless device may send (e.g., transmit), with and/or using a transmission power, the uplink signal. The wireless device may send (e.g., transmit), via the uplink resource, the uplink signal, for example, before (or prior to) receiving the one or more configuration parameters. The wireless device may send (e.g., transmit), via the uplink resource, the uplink signal, for example, before (or prior to) the reception time. The transmission time may occur/be before (or prior to) the reception time. The wireless device may send (e.g., transmit), for a random-access procedure, a transport block. The wireless device may send (e.g., transmit), for a random-access procedure, a PUSCH transmission. The wireless device may send (e.g., transmit), for a random-access procedure, a Msg3 transmission. The wireless device may send (e.g., transmit), for a random-access procedure, a MsgA transmission.

The transport block of the random-access procedure may, for example, indicate a new/candidate reference signal. The wireless device may indicate a new/candidate reference signal in a PUSCH transmission of the random-access procedure (e.g., at step 1910 as shown in FIG. 19). The wireless device may determine whether the PUSCH transmission of the random-access procedure indicates a new/candidate reference signal (e.g., at step 2030 as shown in FIG. 20). The Msg3 transmission of the random-access procedure may indicate a new/candidate reference signal. The wireless device may determine whether the Msg3 transmission of the random-access procedure indicates a new/candidate reference signal. The MsgA transmission of the random-access procedure may indicate a new/candidate reference signal. The wireless device may determine whether the MsgA transmission of the random-access procedure indicates a new/candidate reference signal. The transport block may comprise/be an activation command (e.g., MAC-CE) indicating the new/candidate reference signal. The transport block may carry the activation command. The PUSCH transmission may comprise/be an activation command (e.g., MAC-CE) indicating the new/candidate reference signal. The PUSCH transmission may carry the activation command. The Msg3 transmission may comprise/be an activation command (e.g., MAC-CE) indicating the new/candidate reference signal. The Msg3 transmission may carry the activation command. The MsgA transmission may comprise/be an activation command (e.g., MAC-CE) indicating the new/candidate reference signal. The MsgA transmission may carry the activation command. The wireless device may determine, compute, and/or calculate, for transmission of the uplink signal, the transmission power. The wireless device may determine, compute, and/or calculate, for transmission of the uplink signal, the transmission power, for example, based on the new/candidate reference signal (e.g., at step 1930 as shown in FIG. 19). The wireless device may determine, compute, and/or calculate, for transmission of the uplink signal, the transmission power, for example, based on (e.g., using) the new/candidate reference signal. The wireless device may determine the transmission power using the new/candidate reference signal, for example, based on (e.g., after or in response to) the transport block indicating the new/candidate reference signal. The wireless device may determine the transmission power using the new/candidate reference signal, for example, based on (e.g., after or in response to) the PUSCH transmission indicating the new/candidate reference signal. The wireless device may send (e.g., transmit) an uplink signal based on the determined transmission power (e.g., at steps 2030 and 2040 as shown in FIG. 20). The wireless device may determine the transmission power using the new/candidate reference signal, for example, based on (e.g., after or in response to) the MsgA transmission indicating the new/candidate reference signal. The wireless device may determine the transmission power using the new/candidate reference signal, for example, based on (e.g., after or in response to) the Msg3 transmission indicating the new/candidate reference signal. The wireless device may determine the transmission power using the new/candidate reference signal, for example, before (or prior to) receiving the one or more configuration parameters. The wireless device may determine the transmission power using the new/candidate reference signal, for example, based on (e.g., after or in response to) the transmission time occurring before (or prior to) the reception time.

The transport block may not, for example, indicate a new/candidate reference signal. The transport block may not comprise/be an activation command (e.g., MAC-CE) indicating the new/candidate reference signal. The PUSCH transmission may not, for example, indicate a new/candidate reference signal. The PUSCH transmission may not comprise/be an activation command (e.g., MAC-CE) indicating the new/candidate reference signal. The Msg3 transmission may not, for example, indicate a new/candidate reference signal. The Msg3 transmission may not comprise/be an activation command (e.g., MAC-CE) indicating the new/candidate reference signal. The MsgA transmission may not, for example, indicate a new/candidate reference signal. The MsgA transmission may not comprise/be an activation command (e.g., MAC-CE) indicating the new/candidate reference signal. The wireless device may determine, compute, and/or calculate, for transmission of the uplink signal, the transmission power, for example, based on the reference signal used to obtain the MIB. The wireless device may determine the transmission power using the reference signal used to obtain the MIB, for example, based on (e.g., after or in response to) the transport block not indicating the new/candidate reference signal. The wireless device may determine the transmission power using the reference signal used to obtain the MIB, for example, based on (e.g., after or in response to) the PUSCH transmission not indicating the new/candidate reference signal. The wireless device may send (e.g., transmit) an uplink signal with the determined transmission power (e.g., at steps 2030 and 2050 as show in FIG. 20). The wireless device may determine the transmission power using the reference signal used to obtain the MIB, for example, based on (e.g., after or in response to) the MsgA transmission not indicating the new/candidate reference signal. The wireless device may determine the transmission power using the reference signal used to obtain the MIB, for example, based on (e.g., after or in response to) the Msg3 transmission not indicating the new/candidate reference signal. The wireless device may determine the transmission power using the reference signal used to obtain the MIB, for example, before (or prior to) receiving the one or more configuration parameters. The wireless device may determine the transmission power using the reference signal used to obtain the MIB, for example, based on (e.g., after or in response to) the transmission time occurring before (or prior to) the reception time.

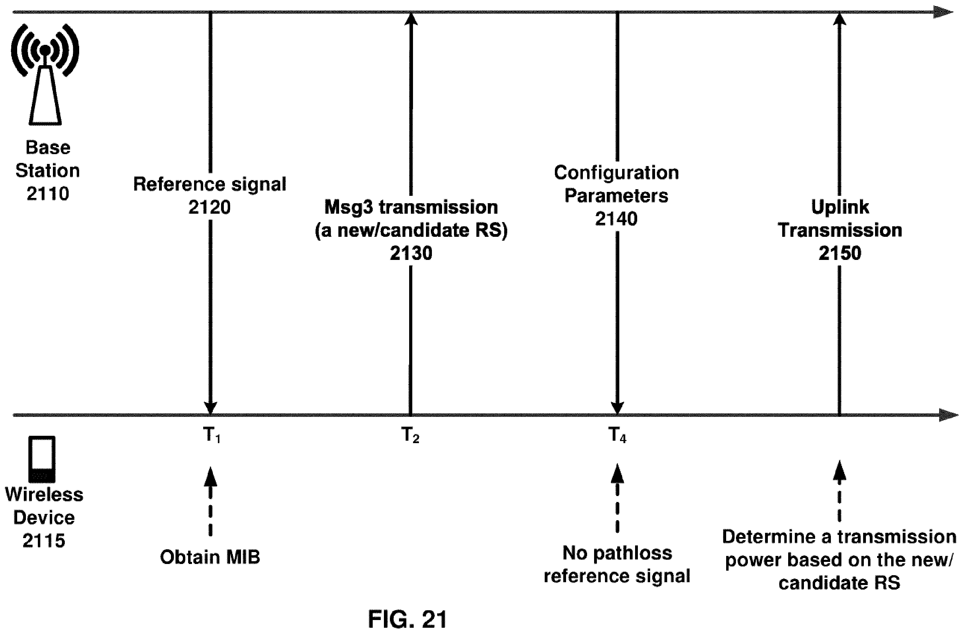

FIG. 21 shows an example of beam refinement. A wireless device (e.g., wireless device 2115) may receive one or more messages. The wireless device may receive the one or more messages from a base station (e.g., base station 2110). The base station may send (e.g., transmit), to the wireless device, one or more messages. The wireless device may obtain a MIB, for example, based on a reference signal (e.g., reference signal 2120). The wireless device may determine the MIB based on the reference signal. The wireless device may receive, from the base station, the reference signal. The base station may send (e.g., transmit), to the wireless device, the reference signal. The one or more messages may comprise one or more configuration parameters. The one or more messages may comprise one or more configuration parameters, for example, the configuration parameters 2140 at time T4, as shown in FIG. 21). The one or more configuration parameters (e.g., configuration parameters received at time T4, as shown in FIG. 18 and FIG. 21) may comprise an enabling parameter. The enabling parameter may comprise, for example, enableDefault-

BeamPL. The enabling parameter may comprise, for example, enableDefaultBeamPL-ForSRS. The enabling parameter may comprise, for example, enableDefaultBeamPL-ForPUCCH. The enabling parameter may comprise, for example, enableDefaultBeamPL-ForPUSCH0-0. The enabling parameter may be present in the one or more configuration parameters. The enabling parameter may be set to "enabled." The one or more configuration parameters may indicate that the enabling parameter is "enabled." A value of the enabling parameter may indicate and/or may be "enabled." A value of the enabling parameter may be set to "enabled." The enabling parameter may be for the cell. The enabling parameter may enable determination and/or selection of a default spatial relation. The enabling parameter may enable determination and/or selection of a default spatial relation (e.g., spatial domain transmission filter/beam) for transmission of an uplink signal. The enabling parameter may enable determination and/or selection of a default spatial relation (e.g., spatial domain transmission filter/beam) for transmission of an uplink signal, for example, a SR, a CSI, a HARQ-ACK, a UCI, a PUCCH transmission, a PUSCH transmission, a SRS, a transport block. The enabling parameter may enable determination and/or selection of a default spatial relation (e.g., spatial domain transmission filter/beam) for transmission of the uplink signal via an uplink resource, for example, a PUCCH resource, a SRS resource, or a PUSCH resource. The enabling parameter may enable determination and/or selection of a default pathloss reference signal. The enabling parameter may enable determination and/or selection of a default pathloss reference signal for transmission of the uplink signal via the uplink resource. The wireless device may determine and/or select, for transmission of the uplink signal via the uplink resource, a default spatial relation and a default path loss reference signal. The wireless device may determine and/or select, for transmission of the uplink signal via the uplink resource, a default spatial relation and a default path loss reference signal, for example, based on the one or more configuration parameters comprising the enabling parameter that is set to "enabled." The wireless device may determine and/or select, for transmission of the uplink signal via the uplink resource, the default spatial relation and the default path loss reference signal, for example, based on the enabling parameter being present in the one or more configuration parameters.

The one or more configuration parameters (e.g., configuration parameters received at time T4, as shown in FIG. 18 and FIG. 21) may not indicate at least one pathloss reference signal. The one or more configuration may not indicate, for PUSCH transmissions, the at least one pathloss reference signal (e.g., PUSCH-PathlossReferenceRS). The one or more configuration may not indicate, for PUSCH transmissions, the at least one pathloss reference signal (e.g., PUCCH-PathlossReferenceRS, pathlossReferenceRSs). The one or more configuration may not indicate, for SRS transmissions, the at least one pathloss reference signal (e.g., SRS-PathlossReferenceRS, pathlossReferenceRSs).

The wireless device may send (e.g., transmit) a message (e.g., Msg 3) to the base station. The wireless device may determine and/or select a new/candidate reference signal. The wireless device may determine and/or select the new/candidate reference signal among/of the one or more new/candidate reference signals. The wireless device may determine and/or select, to indicate by/in the Msg3 transmission (e.g., Msg 3 transmission 2130 as shown at time T2 in Fig. 21), the new/candidate reference signal among/of the one or more new/candidate reference signals. The wireless device may send (e.g., transmit), via an uplink resource, an uplink signal. The wireless device may send (e.g., transmit), via an uplink resource, an uplink signal (e.g., uplink transmission 2150, as shown in FIG. 21). The wireless device may send (e.g., transmit) the uplink signal in/at/during a transmission time, for example, a time slot, a mini-slot, a symbol, a subframe, or the like. The wireless device may send (e.g., transmit), via the uplink resource, the uplink signal. The wireless device may send (e.g., transmit), via the uplink resource, the uplink signal, for example, based on (e.g., after) receiving the one or more configuration parameters (e.g., after time T4 as shown in FIG. 21). The wireless device may send (e.g., transmit), via the uplink resource, the uplink signal, for example, based on (e.g., after) the reception time (e.g., after time T4 as shown in FIG. 21). The wireless device may send (e.g., transmit), via the uplink resource, the uplink signal at/during/in the transmission time (e.g., time slot, symbol, and the like). The transmission time may occur based on (e.g., after or in response to) receiving the one or more configuration parameters. The wireless device may send (e.g., transmit), via the uplink resource, the uplink signal, for example, if the transmission time (e.g., time slot, symbol, and the like) occurs based on (e.g., after or in response to) receiving the one or more configuration parameters. The wireless device may send (e.g., transmit), via the uplink resource, the uplink signal at/during/in the transmission time. The transmission time may occur, for example, based on (e.g., after) the reception time (e.g., time slot, mini-slot, symbol, subframe, and the like). The wireless device may send (e.g., transmit), via the uplink resource, the uplink signal, for example, if the transmission time occurs based on (e.g., after) the reception time (e.g., time slot, mini-slot, symbol, subframe, and the like).The uplink resource may, for example, occur based on (e.g., after) the reception time.

The uplink signal may be a PUSCH transmission. The uplink signal may be a transport block. The uplink signal may be an SRS. The uplink signal may be a PUCCH transmission. The uplink signal may be an uplink control information (UCI). The UCI may comprise a scheduling request. The UCI may comprise a CSI report. The UCI may comprise a HARQ-ACK codebook. The uplink resource may be a PUSCH resource. The uplink resource may be an SRS resource. The uplink resource may be a PUCCH resource. The wireless device may send (e.g., transmit), via the uplink resource, the uplink signal with and/or using a transmission power. The wireless device may send (e.g., transmit), with and/or using the transmission power, the uplink signal. The base station may receive, with and/or using the transmission power, the uplink signal.

The wireless device may determine, compute, and/or calculate, for transmission of the uplink signal, the transmission power. The wireless device may determine, compute, and/or calculate, for transmission of the uplink signal (e.g., uplink trnamission 2150 as shown in FIG. 21), the transmission power, for example, based on the new/candidate reference signal. The wireless device may determine the transmission power using the new/candidate reference signal, for example, based on (e.g., after or in response to) the transport block (or the PUSCH transmission or the MsgA transmission or the Msg3 transmission) indicating the new/candidate reference signal. The wireless device may determine the transmission power using the new/candidate reference signal, for example, based on (e.g., after or in response to) the transport block (or the PUSCH transmission or the MsgA transmission or the Msg3 transmission) comprising the activation command (e.g., MAC-CE) that indicates the new/candidate reference signal. The wireless device may determine the transmission power using the new/candidate reference signal, for example, based on (e.g., after or in response to) sending (e.g., transmitting) the transport block (or the PUSCH transmission or the MsgA transmission or the Msg3 transmission) that indicates the new/candidate reference signal.

The wireless device may determine the transmission power using the new/candidate reference signal, for example, based on (e.g., after or in response to) one or more configuration parameters. The wireless device may determine the transmission power using the new/candidate reference signal, for example, based on (e.g., after or in response to) the one or more configuration parameters (e.g., configuration parameters received at time T4, as shown in FIG. 18 and FIG. 21) not indicating the at least one pathloss reference signal. The wireless device may determine the transmission power using the new/candidate reference signal, for example, based on (e.g., after or in response to) the one or more configuration parameters comprising the enabling parameter. The wireless device may determine the transmission power using the new/candidate reference signal, for example, based on (e.g., after or in response to) the one or more configuration parameters comprising the enabling parameter that is set to enabled. The wireless device may determine the transmission power using the new/candidate reference signal, for example, based on (e.g., after or in response to) the enabling parameter being present in the one or more configuration parameters.

The transport block (or the PUSCH transmission or the MsgA transmission or the Msg3 transmission) may, for example, not indicate a new/candidate reference signal. The transport block may not comprise/be an activation command (e.g., MAC-CE) indicating a new/candidate reference signal. The PUSCH transmission may not indicate a new/candidate reference signal. The PUSCH transmission may not comprise/be an activation command (e.g., MAC-CE) indicating a new/candidate reference signal. The MsgA transmission may not indicate a new/candidate reference signal. The MsgA transmission may not comprise/be an activation command (e.g., MAC-CE) indicating a new/candidate reference signal. The Msg3 transmission may not indicate a new/candidate reference signal. The Msg3 transmission may not comprise/be an activation command (e.g., MAC-CE) indicating a new/candidate reference signal.

The wireless device may determine, compute, and/or calculate, for transmission of the uplink signal, the transmission power, for example, based on the reference signal used to obtain and/or determine the MIB. The wireless device may determine the transmission power based on the reference signal used to obtain and/or determine the MIB, for example, based on (e.g., after or in response to) the transport block (or the PUSCH transmission or the MsgA transmission or the Msg3 transmission) not indicating the new/candidate reference signal. The wireless device may determine the transmission power based on the reference signal used to obtain and/or determine the MIB, for example, based on (e.g., after or in response to) the transport block (or the PUSCH transmission or the MsgA transmission or the Msg3 transmission) not comprising the activation command (e.g., MAC-CE) that indicates the new/candidate reference signal. The wireless device may determine the transmission power based on the reference signal used to obtain and/or determine the MIB, for example, based on (e.g., after or in response to) sending (e.g., transmitting) the transport block (or the PUSCH transmission or the MsgA transmission or the Msg3 transmission) that does not indicate the new/candidate reference signal. The wireless device may determine the transmission power based on the reference signal used to obtain and/or determine the MIB, for example, based on (e.g., after or in response to) not sending (e.g., transmitting) the transport block (or the PUSCH transmission or the MsgA transmission or the Msg3 transmission) that indicates the new/candidate reference signal.

The wireless device may determine the transmission power based on the reference signal used to obtain and/or determine the MIB, for example, based on (e.g., after or in response to) the one or more configuration parameters (e.g., configuration parameters received at time T4, as shown in FIG. 18 and FIG. 21) not indicating the at least one pathloss reference signal. The wireless device may determine the transmission power based on the reference signal used to obtain and/or determine the MIB, for example, based on (e.g., after or in response to) the one or more configuration parameters comprising the enabling parameter. The wireless device may determine the transmission power based on the reference signal used to obtain and/or determine the MIB, for example, based on (e.g., after or in response to) the one or more configuration parameters comprising the enabling parameter that is set to enabled. The wireless device may determine the transmission power based on the reference signal used to obtain and/or determine the MIB, for example, based on (e.g., after or in response to) the enabling parameter being present in the one or more configuration parameters.

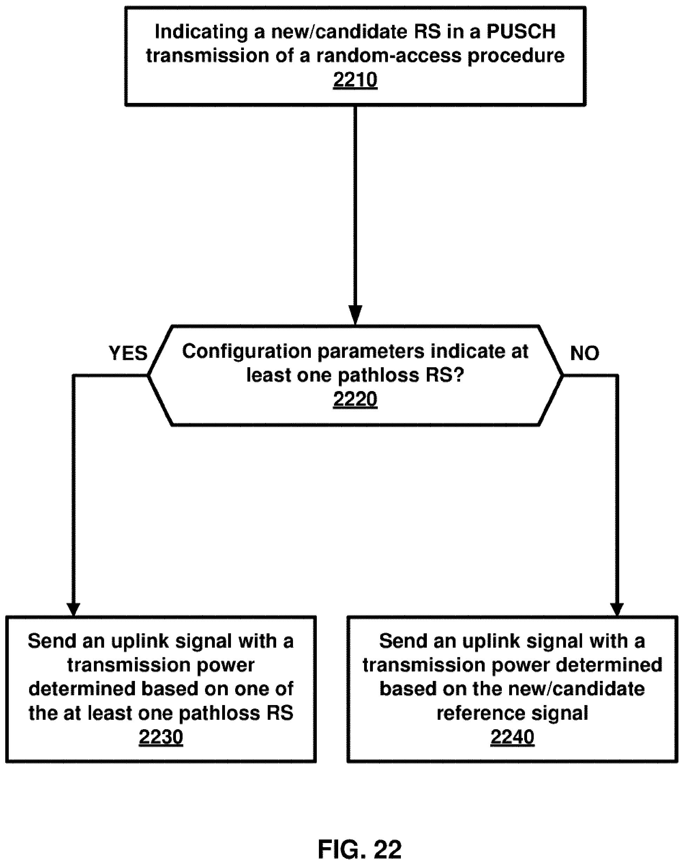

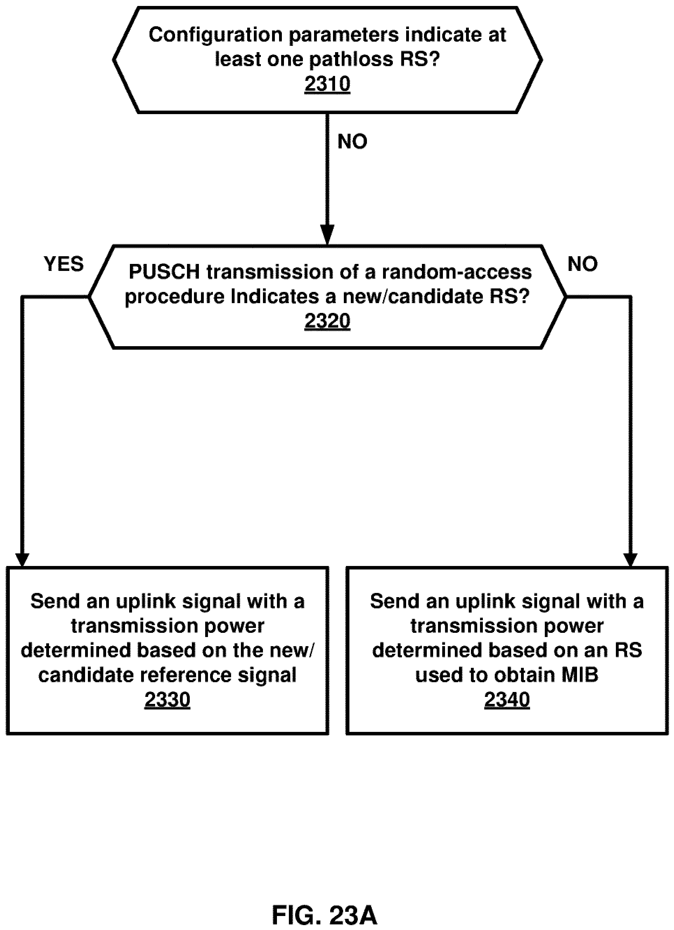

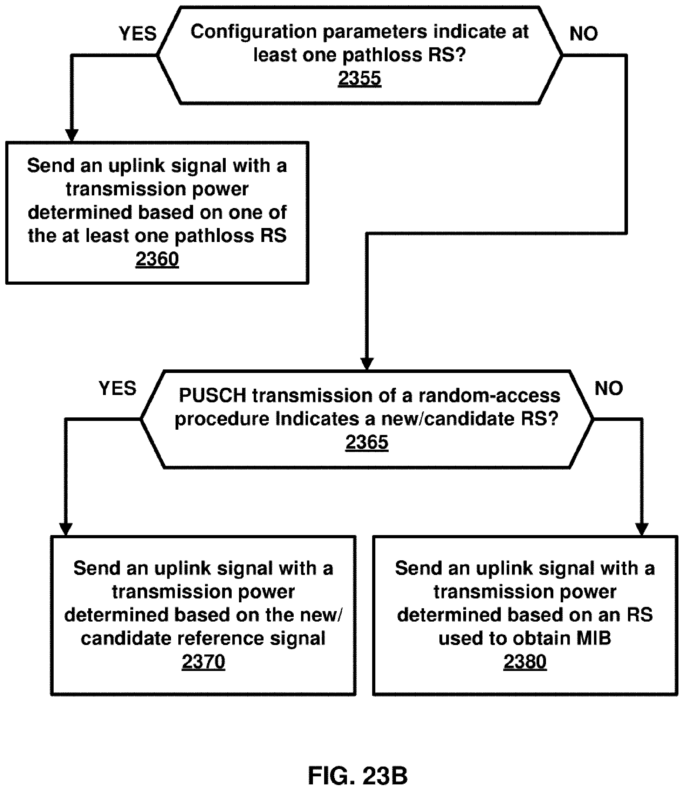

FIG. 22, FIG. 23A and FIG. 23B show example methods of beam refinement. A wireless device may obtain a MIB. The wireless device may obtain a MIB based on a reference signal. The wireless device may use the reference signal to obtain the MIB. The reference signal may indicate and/or comprise the MIB. The wireless device may receive one or more messages. The wireless device may receive the one or more messages from a base station. The one or more messages may comprise one or more configuration parameters. The wireless device may receive the one or more messages at/in/during a reception time. The wireless device may receive the one or more configuration parameters at/in/during a reception time. The one or more configuration parameters may be RRC configuration parameter(s). The one or more configuration parameters may be, for example, RRC reconfiguration parameter(s). The one or more configuration parameters may be one or more dedicated configuration parameters. The one or more configuration parameters may not be shared and/or used among/by a plurality of wireless devices. The one or more configuration parameters may not be broadcast configuration parameters. A second wireless device, different from the wireless device, may not use the one or more configuration parameters, for example, based on the one or more configuration parameters being dedicated.

The wireless device may determine if the one or more configuration parameters indicate at least one pathloss reference signal (e.g., at step 2310 as shown in FIG. 23A, at step 2355 as shown in FIG. 23B). The one or more configuration parameters may not indicate at least one pathloss reference signal. The one or more configuration parameters may not indicate, for example, at least a PUSCH-PathlossReferenceRS. The one or more configuration parameters may not indicate, for example, at least a PUCCH-pathlossReferenceRSs. The one or more configuration parameters may not indicate, for example, at least a SRS- pathlossReferenceRSs. The one or more configuration parameters may comprise an enabling parameter. The one or more configuration parameters may comprise, for example, an enableDefaultBeamPL. The one or more configuration parameters may comprise, for example, an enableDefaultBeamPL-ForSRS. The one or more configuration parameters may comprise, for example, an enableDefaultBeamPL-ForPUCCH. The one or more configuration parameters may comprise, for example, an enableDefaultBeamPL-ForPUSCH0-0. The wireless device may send (e.g., transmit), for a random-access procedure, a transport block (e.g., PUSCH transmission, a Msg3 transmission, MsgA transmission, and the like). The wireless device may send (e.g., transmit), via an uplink resource (e.g., PUSCH/PUCCH/SRS resource), an uplink signal (e.g., PUSCH, SRS, PUCCH, UCI, transport block). The wireless device may send (e.g., transmit), in/at/during a transmission time (e.g., time slot, mini-slot, symbol, subframe, and the like), the uplink signal. The wireless device may send (e.g., transmit), with and/or using a transmission power, the uplink signal. The wireless device may send (e.g., transmit), via the uplink resource, the uplink signal, for example, based on (e.g., after) receiving the one or more configuration parameters. The wireless device may send (e.g., transmit), via the uplink resource, the uplink signal, for example, based on (e.g., after) the reception time. The transmission time may occur/be, for example, after the reception time.

The transport block of the random-access procedure may, for example, indicate a new/candidate reference signal. The PUSCH transmission of the random-access procedure may, for example, indicate a new/candidate reference signal. The wireless device may indicate a new/candidate reference signal in a PUSCH transmission of a random-access procedure (e.g., at step 2210, as shown in FIG. 22). The wireless device may determine whether the PUSCH transmission of a random-access procedure indicates a new/candidate reference signal (e.g., at step 2320, as shown in FIG. 23A; e.g., at step 2365, as shown in FIG. 23B). The Msg3 transmission of the random-access procedure may, for example, indicate a new/candidate reference signal. The wireless device may determine whether the Msg3 transmission of a random-access procedure indicates a new/candidate reference signal. The MsgA transmission of the random-access procedure may, for example, indicate a new/candidate reference signal. The wireless device may determine whether the MsgA transmission of a random-access procedure indicates a new/candidate reference signal. The transport block (or the PUSCH transmission or the Msg3 transmission or the MsgA transmission) may comprise/be an activation command (e.g., MAC-CE) indicating the new/candidate reference signal. The transport block (or the PUSCH transmission or the Msg3 transmission or the MsgA transmission) may carry the activation command.

The wireless device may determine, compute, and/or calculate, for transmission of the uplink signal, the transmission power, for example, based on the new/candidate reference signal. The wireless device may determine the transmission power using the new/candidate reference signal, for example, based on (e.g., after or in response to) the transport block (or the PUSCH transmission or the MsgA transmission or the Msg3 transmission) indicating the new/candidate reference signal (e.g., at steps 2320 and 2330 as shown in FIG. 23A, at steps 2365 and 2370, as shown in FIG. 23B). The wireless device may determine the transmission power using the new/candidate reference signal. The wireless device may determine the transmission power based on the new/candidate reference signal, for example, based on (e.g., after) receiving the one or more configuration parameters. The wireless device may determine the transmission power using the new/candidate reference signal, for example, based on (e.g., after or in response to) the transmission time occurring. The transmission time may occur based on (e.g., after) the reception time. The wireless device may determine the transmission power using the new/candidate reference signal, for example, based on (e.g., after or in response to) the one or more configuration parameters not indicating the at least one pathloss reference signal. The wireless device may send (e.g., transmit) an uplink signal with the determined transmission power (e.g., at steps 2220 and 2240, as shown in FIG. 22). The wireless device may determine the transmission power using the new/candidate reference signal, for example, based on (e.g., after or in response to) the one or more configuration parameters comprising the enabling parameter.

The transport block (or the PUSCH transmission or the Msg3 transmission or the MsgA transmission) of the random-access procedure may not, for example, indicate a new/candidate reference signal. The transport block (or the PUSCH transmission or the Msg3 transmission or the MsgA transmission) may not comprise and/or be an activation command (e.g., MAC-CE) indicating the new/candidate reference signal.

The wireless device may determine, compute, and/or calculate, for transmission of the uplink signal, the transmission power, for example, based on the reference signal used to obtain the MIB. The wireless device may determine the transmission power using the reference signal used to obtain the MIB, for example, based on (e.g., after or in response to) the transport block not indicating the new/candidate reference signal. The wireless device may determine the transmission power using the reference signal used to obtain the MIB, for example, based on (e.g., after or in response to) the PUSCH transmission not indicating the new/candidate reference signal. The wireless device may send (e.g., transmit) an uplink signal with the determined transmission power (e.g., at steps 2320 and 2340 as shown in FIG. 23A, e.g., at steps 2365 and 2380, as shown in FIG. 23B). The wireless device may determine the transmission power using the reference signal used to obtain the MIB, for example, based on (e.g., after or in response to) the MsgA transmission not indicating the new/candidate reference signal. The wireless device may determine the transmission power using the reference signal used to obtain the MIB, for example, based on (e.g., after or in response to) the Msg3 transmission not indicating the new/candidate reference signal. The wireless device may determine the transmission power using the reference signal used to obtain the MIB, for example, based on (e.g., after) receiving the one or more configuration parameters. The wireless device may determine the transmission power using the reference signal used to obtain the MIB, for example, based on (e.g., after or in response to) the transmission time occurring. The transmission time may occur, for example, after the reception time. The wireless device may determine the transmission power using the reference signal used to obtain the MIB, for example, based on (e.g., after or in response to) the one or more configuration not indicating the at least one pathloss reference signal. The wireless device may determine the transmission power using the reference signal used to obtain the MIB, for example, based on (e.g., after or in response to) the one or more configuration parameters comprising the enabling parameter.

The one or more configuration parameters may indicate at least one pathloss reference signal (e.g., PUSCH-PathlossReferenceRS, PUCCH-pathlossReferenceRSs, SRS- pathlossReferenceRSs, and the like). The wireless device may determine, compute, and/or calculate, for transmission of the uplink signal, the transmission power, for example, based on a pathloss reference signal. The wireless device may determine, compute, and/or calculate, for transmission of the uplink signal, the transmission power, for example, based on one of the at least one pathloss reference signal. The wireless device may send (e.g., transmit) an uplink signal with a transmission power, which is determined based on one of the at least one pathloss reference signal, for example, based on (e.g., after or in response to) the one or more configuration parameters indicating, for the uplink signal, a pathloss reference signal (e.g., at steps 2220 and 2230 as shown in FIG. 22, at steps 2355 and 2360, as shown in FIG. 23B).

The wireless device may receive downlink control (DCI) scheduling transmission of the uplink signal. The DCI may indicate, for transmission of the uplink signal, a pathloss reference signal. The DCI may indicate, for transmission of the uplink signal, the one of the at least one pathloss reference signal. The one or more configuration parameters may indicate, for the uplink signal, a pathloss reference signal. The one or more configuration parameters may indicate, for the uplink signal, the one of the at least one pathloss reference signal. The one or more configuration parameters may indicate, for the uplink resource used to send (e.g., transmit) the uplink signal, a pathloss reference signal. The one or more configuration parameters may indicate, for the uplink resource used to send (e.g., transmit) the uplink signal, the one of the at least one pathloss reference signal. The base station may send (e.g., transmit) an activation command (e.g., MAC-CE) indicating, updating, and/or activating, for the uplink signal, a pathloss reference signal. The wireless device may receive an activation command (e.g., MAC-CE) indicating, updating, and/or activating, for the uplink signal, a pathloss reference signal. The wireless device may receive an activation command (e.g., MAC-CE) indicating, updating, and/or activating, for the uplink signal, the one of the at least one pathloss reference signal. The wireless device may receive an activation command (e.g., MAC-CE) indicating, updating, and/or activating, for the uplink resource used to send (e.g., transmit) the uplink signal, a pathloss reference signal. The wireless device may receive an activation command (e.g., MAC-CE) indicating, updating, and/or activating, for the uplink resource used to send (e.g., transmit) the uplink signal, the one of the at least one pathloss reference signal.

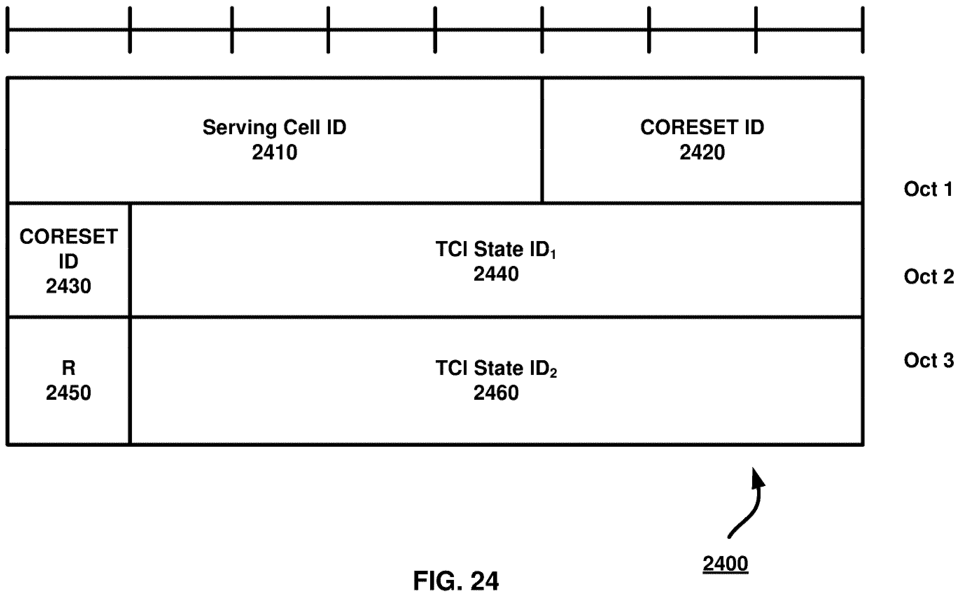

FIG. 24 shows an example of a medium access control control element (MAC CE) format. The MAC CE format (e.g., MAC CE 2400) may indicate, activate, update, and/or select one or more TCI states. The MAC CE format may indicate, activate, update, and/or select one or more TCI states (e.g., TCI state 1 and TCI state 2) for a coreset of a serving cell. The MAC CE format may comprise, for example, TCI State Indication for wireless device-specific (e.g., UE-specific) PDCCH MAC CE. The MAC CE format may comprise, for example, Enhanced TCI State Indication for wireless device-specific (e.g., UE-specific) PDCCH MAC CE.. The base station may indicate, in the MAC CE format, one or more TCI state indexes. The base station may indicate, in the MAC CE format, one or more TCI state indexes, for example, TCI state ID 1 (e.g., TCI state ID 2440) and TCI state ID 2 (e.g., TCI state ID 2460), as shown in FIG. 24. The base station may indicate, in the MAC CE format, one or more TCI state indexes to activate the one or more TCI states for a coreset. The base station may indicate, in the MAC CE format, one or more TCI state indexes to activate the one or more TCI states for the coreset indicated by a coreset ID (e.g., coreset ID 2430). The one or more TCI state indexes may indicate and/or identify the one or more TCI states. At least one TCI state index (e.g., each TCI state index) of the one or more TCI state indexes may indicate and/or identify a respective TCI state of the one or more TCI states. The MAC CE format may comprise one or more fields. A first field, of the one or more fields, of the MAC CE format may indicate and/or comprise a serving cell index/identifier/indicator. A first field, of the one or more fields, of the MAC CE format may indicate and/or comprise a serving cell index/identifier/indicator of/identifying/indicating the serving cell (e.g., serving cell ID 2410). The first field, of the one or more fields, of the MAC CE format may indicate and/or comprise, for example, a Serving Cell ID provided by a higher layer parameter ServCellIndex. The first field, of the one or more fields, of the MAC CE format may indicate and/or comprise, for example, a Serving Cell ID indicated by one or more configuration parameters. A second field of, the one or more fields, of the MAC CE format may indicate and/or comprise a coreset index/identifier/indicator. A second field of, the one or more fields, of the MAC CE format may indicate and/or comprise a coreset index/identifier/indicator of/identifying/indicating the coreset of the serving cell. A second field of, the one or more fields, of the MAC CE format may indicate and/or comprise, for example, a Coreset ID (e.g., coreset ID 2420). A third field, of the one or more fields, of the MAC CE format may indicate and/or comprise a first TCI state index/identifier/indicator. A third field, of the one or more fields, of the MAC CE format may indicate and/or comprise a first TCI state index/identifier/indicator of/identifying/indicating a first TCI state. The third field, of the one or more fields, of the MAC CE format may indicate and/or comprise, for example, TCI state ID 1 (e.g., TCI state ID 2440, as shown in FIG. 24). The one or more TCI states may comprise the first TCI state. A fourth field,) of the one or more fields, of the MAC CE format may be a reserved field (e.g., R 2450, as shown in FIG. 24). A fifth field, of the one or more fields, of the MAC CE format may indicate and/or comprise a second TCI state index. A fifth field, of the one or more fields, of the MAC CE format may indicate and/or comprise a second TCI state index of/identifying/indicating a second TCI state. The fifth field, of the one or more fields, of the MAC CE format may indicate and/or comprise a second TCI state index, for example TCI state ID 2 (e.g., TCI state ID 2460, as shown in FIG. 24). The one or more fields of the MAC CE format may comprise the second TCI state index. The one or more fields of the MAC CE format may comprise the second TCI state index based on a value of the fourth field (e.g., R 2460). The MAC CE format may not comprise the second TCI state index, for example, the fifth field may be a reserved field. The MAC CE format may not comprise the second TCI state index (e.g., the fifth field may be a reserved field), for example, if the value of the fourth field is equal to zero. The MAC CE format may comprise the second TCI state index. The MAC CE format may comprise the second TCI state index, for example, if the value of the fourth field is equal to one. The one or more TCI states may comprise the second TCI state. The MAC CE format may be an activation command. The wireless device may receive one or more messages comprising one or more configuration parameters. The base station may send (e.g., transmit), to the wireless device, one or more messages comprising one or more configuration parameters. The one or more configuration parameters may indicate a TCI state index. The one or more configuration parameters may indicate the first TCI state index for the first TCI state. The one or more configuration parameters may indicate the second TCI state index for the second TCI state. The one or more configuration parameters may indicate a coreset index. The one or more configuration parameters may indicate the coreset index for the coreset. The one or more configuration parameters may indicate a serving cell index. The one or more configuration parameters may indicate the serving cell index for the serving cell. The one or more configuration parameters may indicate at least one TCI state index for at least one TCI state. The one or more configuration parameters may indicate the one or more TCI state indexes for the one or more TCI states. The one or more TCI states may comprise the first TCI state and the second TCI state. The one or more TCI state indexes may comprise the first TCI state index and the second TCI state index.

In at least some technologies, a wireless device may receive one or more configuration parameters indicating a plurality of coresets, for example, for one or more active downlink BWPs of one or more cells. The plurality of coresets may overlap, for example, in time. The wireless device may select a first coreset of the plurality of coresets to monitor. The wireless device may monitor the plurality of coresets, for example, based on a plurality of TCI states. The wireless device may monitor one or more coresets, of the plurality of coresets, which have the same TCI state as the respective TCI state of the at least one coreset. In some technologies, a first coreset may be activated with a first TCI state and a second TCI state. The wireless device may monitor at least a first coreset, of the plurality of coresets, activated with a first TCI state and a second TCI state. The wireless device may monitor one or more coresets, of the plurality of coresets, which have the same first TCI state and second TCI state as the first coreset. However, monitoring only those coresets, of the plurality of coresets, that are activated with the same first TCI state and second TCI state as the first coreset may not be efficient, for example, if other coresets are available for monitoring and are activated with a subset of the TCI states of the first coreset. The inability of the wireless device to monitor coresets, other than those coresets that have been activated with the same first TCI state and second TCI state as the first coreset, may decrease the quantity of coresets for the wireless device to monitor and reduce the reliability and performance of the whole communication system. By implementing at least some technologies, beam management may be enhanced by increasing the quantity of coresets monitored by the wireless device and increasing the flexibility of the base station to communicate with the wireless device. If the plurality of coresets, activated with different TCI states, overlap in time, and a first/selected coreset is activated with two TCI states (e.g., a first TCI state and a second TCI state), a wireless device may monitor one or more coreset, of the plurality of coresets, that have been activated with the first TCI state only; the second TCI state only, or both the first TCI state and the second TCI state. Monitoring a selected coreset and other coresets activated with the same (or a subset of) the two TCI states of the selected coreset may increase the number of coresets monitored by the wireless device, increase the flexibility of the wireless device and base station to communicate, which may result in increased data rate, reliability, robustness and efficiency within the system.

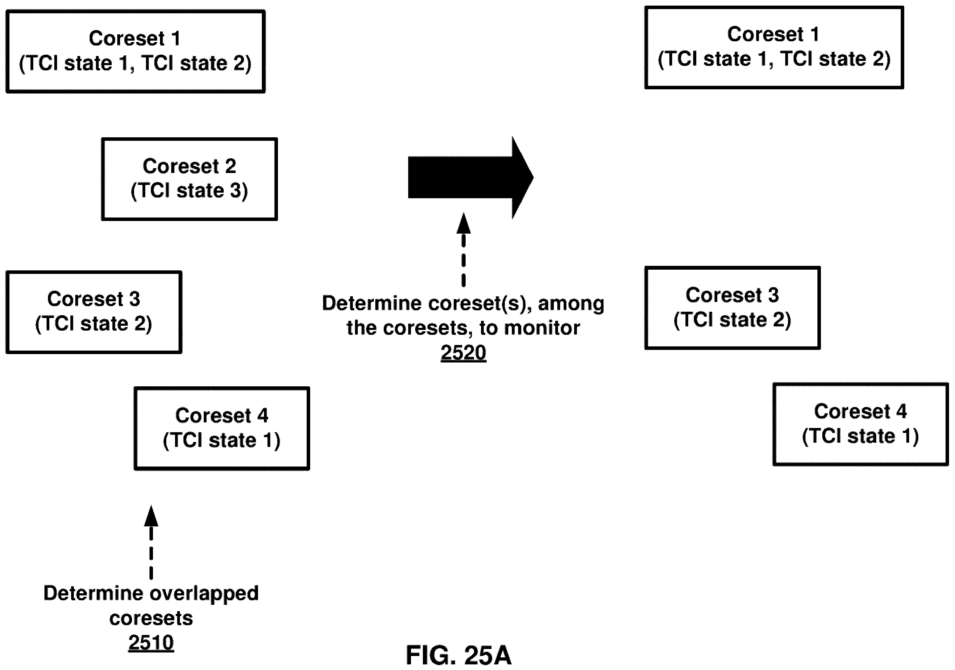

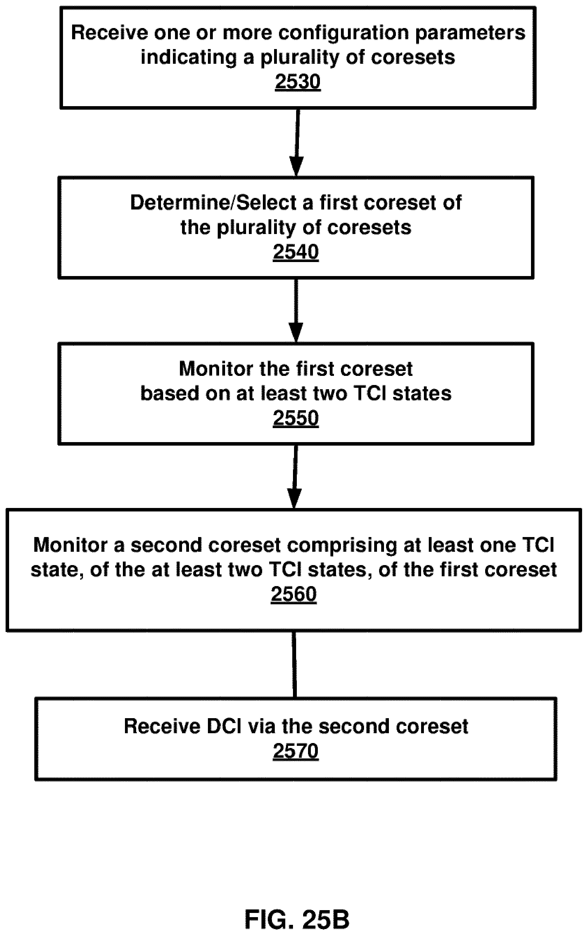

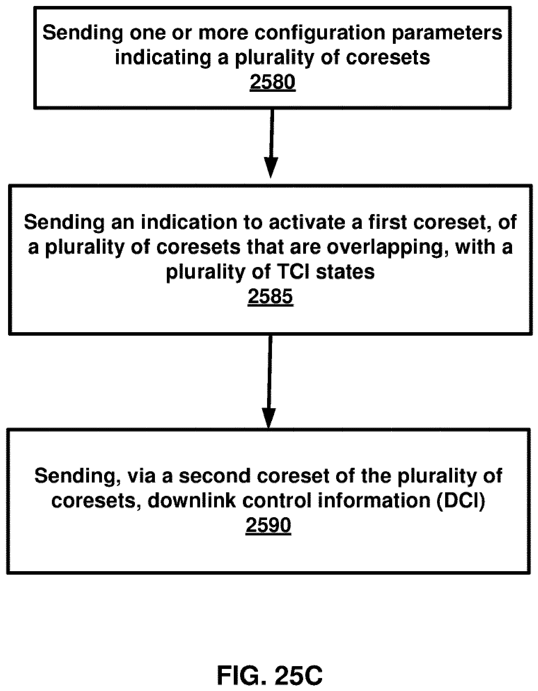

FIG. 25A shows an example of coreset overlapping. FIG. 25B and FIG. 25C show example methods of monitoring overlapping coresets. A wireless device may receive one or more messages. The wireless device may receive the one or more messages from a base station. The one or more messages may comprise one or more configuration parameters. The one or more configuration parameters may be RRC configuration parameter(s). The one or more configuration parameters may be RRC reconfiguration parameter(s). The one or more configuration parameters may be for one or more cells. At least one configuration parameter, of the one or more configuration parameters, may be for a cell of the one or more cells.

The one or more cells may be a single cell. The one or more cells may operate/be in a same frequency band. The one or more configuration parameters may indicate one or more serving cell indexes/identifiers/indicators. The one or more configuration parameters may indicate one or more serving cell indexes/identifiers/indicators for the one or more cells. The one or more configuration parameters may indicate one or more serving cell indexes/identifiers/indicators, for example, one or more serving cell indexes/identifiers/indicators provided by a higher layer parameter ServCellIndex. At least one cell of the one or more cells (e.g., each cell of the one or more cells) may be identified and/or indicated by a respective serving cell index of the one or more serving cell indexes. A first cell of the one or more cells may be identified by a first serving cell index of the one or more serving cell indexes. A second cell, of the one or more cells, may be identified by a second serving cell index of the one or more serving cell indexes.

The cell may be a primary cell (PCell). The cell may be a secondary cell (SCell). The cell may be a secondary cell configured with PUCCH (e.g., PUCCH SCell). The cell may be an unlicensed cell. The cell may be an unlicensed cell, for example, operating in an unlicensed band. The cell may be a licensed cell. The cell may be a licensed cell, for example, operating in a licensed band. The cell may operate in a first frequency range (FR1). The FR1 may comprise frequency bands. The FR1 may, for example, comprise frequency bands below 6 GHz. The cell may operate in a second frequency range (FR2). The FR2 may comprise frequency bands. The FR2 may, for example, comprise frequency bands from 24 GHz to 52.6 GHz.

The wireless device may perform uplink transmissions. The wireless device may perform uplink transmissions via the cell in a first time and in a first frequency. The wireless device may perform uplink transmissions, for example, a PUSCH transmission, a PUCCH transmission, SRS, via the cell in a first time and in a first frequency. The wireless device may perform downlink receptions. The wireless device may perform downlink receptions via the cell in a second time and in a second frequency. The wireless device may perform downlink receptions, for example, a PDCCH reception or a PDSCH reception, via the cell in a second time and in a second frequency. The cell may operate in a time-division duplex (TDD) mode. In the TDD mode, the first frequency and the second frequency may be the same. In the TDD mode, the first time and the second time may be different. The cell may operate in a frequency-division duplex (FDD) mode. In the FDD mode, the first frequency and the second frequency may be different. In the FDD mode, the first time and the second time may be the same.

The wireless device may be in an RRC connected mode. The wireless device may be in an RRC idle mode. The wireless device may be in an RRC inactive mode. The cell may comprise a plurality of BWPs. The plurality of BWPs may comprise one or more uplink BWPs. The one or more uplink BWPs may comprise an uplink BWP of the cell. The plurality of BWPs may comprise one or more downlink BWPs. The one or more downlink BWPs may comprise a downlink BWP of the cell. A BWP of the plurality of BWPs may be in one of an active state and an inactive state.

The wireless device may activate a downlink BWP, of the one or more downlink BWPs, of the cell. The wireless device may activate an uplink BWP, of the one or more uplink BWPs, of the cell. The one or more configuration parameters may be for downlinks BWP of the one or more cells. The one or more configuration parameters may be for active downlinks BWP of the one or more cells. At least one configuration parameter, of the one or more configuration parameters, may be for the downlink BWP of the cell. The one or more configuration parameters may be for uplink BWPs of the cell. The one or more configuration parameters may be for active uplink BWPs of the cell. At least one configuration parameter, of the one or more configuration parameters, may be for the uplink BWP of the cell.

The wireless device may receive one or more configuration parameters indicating a plurality of coresets (e.g., at step 2530, as shown in FIG. 25B). The base station may send (e.g., transmit) one or more configuration parameters indicating a plurality of coresets (e.g., at step 2580, as shown in FIG. 25C). The one or more configuration parameters may indicate the plurality of coresets for the active downlink BWPs of the one or more cells. The one or more configuration parameters may indicate respective coreset(s) of the plurality of coresets for at least one active downlink BWP. The one or more configuration parameters may indicate respective coreset(s) of the plurality of coresets for at least one active downlink BWP, of the active downlink BWPs, of the one or more cells. The one or more configuration parameters may indicate respective coreset(s) of the plurality of coresets, for example, for each active downlink BWP, of the active downlink BWPs, of the one or more cells. The downlink BWPs, of the one or more cells, may comprise the plurality of coresets. The active downlink BWPs, of the one or more cells, may comprise the plurality of coresets. Referring to FIG. 25A, the plurality of coresets may comprise a first coreset (e.g., Coreset 1), a second coreset (e.g., Coreset 2), a third coreset (e.g., Coreset 3), a fourth coreset (e.g., Coreset 4). The one or more configuration parameters may indicate a plurality of coreset indexes/identifiers/indicators for the plurality of coresets. The one or more configuration parameters may indicate a plurality of coreset indexes/identifiers/indicators, for example, a plurality of coreset indexes/identifiers/indicators provided by a higher layer parameter ControlResourceSetId.. At least one coreset of the plurality of coresets (e.g., each coreset of the plurality of coresets) may be identified and/or indicated by a respective coreset index of the plurality of coreset indexes. A first coreset of the plurality of coresets may be identified by a first coreset index of the plurality of coreset indexes. A second coreset of the plurality of coresets may be identified by a second coreset index of the plurality of coreset indexes.

The one or more configuration parameters may indicate a plurality of search space sets. The one or more configuration parameters may indicate a plurality of search space sets, for example, for the downlink BWPs of the one or more cells. The one or more configuration parameters may indicate the plurality of search space sets, for example, by a higher layer parameter SearchSpace. The one or more configuration parameters may indicate a plurality of search space sets, for example, for the one or more cells (e.g., by a higher layer parameter SearchSpace). The one or more configuration parameters may indicate search space set indexes/identifiers. The one or more configuration parameters may indicate search space set indexes/identifiers for the plurality of search space sets. The one or more configuration parameters may indicate search space set indexes/identifiers, for example, provided by a higher layer parameter search-SpaceId. At least one search space set (e.g., each search space set), of the plurality of search space sets, may be identified by a respective search space set index of the search space set indexes. A first search space set of the plurality of search space sets may be identified by a first search space set index of the search space set indexes. A second search space set of the plurality of search space sets may be identified by a second search space set index of the search space set indexes.

The plurality of search space sets may be associated with the plurality of coresets. The plurality of search space sets may be linked to, mapped to, and/or correspond to the plurality of coresets. Respective search space set(s) of the plurality of search space sets may be associated with at least one coreset (e.g., each coreset) of the plurality of coresets. Respective search space set(s) of the plurality of search space sets may be linked to, mapped to, and/or correspond to at least one coreset (e.g. each coreset) of the plurality of coresets At least one search space set (e.g., each search space set), of the plurality of search space sets, may be associated with (or linked to or mapped to or correspond to) a respective coreset of the plurality of coresets. At least one search space set (e.g., each search space set), of the plurality of search space sets, may be linked to, mapped to, and/or correspond to a respective coreset of the plurality of coresets. A search space set, of the plurality of search space sets, may be associated with a coreset of the plurality of coresets. A search space set, of the plurality of search space sets, may be linked to, mapped to, and/or correspond to a coreset of the plurality of coresets. The one or more configuration parameters may indicate the coreset for the search space set. The one or more configuration parameters may indicate a coreset index of the coreset for the search space set. The one or more configuration parameters may indicate the coreset (or a coreset index of the coreset) for the search space set (e.g., provided by a higher layer parameter controlResourceSetId in the higher layer parameter SearchSpace). The association (or the linkage or the mapping) may be one-to-one. The linkage or the mapping may be one-to-one. The association being one-to-one may comprise the search space set associated with (or linked to) the coreset not being associated (or linked to) a second coreset that is different from the coreset. The association being one-to-one may comprise the search space set linked to the coreset not being linked to a second coreset that is different from the coreset. One or more search space sets may be associated with a coreset. Referring to the example shown in FIG. 25A, a first search space set and a second search space set may be associated with a first coreset (e.g., Coreset 1) of the plurality of coresets. A third search space set may be associated with a second coreset (e.g., Coreset 2) of the plurality of coresets. A fourth search space set and a fifth search space set may be associated with a third coreset (e.g., Coreset 3) of the plurality of coresets. A sixth search space set, a seventh search space set and an eight search space set may be associated with a fourth coreset (e.g., Coreset 4) of the plurality of coresets. The plurality of search space sets may comprise the first search space set, the second search space set, the third search space set, the fourth search space set, the fifth search space set, the sixth search space set, the seventh search space set, and the eight search space set.

The one or more configuration parameters may indicate the plurality of coreset indexes for the plurality of search space sets. The one or more configuration parameters may indicate the plurality of coreset indexes for the plurality of search space sets (e.g., provided by a higher layer parameter controlResourceSetId in the higher layer parameter SearchSpace). At least one search space set (e.g., each search space set), of the plurality of search space sets, may be associated with (or linked to or mapped to) a coreset. At least one search space set (e.g., each search space set), of the plurality of search space sets, may be associated with (or linked to or mapped to) a coreset, of the plurality of coresets, identified by a respective coreset index of the plurality of coreset indexes. The one or more configuration parameters may indicate the first coreset index of the first coreset for the first search space set. The one or more configuration parameters may indicate the first coreset index of the first coreset in a first coreset index field of the first search space set. The one or more configuration parameters may indicate the first coreset index of the first coreset in a first coreset index field (e.g., provided by a higher layer parameter controlResourceSetId in the higher layer parameter SearchSpace) of the first search space set. The first search space set may be associated with (or linked to) the first coreset. The first search space set may be associated with (or linked to) the first coreset, for example, based on the one or more configuration parameters indicating the first coreset index of the first coreset for the first search space set. The one or more configuration parameters may indicate the first coreset index of the first coreset for the second search space set. The one or more configuration parameters may indicate the first coreset index of the first coreset in a second coreset index field of the second search space set. The one or more configuration parameters may indicate the first coreset index of the first coreset in a second coreset index field (e.g., provided by a higher layer parameter controlResourceSetId in the higher layer parameter SearchSpace) of the second search space set. The second search space set may be associated with (or linked to) the first coreset. The second search space set may be associated with (or linked to) the first coreset, for example, based on the one or more configuration parameters indicating the first coreset index of the first coreset for the second search space set. The one or more configuration parameters may indicate the second coreset index of the second coreset for the first search space set. The first search space set may be associated with (or linked to) the second coreset. The first search space set may be associated with (or linked to) the second coreset, for example, based on the one or more configuration parameters indicating the second coreset index of the second coreset for the first search space set. The one or more configuration parameters may indicate the second coreset index of the second coreset for the second search space set. The second search space set may be associated with (or linked to) the second coreset. The second search space set may be associated with (or linked to) the second coreset, for example, based on the one or more configuration parameters indicating the second coreset index of the second coreset for the second search space set..

The wireless device may monitor PDCCH candidates. The wireless device may monitor a set of PDCCH candidates in one or more CORESETs for detecting one or more DCIs. The wireless device may receive, from the base station, the DCI (e.g., step 2570, as shown in FIG. 25B). The base station may send, to the wireless device, the DCI (e.g., step 2590, as shown in FIG. 25C). Monitoring may comprise the wireless device receiving and/or decoding one or more PDCCH candidates of the set of the PDCCH candidates according to the monitored DCI formats. Monitoring may comprise the wireless device receiving and decoding DCI content. Monitoring may comprise the wireless device receiving and/or decoding DCI content of one or more PDCCH candidates. The wireless device may monitor PDCCH candidates for a downlink control signal/channel (e.g., DCI, PDCCH, RS, GC-PDCCH, DMRS, etc.). The wireless device may monitor PDCCH candidates for a downlink control signal/channel, for example, in PDCCH monitoring occasions for the search space set associated with (or linked to) the coreset. The wireless device may monitor PDCCH candidates for a downlink control signal/channel, for example, based on the search space set being associated with (or linked to) the coreset. The wireless device may monitor PDCCH candidates, for a downlink control signal/channel (e.g., DCI, PDCCH, RS, GC-PDCCH, DMRS, etc.), in PDCCH monitoring occasions for the search space set associated with (or linked to) the coreset, for example, based on the search space set being associated with (or linked to) the coreset. The wireless device may monitor PDCCH candidates, for downlink control information (DCI). The wireless device may monitor PDCCH candidates, for DCI, for example, based on the search space set being associated with (or linked to) the coreset. The wireless device may monitor PDCCH candidates, for a DCI, in PDCCH monitoring occasions for the search space set in the coreset associated with (or linked to) the search space set, for example, based on the search space set being associated with (or linked to) the coreset. The wireless device may monitor, for DCI, a PDCCH for the search space set. The wireless device may monitor, for downlink control information (DCI), a PDCCH for the search space set, for example, in the coreset associated with (or linked to) the search space set. The wireless device may monitor, for downlink control information (DCI), a PDCCH for the search space set in the coreset associated with (or linked to) the search space set, for example, based on the search space set being associated with (or linked to) the coreset.

The wireless device may monitor the plurality of coresets. The wireless device may monitor the plurality of search space sets. The wireless device may monitor the plurality of search space sets associated with the plurality of coresets. The wireless device may monitor respective search space set(s), of the plurality of search space sets, associated with each coreset of the plurality of coresets. The wireless device may monitor the plurality of coresets, for example, based on a plurality of TCI states. The wireless device may monitor at least one coreset (e.g., each coreset), of the plurality of coresets, for example, based on a respective TCI state of the plurality of TCI states. Referring to the example in FIG. 25A, the wireless device may monitor the first coreset (e.g., Coreset 1), for example, based on a first TCI state (e.g., TCI state 1) and a second TCI state (e.g., TCI state 2). The wireless device may monitor the second coreset (e.g., Coreset 2), for example, based on a third TCI state (e.g., TCI state 3). The wireless device may monitor the third coreset (e.g., Coreset 3), for example, based on the second TCI state (e.g., TCI state 2). The wireless device may monitor the fourth coreset (e.g., Coreset 4), for example, based on the first TCI state (e.g., TCI state 1). The plurality of TCI states may comprise the first TCI state, the second TCI state, the third TCI state, and the fourth TCI state.

The wireless device may receive one or more activation commands. The wireless device may receive one or more activation commands, for example, the MAC-CE as shown in FIG. 24 The base station may send (e.g., transmit), to the wireless device, the one or more activation commands. The wireless device may receive one or more activation commands, for example, a TCI State Indication for wireless device-specific (e.g., UE-specific) PDCCH MAC CE. The wireless device may receive one or more activation commands, for example, an Enhanced TCI State Indication for wireless device-specific (e.g., UE-specific) PDCCH MAC CE. The wireless device may receive one or more activation commands indicating, activating, and/or updating, for the plurality of coresets, the plurality of TCI states. At least one activation command (e.g., each activation command), of the one or more activation commands, may indicate, activate, and/or update one or more TCI states of the plurality of TCI states. At least one activation command (e.g., each activation command), of the one or more activation commands, may indicate, activate, and/or update, for a respective coreset of the plurality of coresets, one or more TCI states of the plurality of TCI states. The wireless device may receive an indication to activate a coreset of the plurality of coresets with a plurality of TCI states (e.g., a first TCI state and a second TCI state). The base station may send (e.g., transmit) an indication to activate a coreset of the plurality of coresets with a plurality of TCI states (e.g., at step 2585, as shown in FIG. 25C). Referring to the example in FIG. 25A, the wireless device may receive a first activation command indicating, activating, and/or updating, for the first coreset (e.g., Coreset 1), at least two TCI states comprising the first TCI state (e.g., TCI state 1) and the second TCI state (e.g., TCI state 2). The wireless device may receive a second activation command indicating, activating, and/or updating, for the second coreset (e.g., Coreset 2), the third TCI state (e.g., TCI state 3). The wireless device may receive a third activation command indicating, activating, and/or updating, for the third coreset (e.g., Coreset 3), the second TCI state (e.g., TCI state 2). The wireless device may receive a fourth activation command indicating, activating, and/or updating, for the fourth coreset (e.g., Coreset 4), the first TCI state (e.g., TCI state 3). The one or more activation commands may comprise the first activation command, the second activation command, the third activation command, and the fourth activation command.

The plurality of TCI states may comprise, indicate, and/or be a plurality of antenna port quasi co-location (QCL) assumptions/properties/structures. At least one TCI state (e.g., each TCI state), of the plurality of TCI states, may comprise and/or indicate a respective antenna port QCL assumption/property/structure of the plurality of antenna port QCL assumptions/properties/structures. An antenna port QCL assumption/property/structure of a coreset may indicate, for the coreset, at least one of: channel characteristics, Doppler shift, Doppler spread, average delay, delay spread, and spatial receive filter. An antenna port QCL assumption/property/structure, of the plurality of antenna port QCL assumptions/properties/structures, of a coreset of the plurality of coresets may indicate, for the coreset, at least one of: channel characteristics, Doppler shift, Doppler spread, average delay, delay spread, and spatial receive filter. Referring to the example in FIG. 25A, the first TCI state may comprise, indicate, and/or be a first antenna port QCL assumption/property/structure. The second TCI state may comprise, indicate, and/or be a second antenna port QCL assumption/property/structure. The third TCI state may comprise, indicate, and/or be a third antenna port QCL assumption/property/structure. The plurality of antenna port QCL assumptions/properties/structures may comprise the first antenna port QCL assumption/property/structure, the second antenna port QCL assumption/property/structure, and the third antenna port QCL assumption/property/structure.

The wireless device may monitor a coreset based on a TCI state. Monitoring a coreset based on a TCI state may comprise the wireless device monitoring, for downlink control information (DCI), downlink control channels (e.g., PDCCH, PDCCH transmissions/receptions) in the coreset based on the TCI state. The wireless device monitoring the downlink control channels in the coreset based on the TCI state may, for example, comprise one or more DM-RS antenna ports of the downlink control channels in the coreset being quasi co-located with a reference signal. The wireless device monitoring the downlink control channels in the coreset based on the TCI state may, for example, comprise one or more DM-RS antenna ports of the downlink control channels in the coreset being quasi co-located with a reference signal (e.g., CSI-RS, SS/PBCH block) indicated by the TCI state. The one or more DM-RS antenna ports of the downlink control channels with and/or carrying the DCI in the coreset may be quasi co-located with the reference signal. The one or more DM-RS antenna ports of the downlink control channels in the coreset may be quasi co-located with the reference signal with respect to a quasi co-location type. The one or more DM-RS antenna ports of the downlink control channels in the coreset may be quasi co-located with the reference signal with respect to a quasi co-location type (e.g., QCL TypeA, QCL TypeD, QCL TypeC, and the like) indicated by the TCI state. The plurality of coresets may comprise the coreset. The plurality of TCI states may comprise the TCI state. Referring to the example in FIG. 25A, one or more first DM-RS antenna ports of downlink control channels (e.g., PDCCH, PDCCH transmissions/receptions) in the first coreset (e.g., Coreset 1) may be quasi co-located with a first reference signal indicated by the first TCI state. The one or more first DM-RS antenna ports of the downlink control channels (e.g., PDCCH, PDCCH transmissions/receptions) in the first coreset (e.g., Coreset 1) may be quasi co-located with a second reference signal indicated by the second TCI state.

One or more second DM-RS antenna ports of downlink control channels (e.g., PDCCH, PDCCH transmissions/receptions) in the second coreset (e.g., Coreset 2) may be quasi co-located with a third reference signal indicated by the third TCI state. One or more third DM-RS antenna ports of downlink control channels (e.g., PDCCH, PDCCH transmissions/receptions) in the third coreset (e.g., Coreset 3) may be quasi co-located with the second reference signal indicated by the second TCI state. One or more fourth DM-RS antenna ports of downlink control channels (e.g., PDCCH, PDCCH transmissions/receptions) in the fourth coreset (e.g., Coreset 4) may be quasi co-located with the first reference signal indicated by the first TCI state.

The wireless device may monitor, for downlink control information (DCI), downlink control channels in a coreset. The wireless device monitoring, for downlink control information (DCI), downlink control channels in a coreset may, for example, comprise monitoring, for the DCI, one or more PDCCH candidates in one or more PDCCH monitoring occasions. The wireless device monitoring, for downlink control information (DCI), downlink control channels in a coreset may, for example, comprise monitoring, for the DCI, one or more PDCCH candidates in one or more PDCCH monitoring occasions for/of one or more search space sets associated with the coreset. The wireless device may determine the one or more PDCCH monitoring occasions, of the one or more search space sets, based on one or more search space set configuration parameters. The wireless device may determine the one or more PDCCH monitoring occasions, of the one or more search space sets, based on one or more search space set configuration parameters (e.g., IE *SearchSpace*) of the one or more configuration parameters. The one or more search space set configuration parameters may indicate one or more PDCCH monitoring periodicities. The one or more search space set configuration parameters may indicate one or more PDCCH monitoring periodicities (e.g., monitoringSlotPeriodicityAndOffset) for the one or more search space sets. The PDCCH monitoring periodicities may comprise the one or more PDCCH monitoring periodicities. The one or more search space set configuration parameters may indicate PDCCH monitoring symbols. The one or more search space set configuration parameters may indicate PDCCH monitoring symbols (e.g., monitoringSymbolsWithinSlot) for the one or more search space sets. The plurality of coresets may comprise the coreset. The plurality of search space sets may comprise the one or more search space sets.

The plurality of coresets may overlap. The plurality of coresets may overlap, for example, in time. The plurality of coresets may overlap, for example, in at least one symbol (e.g., OFDM symbol). The plurality of coresets may overlap, for example, in one or more PDCCH monitoring occasions. The wireless device may monitor a plurality of PDCCH candidates. The wireless device may, for example, monitor a plurality of PDCCH candidates in the one or more (overlapping) PDCCH monitoring occasions in/of the plurality of coresets. The wireless device may monitor respective PDCCH candidate(s), of the plurality of PDCCH candidates, in the one or more (overlapping) PDCCH monitoring occasions. The wireless device may monitor respective PDCCH candidate(s), of the plurality of PDCCH candidates, in the one or more (overlapping) PDCCH monitoring occasions in/of at least one coreset (e.g., each coreset) of the plurality of coresets. Referring to the example in FIG. 25A, the wireless device may monitor one or more first PDCCH candidates in the one or more (overlapping) PDCCH monitoring occasions in/of the first coreset (e.g., Coreset 1). The wireless device may monitor one or more second PDCCH candidates in the one or more (overlapping) PDCCH monitoring occasions in/of the second coreset. The wireless device may monitor one or more third PDCCH candidates in the one or more (overlapping) PDCCH monitoring occasions in/of the third coreset. The wireless device may monitor one or more fourth PDCCH candidates in the one or more (overlapping) PDCCH monitoring occasions in/of the fourth coreset. The plurality of PDCCH candidates may comprise the one or more first PDCCH candidates, the one or more second PDCCH candidates, the one or more third PDCCH candidates, and the one or more fourth PDCCH candidates.

The wireless device may determine that a plurality of PDCCH candidates, monitored for a plurality of coresets, overlap. The wireless device may, for example, determine that a plurality of PDCCH candidates monitored for the plurality of coresets overlap in the one or more PDCCH monitoring occasions. The wireless device may determine that respective PDCCH candidate(s), monitored for at least one coreset, overlap in the one or more PDCCH monitoring occasions. The wireless device may determine that respective PDCCH candidate(s), of the plurality of PDCCH candidates, monitored for at least one coreset (e.g., each coreset) of the plurality of coresets overlap in the one or more PDCCH monitoring occasions. Referring to the example in FIG. 25A, one or more first PDCCH candidates monitored for the first coreset (e.g., Coreset 1), one or more second PDCCH candidates monitored for the second coreset (e.g., Coreset 2), one or more third PDCCH candidates monitored for the third coreset (e.g., Coreset 3), and one or more fourth PDCCH candidates monitored for the fourth coreset (e.g., Coreset 4) may overlap in the one or more PDCCH monitoring occasions. The plurality of PDCCH candidates may comprise the one or more first PDCCH candidates, the one or more second PDCCH candidates, the one or more third PDCCH candidates, and the one or more fourth PDCCH candidates.

The wireless device may monitor the plurality of PDCCH candidates in the one or more (overlapping) PDCCH monitoring occasions. The wireless device may monitor the plurality of PDCCH candidates in the one or more (overlapping) PDCCH monitoring occasions associated with the plurality of search space sets associated with the plurality of coresets. The wireless device may monitor the plurality of PDCCH candidates in the one or more (overlapping) PDCCH monitoring occasions of/in the plurality of search space sets associated with the plurality of coresets. The wireless device may monitor respective PDCCH candidate(s), of the plurality of PDCCH candidates, in the one or more (overlapping) PDCCH monitoring occasions of/in (or associated with) at least one search space set (e.g., each search space set) of the plurality of search space sets. Referring to the example in FIG. 25A, the wireless device may monitor the one or more first PDCCH candidates in the one or more (overlapping) PDCCH monitoring occasions in/of the first search space set and the second search space set associated with the first coreset (e.g., Coreset 1). The wireless device may monitor the one or more second PDCCH candidates in the one or more (overlapping) PDCCH monitoring occasions in/of the third search space set associated with the second coreset (e.g., Coreset 2). The wireless device may monitor the one or more third PDCCH candidates in the one or more (overlapping) PDCCH monitoring occasions in/of the fourth search space set and the fifth search space set associated with the third coreset (e.g., Coreset 3). The wireless device may monitor the one or more fourth PDCCH candidates in the one or more (overlapping) PDCCH monitoring occasions in/of the sixth search space set, the seventh search space set, and the eight search space set associated with the fourth coreset (e.g., Coreset 4).

The wireless device may determine that the plurality of PDCCH candidates, monitored for the plurality of search space sets that are associated with the plurality of coresets, overlap. The wireless device may, for example, determine that the plurality of PDCCH candidates monitored for the plurality of search space sets that are associated with the plurality of coresets overlap in the one or more PDCCH monitoring occasions. The wireless device may determine that respective PDCCH candidate(s), of the plurality of PDCCH candidates, monitored for at least one search space set (e.g., each search space set) of the plurality of search space sets overlap in the one or more PDCCH monitoring occasions. Referring to the example in FIG. 25A, one or more first PDCCH candidates monitored for the first search space set and the second search space set that are associated with the first coreset (e.g., Coreset 1), one or more second PDCCH candidates monitored for the third search space set that is associated with the second coreset (e.g., Coreset 2), one or more third PDCCH candidates monitored for the fourth search space set and the fifth search space set that are associated with the third coreset (e.g., Coreset 3), and one or more fourth PDCCH candidates monitored for the sixth search space set, the seventh search space set, and the eight search space set that are associated with the fourth coreset (e.g., Coreset 4) may overlap in the one or more PDCCH monitoring occasions. The plurality of PDCCH candidates may comprise the one or more first PDCCH candidates, the one or more second PDCCH candidates, the one or more third PDCCH candidates, and the one or more fourth PDCCH candidates.

The wireless device may select and/or determine a selected coreset among/of the plurality of coresets (e.g., at step 2540, as shown in FIG. 25B). The wireless device may select and/or determine the selected coreset among/of the plurality of coresets, for example, based on monitoring the plurality of PDCCH candidates. The wireless device may select and/or determine the selected coreset among/of the plurality of coresets, for example, based on monitoring the plurality of PDCCH candidates in the one or more (overlapping) PDCCH monitoring occasions in/of the plurality of coresets. The wireless device may select and/or determine the selected coreset among/of the plurality of coresets, for example, based on monitoring the plurality of PDCCH candidates in the one or more (overlapping) PDCCH monitoring occasions of/in (or associated with) the plurality of search space sets associated with the plurality of coresets. The wireless device may select and/or determine the selected coreset among/of the plurality of coresets, for example, based on the plurality of PDCCH candidates monitored for the plurality of coresets overlapping in the one or more PDCCH monitoring occasions. The wireless device may select and/or determine the selected coreset among/of the plurality of coresets, for example, based on the plurality of PDCCH candidates monitored for the plurality of search space sets that are associated with the plurality of coresets overlapping in the one or more PDCCH monitoring occasions.

A selected cell, of the one or more cells, may comprise the selected coreset. An active downlink BWP of a cell, of the one or more cells, may comprise the selected coreset. The wireless device may select and/or determine the selected coreset among/of the plurality of coresets. The wireless device may select and/or determine the selected coreset among/of the plurality of coresets, for example, based on a serving cell index of the selected cell. The wireless device may select and/or determine the selected coreset among/of the plurality of coresets, for example, based on a serving cell index of the selected cell being lowest among the one or more serving cell indexes/identifiers/indicators of the one or more cells. The one or more serving cell indexes/identifiers/indicators may comprise the serving cell index of the selected cell. The one or more cells may comprise, for example, a first cell and a second cell. A first serving cell index of the first cell may be, for example, lower than a second serving cell index of the second cell. The wireless device may select and/or determine the first cell, as the selected cell, for example, based on the first serving cell index of the first cell being lower than the second serving cell index of the second cell. The first cell may comprise the selected coreset. A second serving cell index of the second cell may be, for example, lower than a first serving cell index of the first cell. The wireless device may select and/or determine the second cell, as the selected cell, for example, based on the second serving cell index of the second cell being lower than the first serving cell index of the first cell. The second cell may comprise the selected coreset. The one or more serving cell indexes/identifiers/indicators may comprise the first serving cell index and the second serving cell index.

The wireless device may select and/or determine the selected coreset among/of the plurality of coresets. The wireless device may select and/or determine the selected coreset among/of the plurality of coresets, for example, based on a search space set index of a selected search space set. The wireless device may select and/or determine the selected coreset among/of the plurality of coresets, for example, based on a search space set index of a selected search space set associated with the selected coreset being lowest among the search space set indexes/identifiers of the plurality of search space sets associated with the plurality of coresets. The search space set indexes/identifiers of the plurality of search space sets may comprise the search space set index of the selected search space set.

Referring to the example in FIG. 25A, a second search space set index of the second search space set associated with the first coreset may be lowest among a first search space set index of the first search space set associated with the first coreset, the second search space set index of the second search space set associated with the first coreset, a third search space set index of the third search space set associated with the second coreset, a fourth search space set index of the fourth search space set associated with the third coreset, a fifth search space set index of the fifth search space set associated with the third coreset, a sixth search space set index of the sixth search space set associated with the fourth coreset, a seventh search space set index of the seventh search space set associated with the fourth coreset, and an eight search space set index of the eight search space set associated with the fourth coreset. The search space set indexes/identifiers may comprise the first search space set index, the second search space set index, the third search space set index, the fourth search space set index, the fifth search space set index, the sixth search space set index, the seventh search space set index, and the eight search space set index. The wireless device may select and/or determine the second search space set, as the selected search space set, for example, based on the second search space set index of the second search space set being the lowest.

Referring to the example in FIG. 25A, a third search space set index of the third search space set associated with the second coreset may be lowest among a first search space set index of the first search space set associated with the first coreset, a second search space set index of the second search space set associated with the first coreset, the third search space set index of the third search space set associated with the second coreset, a fourth search space set index of the fourth search space set associated with the third coreset, a fifth search space set index of the fifth search space set associated with the third coreset, a sixth search space set index of the sixth search space set associated with the fourth coreset, a seventh search space set index of the seventh search space set associated with the fourth coreset, and an eight search space set index of the eight search space set associated with the fourth coreset. The search space set indexes/identifiers may comprise the first search space set index, the second search space set index, the third search space set index, the fourth search space set index, the fifth search space set index, the sixth search space set index, the seventh search space set index, and the eight search space set index. The wireless device may select and/or determine the third search space set, as the selected search space set, for example, based on the third search space set index of the third search space set being the lowest.

The selected search space set may be a common search space (CSS) set. The selected search space set may be a user-specific search space (USS) set. At least one search space set of the plurality of search space sets may not be a CSS set.

The wireless device may monitor a coreset based on at least two TCI states. The wireless device may monitor the selected coreset based on at least two TCI states (e.g., at step 2550, as shown in FIG. 25B). The plurality of TCI states activated and/or configured for the plurality of coresets may comprise the at least two TCI states. The wireless device may monitor the selected coreset, for example, in one or more) PDCCH monitoring occasions. The wireless device may monitor the selected coreset, for example, in the one or more (overlapping) PDCCH monitoring occasions. The wireless device may monitor, in the one or more (overlapping) PDCCH monitoring occasions, the selected coreset, for example, based on selecting and/or determining the selected coreset among/of the plurality of coresets.

The at least two TCI states of a selected coreset may be different from a TCI state of a coreset of the plurality of coresets. The at least two TCI states of the selected coreset may be different from a TCI state of a coreset of the plurality of coresets. The selected coreset may be different from the coreset. The at least two TCI states of the selected coreset may be different from a TCI state activated and/or configured for a coreset of the plurality of coresets. The selected coreset may be different from the coreset. At least one TCI state (e.g., each TCI state), of the at least two TCI states, may be different from the TCI state of the coreset. The wireless device may not monitor the coreset in the one or more (overlapping) PDCCH monitoring occasions. The wireless device may not monitor the coreset in the one or more (overlapping) PDCCH monitoring occasions, for example, based on the at least two TCI states of the selected coreset being different from the TCI state of the coreset. The wireless device may not monitor the coreset in the one or more (overlapping) PDCCH monitoring occasions, for example, based on each TCI state of the at least two TCI states, of the selected coreset being different from the TCI state of the coreset.

Referring to the example in FIG. 25A, the selected coreset may be the first coreset (e.g., Coreset 1). The at least two TCI states of the selected coreset may be the first TCI state (e.g., TCI state 1) and the second TCI state (e.g., TCI state 2) of the first coreset (e.g., Coreset 1). The wireless device may not monitor the second coreset (e.g., Coreset 2). The wireless device may not monitor the second coreset (e.g., Coreset 2), for example, based on the third TCI state (e.g., TCI state 3) of the second coreset (e.g., Coreset 2) being different from the first TCI state (e.g., TCI state 1) of the first coreset. The wireless device may not monitor the second coreset (e.g., Coreset 2), for example, based on the third TCI state (e.g., TCI state 3) of the second coreset (e.g., Coreset 2) being different from the second TCI state (e.g., TCI state 2) of the first coreset (e.g., Coreset 1). The wireless device may not monitor, in the one or more (overlapping) PDCCH monitoring occasions, the second coreset.

At least one TCI state, of the at least two TCI states, of the selected coreset may be the same as a TCI state of a coreset of the plurality of coresets. At least one TCI state, of the at least two TCI states, of the selected coreset may be the same as a TCI state activated and/or configured for a coreset of the plurality of coresets. The selected coreset may be different from the coreset. The wireless device may monitor the coreset in the one or more (overlapping) PDCCH monitoring occasions. The wireless device may monitor the coreset in the one or more (overlapping) PDCCH monitoring occasions, for example, based on the at least one TCI state, of the at least two TCI states, being the same as the TCI state of the coreset (e.g., at step 2560, as shown in FIG. 25B). The wireless device may monitor the coreset, for example, based on the TCI state of the coreset. The wireless device may monitor, in the one or more (overlapping) PDCCH monitoring occasions, the coreset based on the TCI state of the coreset.

Referring to the example in FIG. 25A, the selected coreset may be the first coreset (e.g., Coreset 1). The at least two TCI states of the selected coreset may be the first TCI state (e.g., TCI state 1) and the second TCI state (e.g., TCI state 2) of the first coreset (e.g., Coreset 1). The wireless device may monitor the third coreset (e.g., Coreset 3), for example, based on the second TCI state (e.g., TCI state 2) of the third coreset (e.g., Coreset 3) being same as the second TCI state (e.g., TCI state 2) of the first coreset (e.g., Coreset 1). The wireless device may receive DCI from the base station via the third coreset (e.g., step 2570, as shown in FIG. 25B). The base station may send (e.g., transmit) DCI to the wireless device via the third coreset (e.g., step 2590, as shown in FIG. 25C). The wireless device may monitor, in the one or more (overlapping) PDCCH monitoring occasions, the third coreset. The wireless device may monitor, in the one or more (overlapping) PDCCH monitoring occasions, the third coreset based on the second TCI state (e.g., TCI state 2). The wireless device may monitor, in the one or more (overlapping) PDCCH monitoring occasions, the third coreset, for example, based on a TCI state of the third coreset being the same as at least one TCI state (e.g., TCI state 2) of the first coreset. The wireless device may monitor, in the one or more (overlapping) PDCCH monitoring occasions, the third coreset, for example, based on a TCI state activated and/or configured for the third coreset being the same as at least one TCI state (e.g., TCI state 2) of the first coreset. The wireless device may monitor the fourth coreset (e.g., Coreset 4), for example, based on the first TCI state (e.g., TCI state 1) of the fourth coreset (e.g., Coreset 4) being the same as the first TCI state (e.g., TCI state 1) of the first coreset (e.g., Coreset 1). The wireless device may monitor, in the one or more (overlapping) PDCCH monitoring occasions, the fourth coreset. The wireless device may monitor, in the one or more (overlapping) PDCCH monitoring occasions, the fourth coreset based on the first TCI state (e.g., TCI state 1). The wireless device may monitor, in the one or more (overlapping) PDCCH monitoring occasions, the fourth coreset, for example, based on a TCI state of the fourth coreset being same as at least one TCI state (e.g., TCI state 1) of the first coreset. The wireless device may monitor, in the one or more (overlapping) PDCCH monitoring occasions, the fourth coreset, for example, based on a TCI state of activated and/or configured for the fourth coreset being same as at least one TCI state (e.g., TCI state 1) of the first coreset.

The at least two TCI states of the selected coreset may be different from at least two TCI states of a coreset of the plurality of coresets. The at least two TCI states of the selected coreset may be different from at least two TCI states activated and/or configured for a coreset of the plurality of coresets. The selected coreset may be different from the coreset. Each TCI state of the at least two TCI states of the selected coreset may be different from each TCI state) of the at least two TCI states of the coreset. The wireless device may not monitor the coreset in the one or more (overlapping) PDCCH monitoring occasions. The wireless device may not monitor the coreset in the one or more (overlapping) PDCCH monitoring occasions, for example, based on the at least two TCI states of the selected coreset being different from the at least two TCI states of the coreset. The wireless device may not monitor the coreset in the one or more (overlapping) PDCCH monitoring occasions, for example, based on each TCI state of the at least two TCI states of the selected coreset being different from each TCI state of the at least two TCI states of the coreset.

The at least two TCI states of the selected coreset may be a first TCI state (e.g., TCI state 1) and a second TCI state (e.g., TCI state 2). The at least two TCI states of the coreset may be a third TCI state (e.g., TCI state 3) and a fourth TCI state (e.g., TCI state 4). The first TCI state may be different from the third TCI state. The first TCI state may be different from the fourth TCI state. The second TCI state may be different from the third TCI state. The second TCI state may be different from the fourth TCI state. The wireless device may not monitor the coreset, for example, based on the first TCI state of the selected coreset being different from the third TCI state and the fourth TCI state of the coreset. The wireless device may not monitor the coreset, for example, based on the second TCI state of the selected coreset being different from the third TCI state and the fourth TCI state of the coreset. The wireless device may not monitor, in the one or more (overlapping) PDCCH monitoring occasions, the coreset.

The at least two TCI states of the selected coreset may be the same as at least two TCI states of a coreset of the plurality of coresets. The at least two TCI states of the selected coreset may be the same as at least two TCI states activated and/or configured for a coreset of the plurality of coresets. The selected coreset may be different from the coreset. A first and/or second TCI state of the at least two TCI states of the selected coreset may be the same as a first or second TCI state of the at least two TCI states of the coreset. The wireless device may monitor the coreset in the one or more (overlapping) PDCCH monitoring occasions. The wireless device may monitor, in the one or more (overlapping) PDCCH monitoring occasions, the coreset. The wireless device may monitor, in the one or more (overlapping) PDCCH monitoring occasions, the coreset, for example, based on the at least two TCI states of the coreset. The wireless device may monitor, in the one or more (overlapping) PDCCH monitoring occasions, the coreset, for example, based on the at least two TCI states of the selected coreset. The wireless device may monitor the coreset in the one or more (overlapping) PDCCH monitoring occasions, for example, based on the at least two TCI states of the selected coreset being the same as the at least two TCI states of the coreset. The wireless device may monitor the coreset in the one or more (overlapping) PDCCH monitoring occasions, for example, based on the first or second TCI state of the at least two TCI states of the selected coreset being the same as the first or second TCI state of the at least two TCI states of the coreset.

The at least two TCI states of the selected coreset may be a first TCI state (e.g., TCI state 1) and a second TCI state (e.g., TCI state 2). The at least two TCI states of the coreset may be a third TCI state (e.g., TCI state 3) and a fourth TCI state (e.g., TCI state 4). The first TCI state may be the same as the third TCI state. The second TCI state may be the same as the fourth TCI state. The wireless device may monitor the coreset, for example, based on the first TCI state of the selected coreset being the same as the third TCI state of the coreset. The wireless device may monitor the coreset, for example, based on the second TCI state of the selected coreset being the same as the fourth TCI state of the coreset. The wireless device may monitor, in the one or more (overlapping) PDCCH monitoring occasions, the coreset. The wireless device may monitor, in the one or more (overlapping) PDCCH monitoring occasions, the coreset. The wireless device may monitor, in the one or more (overlapping) PDCCH monitoring occasions, the coreset, for example, based on the third TCI state. The wireless device may monitor, in the one or more (overlapping) PDCCH monitoring occasions, the coreset, for example, based on the first TCI state. The wireless device may monitor, in the one or more (overlapping) PDCCH monitoring occasions, the coreset based on the fourth TCI state. The wireless device may monitor, in the one or more (overlapping) PDCCH monitoring occasions, the coreset based on the second TCI state.

At least one TCI state, of the at least two TCI states, of the selected coreset may be the same as at least one TCI state, of the at least two TCI states, of a coreset of the plurality of coresets. At least one TCI state, of the at least two TCI states, of the selected coreset may be the same as at least one TCI state, of the at least two TCI states, activated/configured for a coreset of the plurality of coresets. The selected coreset may be different from the coreset. A TCI state, of the at least two TCI states, of the selected coreset may be the same as a TCI state, of the at least two TCI states, of the coreset. The wireless device may monitor the coreset in the one or more (overlapping) PDCCH monitoring occasions. The wireless device may monitor the coreset in the one or more (overlapping) PDCCH monitoring occasions, for example, based on the at least one TCI state, of the at least two TCI states, of the selected coreset being same as the at least one TCI state, of the at least two TCI states, of the coreset. The wireless device may monitor the coreset in the one or more (overlapping) PDCCH monitoring occasions, for example, based on the TCI state, of the at least two TCI states, of the selected coreset being the same as the TCI state, of the at least two TCI states, of the coreset.

The at least two TCI states of the selected coreset may be a first TCI state (e.g., TCI state 1) and a second TCI state (e.g., TCI state 2). The at least two TCI states of the coreset may be a third TCI state (e.g., TCI state 3) and a fourth TCI state (e.g., TCI state 4). The first TCI state may be the same as the third TCI state. The first TCI state may be different from the fourth TCI state. The second TCI state may be different from the third TCI state. The second TCI state may be different from the fourth TCI state. The wireless device may monitor the coreset, for example, based on the first TCI state of the selected coreset being the same as the third TCI state of the coreset. The wireless device may monitor the coreset, for example, based on the third TCI state. The wireless device may monitor the coreset, for example, based on the first TCI state. The wireless device may monitor, in the one or more (overlapping) PDCCH monitoring occasions, the coreset based on the third TCI state. The wireless device may not monitor the coreset based on the fourth TCI state, for example, in response to the fourth TCI state being different from the first TCI state and the second TCI state of the selected coreset. The wireless device may not monitor the coreset based on the fourth TCI state, for example, in the one or more (overlapping) PDCCH monitoring occasions.

A first TCI state may indicate, comprise, and/or have a first reference signal. A first TCI state may indicate, comprise, and/or have a first reference signal, for example, CSI-RS, SS/PBCH block, SRS, and the like. The one or more configuration parameters may indicate, for the first TCI state, a first reference signal index/indicator/identifier indicating and/or identifying the first reference signal. The first TCI state may comprise the first reference signal index/indicator/identifier indicating and/or identifying the first reference signal. The first TCI state may indicate, comprise, and/or have a first quasi co-location type. The first TCI state may indicate, comprise, and/or have a first quasi co-location type, for example, QCL-TypeD, QCL-TypeA, QCL-TypeB, QCL-TypeC, and the like. The first TCI state may indicate, comprise, and/or have, for the first reference signal, the first quasi co-location type. The plurality of TCI states may comprise the first TCI state. The first TCI state may comprise, indicate, and/or be a first antenna port QCL assumption/property/structure.

A second TCI state may indicate, comprise, and/or have a second reference signal (e.g., CSI-RS, SS/PBCH block, SRS, and the like). The one or more configuration parameters may indicate, for the second TCI state, a second reference signal index/indicator/identifier indicating and/or identifying the second reference signal. The second TCI state may comprise the second reference signal index/indicator/identifier indicating and/or identifying the second reference signal. The second TCI state may indicate, comprise, and/or have a second quasi co-location type (e.g., QCL-TypeD, QCL-TypeA, QCL-TypeB, QCL-TypeC, and the like). The second TCI state may indicate, comprise, and/or have, for the second reference signal, the second quasi co-location type. The plurality of TCI states may comprise the second TCI state. The second TCI state may comprise, indicate, and/or be a second antenna port QCL assumption/property/structure.

The first TCI state and the second TCI state may be, for example, the same. The first TCI state and the second TCI state being the same may comprise, for example, the first reference signal indicated by the first TCI state and the second reference signal indicated by the second TCI state being the same. The first TCI state and the second TCI state being the same may comprise, for example, the first reference signal indicated by (or configured in or in) the first TCI state being the same as the second reference signal indicated by (or configured in or in) the second TCI state. The first TCI state and the second TCI state being the same may comprise, for example, the first reference signal indicated by (or configured in or in) the first TCI state being quasi co-located with the second reference signal indicated by (or configured in or in) the second TCI state. The first TCI state and the second TCI state being the same may comprise, for example, the first reference signal in or configured in the first TCI state being quasi co-located with the second reference signal in or configured in the second TCI state. The first TCI state and the second TCI state being the same may comprise, for example, the first reference signal being quasi co-located with the second reference signal with respect to a quasi co-location type (e.g., QCL TypeD). The first TCI state and the second TCI state being the same may comprise, for example, the first antenna port QCL assumption/property/structure and the second antenna port QCL assumption/property/structure being the same. The first TCI state and the second TCI state being the same may comprise, for example, the first antenna port QCL assumption/property/structure and the second antenna port QCL assumption/property/structure being the same, for example, with respect to a quasi co-location type (e.g., QCL TypeD). The first TCI state and the second TCI state being the same may comprise, for example, the first TCI state and the second TCI state having the same QCL-Type D assumption/property/structure. The first TCI state and the second TCI state being the same may comprise, for example, the first TCI state and the second TCI state being associated with the same QCL-Type D assumption/property/structure. The first TCI state and the second TCI state being the same may comprise, for example, the first reference signal being quasi co-located with a third reference signal (e.g., SS/PBCH block). The first TCI state and the second TCI state being the same may comprise, for example, the first reference signal being quasi co-located with a third reference signal (e.g., SS/PBCH block), for example a third reference signal that is quasi co-located with the second reference signal. The first TCI state and the second TCI state being the same may comprise, for example, the first reference signal being quasi co-located with a third reference signal (e.g., SS/PBCH block) that is quasi co-located with the second reference signal, for example, with respect to a quasi co-location type (e.g., QCL TypeD). The first reference signal may be quasi co-located with the third reference signal with respect to the quasi co-location type (e.g., QCL TypeD).

The first TCI state and the second TCI state may be, for example, different. The first TCI state and the second TCI state being different may comprise, for example, the first reference signal indicated by the first TCI state and the second reference signal indicated by the second TCI state being different. The first TCI state and the second TCI state being different may comprise, for example, the first reference signal in or configured in the first TCI state and the second reference signal in or configured in the second TCI state being different. The first TCI state and the second TCI state being different may comprise, for example, the first reference signal indicated by the first TCI state not being quasi co-located with the second reference signal indicated by (or configured in or in) the second TCI state. The first TCI state and the second TCI state being different may comprise, for example, the first reference signal in or configured in the first TCI state not being quasi co-located with the second reference signal indicated by (or configured in or in) the second TCI state. The first TCI state and the second TCI state being different may comprise, for example, the first reference signal not being quasi co-located with the second reference signal. The first TCI state and the second TCI state being different may comprise, for example, the first reference signal not being quasi co-located with the second reference signal, for example, with respect to a quasi co-location type (e.g., QCL TypeD). The first TCI state and the second TCI state being different may comprise, for example, the first antenna port QCL assumption/property/structure and the second antenna port QCL assumption/property/structure being different. The first TCI state and the second TCI state being different may comprise, for example, the first antenna port QCL assumption/property/structure and the second antenna port QCL assumption/property/structure being different. The first TCI state and the second TCI state being different may comprise, for example, the first antenna port QCL assumption/property/structure and the second antenna port QCL assumption/property/structure being different with respect to a quasi co-location type (e.g., QCL TypeD). The first TCI state and the second TCI state being different may comprise, for example, the first TCI state and the second TCI state having different QCL-Type D assumptions/properties/structures. The first TCI state and the second TCI state being different may comprise, for example, the first TCI state and the second TCI state being associated with different QCL-Type D assumptions/properties/structures. The first TCI state and the second TCI state being different may comprise, for example, the first reference signal being quasi co-located with a third reference signal (e.g., SS/PBCH block) that is not quasi co-located with the second reference signal. The first TCI state and the second TCI state being different may comprise, for example, the first reference signal being quasi co-located with a third reference signal (e.g., SS/PBCH block) that is not quasi co-located with the second reference signal with respect to a quasi co-location type (e.g., QCL TypeD). The first reference signal may be quasi co-located with the third reference signal with respect to the quasi co-location type (e.g., QCL TypeD).

In at least some technologies, the wireless device may receive downlink control information (DCI), which may schedule and/or trigger, for example, a downlink signal (e.g., transport block, PDSCH transmission) of a cell. The wireless device may receive the downlink signal based on a TCI state indicated by the DCI, for example, if a time offset between the DCI and the downlink signal is greater than a threshold. The wireless device may receive the downlink signal based on a default TCI state, for example, if the time offset between the DCI and the downlink signal is less than the threshold. In some technologies, the wireless device may receive the downlink signal using a default TCI state. The downlink signal may overlap with a coreset activated with the first TCI state. The wireless device may prioritize the first TCI state of the coreset (over the default TCI state of the associated with the downlink signal), for example, if downlink signal overlap with the coreset, and the default TCI state of the downlink signal is different from the first TCI state associated with the coreset. The wireless device may prioritize the first TCI state of the coreset, for example, by ignoring, dropping, and/or not receiving the downlink signal. The wireless device may prioritize the first TCI state of the coreset, for example, by receiving the downlink signal using the first TCI state of the coreset.

In at least some technologies, the wireless device may monitor a coreset based on at least two TCI states. The wireless device monitoring the coreset based on at least two TCI states may comprise monitoring a first coreset based on a first TCI state, of the at least two TCI states, and monitoring a second coreset based on a second TCI state of the at least two TCI states a coreset. In some technologies, a coreset may be activated with a first TCI state and a second TCI state. The wireless device monitoring the coreset based on at least two TCI states may comprise monitoring the coreset based on the first TCI state and the second TCI state. The wireless device may compare the default TCI state of the downlink signal with only one of the first TCI state and the second TCI state of the coreset(s). However, comparing the default TCI state of the downlink signal with only a first TCI state, of the at least two TCI states, of the coreset(s) may not be efficient, for example, if the first TCI of the coreset(s) is different than the default TCI state of the downlink signal, but the second TCI of the coreset(s) is the same as the default TCI state of the downlink signal. The inability of the wireless device to compare the default TCI state of the downlink signal to each of the activated TCI states of the coreset(s), resulting in imprecise determinations of when to prioritize the coreset over the downlink signal, may decrease the reliability and performance of the whole communication system.

By implementing at least some technologies, beam management may be enhanced by increasing the precision with which the wireless device determines when to prioritize data reception via the coreset(s), rather than using the downlink signal. A wireless device may receive the downlink signal (e.g., transport block, PDSCH transmission) based on one or more TCI states, of the at least two TCI states, of one or more coresets, for example, if the default TCI state used to receive the downlink signal is: (i) different from the two TCI states activated for a single coreset, or (ii) is different from the two coresets linked for frequency domain multiplexing (FDM) repetition, and if the downlink signal overlaps with the coreset(s). Monitoring each of the at least two TCI states associated with the coreset(s), rather than just a first TCI state, when determining whether to prioritize the coreset may decrease the likelihood of the wireless device prioritizing the coreset(s) over a downlink signal and increase the likelihood that the downlink signal may be received. This receiving of the downlink signal using one of the TCI states of the coreset(s) may result in increased reliability, robustness and efficiency within the system.

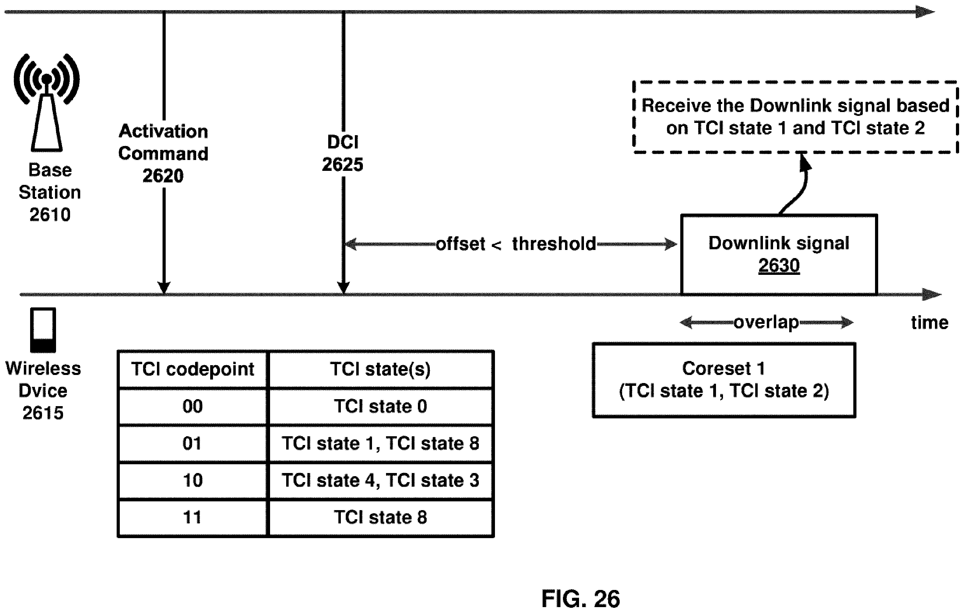

FIG. 26 shows an example of a default TCI state. A wireless device (e.g., wireless device 2615) may receive one or more configuration parameters. A base station (e.g., base station 2610) may send (e.g., transmit), to the wireless device, one or more configuration parameters. The one or more configuration parameters may indicate a plurality of TCI states. The one or more configuration parameters may indicate a plurality of TCI states, for example, TCI states provided by a higher layer parameter tci-StatesToAddModList in PDSCH_Config. The one or more configuration parameters may indicate a plurality of TCI states, for example, provided by a higher layer parameter tci-StatesToAddModList in PUSCH_Config. The one or more configuration parameters may indicate a plurality of TCI states, for example, provided by a higher layer parameter tci-StatesToAddModList in PUCCH_Config. The wireless device (e.g., wireless device 2615) may receive an activation command (e.g., as shown in FIG. 26). The base station may send (e.g., transmit) an activation command activating, selecting, indicating, and/or updating a first plurality of TCI states of the plurality of TCI states. The wireless device may receive an activation command activating, selecting, indicating, and/or updating a first plurality of TCI states of the plurality of TCI states. The wireless device may receive an activation command, for example, TCI States Activation/Deactivation for wireless device-specific (e.g., UE-specific) PDSCH MAC CE. The wireless device may receive an activation command, for example, TCI States Activation/Deactivation for wireless device-specific (e.g., UE-specific) PUSCH MAC CE. The wireless device may receive an activation command, for example, a MAC-CE. The wireless device may receive an activation command, for example, DCI. The wireless device may receive an activation command, for example, a control command and the like. The wireless device may receive an activation command, for example, an activation command (e.g., activation command 2620 as shown in FIG. 26. activating, selecting, indicating, and/or updating a first plurality of TCI states of the plurality of TCI states. The wireless device may map the first plurality of TCI states to one or more TCI codepoints. The mapping the first plurality of TCI states to the one or more TCI codepoints may comprise grouping the first plurality of TCI states into/in the one or more TCI codepoints. At least one TCI codepoint (e.g., each TCI codepoint) of the one or more TCI codepoints may comprise and/or indicate at least one TCI state of the first plurality of TCI states. A TCI field in downlink control information (DCI) may be equal to a TCI codepoint of the one or more TCI codepoints. Referring to the example in FIG. 26, the first plurality of TCI states are TCI state 0, TCI state 1, TCI state 8, TCI state 4, and TCI state 3. The one or more TCI codepoints are TCI codepoint 00, TCI codepoint 01, TCI codepoint 10, and TCI codepoint 11. The TCI codepoint 00 may indicate TCI state 0, the TCI codepoint 01 may indicate TCI state 1 and TCI state 8, the TCI codepoint 10 may indicate TCI state 4 and TCI state 3, and the TCI codepoint 11 may indicate TCI state 8. The TCI codepoint 00 may be mapped to TCI state 0, the TCI codepoint 01 may be mapped to TCI state 1 and TCI state 8, the TCI codepoint 10 may be mapped to TCI state 4 and TCI state 3, and the TCI codepoint 11 may be mapped to TCI state 8.

The plurality of TCI states may be for a PDSCH of/for the cell. The plurality of TCI states may be for decoding PDSCH of/for the cell. The one or more configuration parameters may indicate the plurality of TCI states for decoding PDSCH of/for the downlink BWP of the cell. The first plurality of TCI states may be for (decoding) PDSCH of/for the cell. The activation command may indicate, activate, update, and/or select the first plurality of TCI states for decoding PDSCH of/for the downlink BWP of the cell. The plurality of TCI states may be for transmission of an uplink signal. The plurality of TCI states may be for transmission of an uplink signal, for example, UCI, PUSCH, SRS, PUCCH, transport block, SR, CSI, and/or HARQ-ACK. The plurality of TCI states may be for transmission of an uplink signal of/for/on/via an uplink resource of the cell. The uplink resource of the cell may comprise, for example, a PUSCH resource, a PUCCH resource, or an SRS resource. The one or more configuration parameters may indicate the plurality of TCI states for transmission of the uplink signal of/for/on/via the uplink resource of the uplink BWP of the cell. The first plurality of TCI states may be for transmission of an uplink signal (e.g., UCI, PUSCH, SRS, PUCCH, transport block, SR, CSI, HARQ-ACK) of/for/on/via an uplink resource (e.g., PUSCH resource, PUCCH resource, SRS resource) of the cell. The activation command may indicate, activate, update, and/or select the first plurality of TCI states for transmission of the uplink signal of/for/on/via the uplink resource of the uplink BWP of the cell. The plurality of uplink resources may comprise the uplink resource. At least one TCI state of the plurality of TCI states may indicate, contain, and/or comprise a quasi co-location type D (QCL-TypeD).

The wireless device may receive downlink control information (e.g., DCI 2625, as shown in FIG. 26). The base station may send (e.g., transmit), to the wireless device, DCI. The DCI may schedule and/or trigger, for example, a downlink signal of a cell. The DCI may schedule and/or trigger, for example, a downlink signal (e.g., downlink signal 2630, as shown in FIG. 26). The one or more cells may comprise the cell. The DCI may schedule and/or trigger transmission and/or reception of the downlink signal. The downlink signal, for example, may be a transport block (e.g., PDSCH transmission). The downlink signal, for example, may be an aperiodic CSI-RS.

A time offset (e.g., the offset as shown in FIG. 26) between the DCI and the downlink signal (e.g., downlink signal 2630) may be less than a threshold. The time offset between the DCI and the downlink signal may be less than a threshold, for example, a timeDurationForQCL or a beamSwitchTiming. The time offset between the DCI and the downlink signal may, for example, comprise and/or be a time offset between a reception of the DCI and the downlink signal. The time offset between the DCI and the downlink signal may, for example, comprise and/or be a time offset between a last/ending/latest symbol of the DCI and a first/starting/earliest symbol of the downlink signal. The time offset between the DCI and the downlink signal may, for example, comprise and/or be a time offset between a last/ending/latest symbol of a PDCCH carrying the DCI and a first/starting/earliest symbol of the downlink signal. The time offset between the DCI and the downlink signal may, for example, comprise and/or be a time offset between a reception of the DCI and a first/starting/earliest transmission occasion of the downlink signal. The base station may send (e.g., transmit) the downlink signal in a plurality of transmission occasions (e.g., PDSCH transmission occasions). The base station may repeat transmission of the downlink signal in a plurality of transmission occasions (e.g., PDSCH transmission occasions). The plurality of transmission occasions may comprise the first/starting/earliest transmission occasion. The first/starting/earliest transmission occasion may be the first/starting/earliest transmission occasion, among the plurality of transmission occasions, occurring in time. A first/starting/earliest time/symbol of the first/starting/earliest transmission occasion may be the first/earliest among starting times/symbols of the plurality of transmission occasions.

The base station may require/need one or more wireless device radio access capability information of the wireless device. The base station may need additional wireless device radio access capability information of the wireless device. The base station may initiate a procedure to request the one or more wireless device radio access capability information from the wireless device. The base station may initiate a procedure to request the one or more wireless device radio access capability information, for example, by an information element UECapabilityEnquiry. The base station may send (e.g., transmit) a downlink message indicating a request of the one or more wireless device radio access capability information from the wireless device. The wireless device may use an information element (e.g.,

UECapabilityInformation message) to transfer the one or more wireless device radio access capability information requested by the base station. The wireless device may send (e.g., transmit) an uplink signal indicating the one or more wireless device radio access capability information requested by the base station. The base station may request, from the wireless device, an uplink signal indicating the one or more wireless device radio access capability information. The base station may receive, from the wireless device, an uplink signal indicating the one or more wireless device radio access capability information. The wireless device may send (e.g., transmit) an uplink signal, for example, wireless device capability information, indicating the one or more wireless device radio access capability information requested by the base station. The wireless device may provide and/or indicate the threshold in FeatureSetDownlink indicating a set of features that the wireless device supports. The threshold may comprise, for example, timeDurationForQCL. The threshold may comprise, for example, beamSwitchTiming. The wireless device may send (e.g., transmit) a wireless device capability information indicating the threshold. The base station may receive, from the wireless device, a wireless device capability information indicating the threshold.

The one or more configuration parameters may not comprise a higher layer parameter trs-info for a CSI-RS resource set (e.g., *NZP-CSI-RS-ResourceSet*) comprising the downlink signal (e.g., aperiodic CSI-RS or aperiodic CSI-RS resource).

A value of the threshold reported by the wireless device may be at least one of: {14, 28, 48} symbols. The wireless device may report the value of the threshold in wireless device capability information. The one or more configuration parameters may not comprise a beam switch timing enabler (e.g., enableBeamSwitchTiming). The threshold may be equal to the value of the threshold reported by the wireless device. The threshold may be equal to the value of the threshold reported by the wireless device, for example, if the value of the threshold reported by the wireless device is at least one of: {14, 28, 48} symbols. The threshold may be equal to the value of the threshold reported by the wireless device. The threshold may be equal to the value of the threshold reported by the wireless device, for example, if the one or more configuration parameters do not comprise the beam switch timing enabler. The wireless device may report a value of the threshold comprising at least one of: {224, 336} symbols. The wireless device may report a threshold value that is at least one of: {224, 336} symbols. The wireless device may report a threshold value that is at least one of: {224, 336} symbols, for example, if the threshold is equal to 48 symbols.

The threshold may comprise and/or indicate a minimum number of OFDM symbols. The threshold may comprise and/or indicate a minimum number of OFDM symbols required by the wireless device to perform a PDCCH reception with the DCI. The threshold may comprise and/or indicate a minimum number of OFDM symbols required by the wireless device to apply a spatial QCL information (e.g., TCI-State) received in (or indicated by) the DCI for a processing of the downlink signal scheduled by the DCI. The threshold may comprise and/or indicate a minimum number of OFDM symbols required by the wireless device to perform a PDCCH reception with the DCI and to apply a spatial QCL information (e.g., TCI-State) received in (or indicated by) the DCI for a processing of the downlink signal scheduled by the DCI. The wireless device may require the minimum number of OFDM symbols between the PDCCH reception and the processing of the downlink signal to apply the spatial QCL information, indicated by the DCI, to the downlink signal. The threshold may comprise and/or indicate a minimum number of OFDM symbols between the DCI triggering of the downlink signal (e.g., aperiodic CSI-RS) and transmission/reception of the downlink signal. The number of OFDM symbols is measured from the last/ending/latest symbol of (or containing) the DCI to the first/starting/earliest symbol of the downlink signal.

The wireless device may determine, for reception and/or measurement of the downlink signal, a TCI state. The wireless device may determine, for reception and/or measurement of the downlink signal, a TCI state of a selected coreset of the plurality of coresets. The wireless device may determine, for reception and/or measurement of the downlink signal, the TCI state of the selected coreset, for example, based on the time offset between the DCI and the downlink signal. The wireless device may determine, for reception and/or measurement of the downlink signal, the TCI state of the selected coreset, for example, based on the time offset between the DCI and the downlink signal being less than the threshold. The wireless device may determine, for reception and/or measurement of the downlink signal, the TCI state of the selected coreset, for example, based on the at least one TCI state of the plurality of TCI states indicating, containing, and/or comprising the QCL-TypeD.

The wireless device may receive, for example, an activation command (e.g., control command, DCI, RRC, TCI State Indication for wireless device-specific (e.g., UE-specific) PDCCH, and the like) indicating, updating, and/or activating the TCI state for the selected coreset. The base station may send (e.g., transmit) to the wireless device, for example, an activation command (e.g., control command, DCI, RRC, TCI State Indication for wireless device-specific (e.g., UE-specific) PDCCH, and the like) indicating, updating, and/or activating the TCI state for the selected coreset. The one or more configuration parameters may, for example, indicate the TCI state for the selected coreset. The plurality of coreset indexes, of the plurality of coresets, may comprise a coreset index of the selected coreset. The one or more configuration parameters may indicate, for the selected coreset, the coreset index. The selected coreset may be identified and/or indicated by the coreset index. The coreset index of the selected coreset may be lowest among the plurality of coreset indexes of the plurality of coresets. The coreset index of the selected coreset may be highest among the plurality of coreset indexes of the plurality of coresets. The selected coreset may be identified and/or indicated by the coreset index that is lowest among the plurality of coreset indexes of the plurality of coresets. The selected coreset may be identified and/or indicated by the coreset index that is highest among the plurality of coreset indexes of the plurality of coresets. The wireless device may determine, for the reception of the downlink signal, the TCI state of the selected coreset. The wireless device may determine, for the reception of the downlink signal, the TCI state of the selected coreset, for example, based on (e.g., in response to) the coreset index of the selected coreset being lowest among the plurality of coreset indexes of the plurality of coresets. The wireless device may determine, for the reception of the downlink signal, the TCI state of the selected coreset, for example, based on (e.g., in response to) the coreset index of the selected coreset being highest among the plurality of coreset indexes of the plurality of coresets. The TCI state of the selected coreset may be a default TCI state for the reception of the downlink signal

The wireless device may monitor the plurality of coresets. The wireless device may monitor the plurality of coresets, for example, in the last/latest/current time slot. The wireless device may monitor, in the last/latest/current time slot, the plurality of search space sets associated with the plurality of coresets. The wireless device may monitor the selected coreset in the last/latest/current time slot. The downlink signal may overlap with a coreset. The downlink signal may overlap with a coreset, for example, Coreset 1 as shown in FIG. 25A and FIG. 26. The plurality of coresets may comprise the coreset. A second cell, different from the cell, may comprise the coreset. The one or more cells may comprise the second cell. The downlink signal may overlap with the coreset, for example, in at least one symbol.

The wireless device may monitor a coreset. The wireless device may monitor the coreset (e.g., Coreset 1 as shown in FIG. 26), for example, based on at least two TCI states. The at least two TCI states may comprise a first TCI state and a second TCI state. The at least two TCI states may comprise a first TCI state (e.g., TCI state 1 as shown in FIG. 25A and FIG. 26) and a second TCI state (e.g., TCI state 2 as shown in FIG. 25A and FIG. 26). The wireless device may receive a first activation command. The wireless device may receive a first activation command (e.g., MAC-CE, DCI) indicating, activating and/or updating, for the coreset (e.g., Coreset 1), the at least two TCI states. The TCI state of the selected coreset may be different from the at least two TCI states of the coreset. The TCI state of the selected coreset may be different from each TCI state of the at least two TCI states of the coreset. The TCI state of the selected coreset may be different from the first TCI state and the second TCI state. A quasi co-location typeD of DMRS (e.g., PDSCH DMRS) of the downlink signal may be different from a quasi co-location typeD of DMRS (e.g., PDDCH DMRS) of the coreset.

The wireless device may prioritize PDCCH reception via/on/in the coreset. The wireless device may prioritize PDCCH reception via/on/in the coreset over a reception of the downlink signal that overlaps with the coreset. The wireless device may prioritize PDCCH reception via/on/in the coreset, for example, based on the TCI state of the selected coreset being different from the at least two TCI states of the coreset. The wireless device may prioritize PDCCH reception via/on/in the coreset, for example, based on the TCI state of the selected coreset being different from each TCI state, of the at least two TCI states, of the coreset.

The one or more configuration parameters may comprise an enabling parameter. The one or more configuration parameters may comprise an enabling parameter (e.g., enableTwoDefaultTCI-States). At least one TCI codepoint, of the one or more TCI codepoints, may indicate at least two TCI states. At least one TCI codepoint, of the one or more TCI codepoints, may indicate at least two different TCI states. The wireless device may determine, for reception and/or measurement of the downlink signal, at least two default TCI states. The wireless device may determine the at least two default TCI states, for example, based on the one or more configuration parameters comprising the enabling parameter. The wireless device may determine the at least two default TCI states, for example, based on the enabling parameter being present in the one or more configuration parameters. The wireless device may determine the at least two default TCI states, for example, based on a TCI codepoint. The wireless device may determine the at least two default TCI states, for example, based on the at least one TCI codepoint, of the one or more TCI codepoints, indicating the at least two (different) TCI states.

The wireless device may determine, for reception/measurement of the downlink signal, the at least two default TCI states. The wireless device may determine, for reception/measurement of the downlink signal, the at least two default TCI states, for example, based on a time offset. The wireless device may determine, for reception/measurement of the downlink signal, the at least two default TCI states, for example, based on the time offset between the DCI and the downlink signal being less than the threshold. The wireless device may determine, for reception and/or measurement of the downlink signal, the at least two default TCI states, for example, based on the at least one TCI state of the plurality of TCI states indicating, containing, and/or comprising the QCL-TypeD. The wireless device may determine, for reception and/or measurement of the downlink signal, the at least two default TCI states, for example, based on the enabling parameter being present in the one or more configuration parameters. The wireless device may determine, for reception and/or measurement of the downlink signal, the at least two default TCI states, for example, based on a TCI codepoint. The wireless device may determine, for reception and/or measurement of the downlink signal, the at least two default TCI states, for example, based on the at least one TCI codepoint, of the one or more TCI codepoints, indicating the at least two (different) TCI states. The at least two default TCI states may comprise a first default TCI state and a second default TCI state.

The at least two default TCI states may be indicated by a selected TCI codepoint. The at least two default TCI states may be indicated by a selected TCI codepoint that is lowest among the at least one TCI codepoint indicating the at least two (different) TCI states. The one or more TCI codepoints may comprise the selected TCI codepoint. The at least one TCI codepoint may comprise the selected TCI codepoint. The at least two default TCI states may be indicated by a lowest TCI codepoint among the at least one TCI codepoint indicating the at least two (different) TCI states. Referring to the example in FIG. 26, the at least one TCI codepoint, indicating at least two TCI states, are TCI codepoint 01 indicating TCI state 1 and TCI state 8, and TCI codepoint 10 indicating TCI state 4 and TCI state 3. The selected TCI codepoint may be the TCI codepoint 01. The selected TCI codepoint may be the TCI codepoint 01, for example, based on the TCI codepoint 01 being lowest among the TCI codepoint 01 and the TCI codepoint 10 (e.g., 01 < 10). The at least two default TCI states may be a first default TCI state (e.g., TCI state 1) and a second default TCI state (e.g., TCI state 8) indicated by the TCI codepoint 01. The at least two default TCI states may be a first default TCI state (e.g., TCI state 1) and a second default TCI state (e.g., TCI state 8) indicated by the TCI codepoint 01, for example, based on the TCI codepoint 01 being lowest among the TCI codepoint 01 and the TCI codepoint 10.

The downlink signal may overlap with a coreset. The downlink signal may overlap with a coreset (e.g., Coreset 1 as shown in FIG. 25A and FIG. 26). The plurality of coresets may comprise the coreset. A second cell different from the cell may comprise the coreset. The one or more cells may comprise the second cell. The downlink signal may overlap with the coreset, for example, in at least one symbol.

The wireless device may monitor the coreset. The wireless device may monitor the coreset (e.g., Coreset 1 as shown in FIG. 26). The wireless device may monitor the coreset, for example, based on at least two TCI states. The at least two TCI states may comprise a first TCI state (e.g., TCI state 1 as shown in FIG. 25A and FIG. 26) and a second TCI state (e.g., TCI state 2 in as shown FIG. 25A and FIG. 26). The wireless device may receive a first activation command (e.g., MAC-CE, DCI) indicating, activating, and/or updating, for the coreset (e.g., Coreset 1), the at least two TCI states. The wireless device may monitor, for downlink control information (DCI) or PDCCH repetition, the coreset based on the at least two TCI states. The wireless device may monitor, for a first repetition of downlink control information (DCI), downlink control channels in the coreset based on the first TCI state of the at least two TCI states. The wireless device may monitor, for a second repetition of the DCI, the downlink control channels in the coreset based on the second TCI state of the at least two TCI states. The DCI or PDCCH repetition may be, for example, single frequency network (SFN) based DCI/PDCCH repetition, space division multiplexing based DCI/PDCCH repetition, or code division multiplexing (CDM) based DCI/PDCCH repetition.

The at least two default TCI states may be different from the at least two TCI states of the coreset. Each default TCI state of the at least two default TCI states may be different from each TCI state of the at least two TCI states of the coreset. The wireless device may prioritize the coreset. The wireless device may prioritize PDCCH reception via/on/in the coreset. The wireless device may prioritize the PDCCH reception via/on/in the coreset over a reception of the downlink signal. The wireless device may prioritize the PDCCH reception via/on/in the coreset over a reception of the downlink signal that overlaps with the coreset. The wireless device may prioritize PDCCH reception via/on/in the coreset, for example, based on the at least two default TCI states being different from the at least two TCI states of the coreset. The wireless device may prioritize PDCCH reception via/on/in the coreset, for example, based on at least one default TCI state (e.g., each default TCI state) of the at least two default TCI states being different from at least one TCI state (e.g., each TCI state) of the at least two TCI states of the coreset. The wireless device may prioritize the PDCCH reception via/on/in the coreset, for example, in the (overlapped) at least one symbol. The wireless device may monitor, in the (overlapped) at least one symbol, the coreset based on the at least two TCI states. The wireless device may monitor, in the (overlapped) at least one symbol, the coreset based on the at least two TCI states, for example, based on (e.g., in response to) the prioritizing the PDCCH reception via/on/in the coreset. The base station may send (e.g., transmit), in the (overlapped) at least one symbol and to the wireless device, the downlink signal. The wireless device may receive, in the (overlapped) at least one symbol, the downlink signal based on the at least two TCI states. The wireless device may receive, in the (overlapped) at least one symbol, the downlink signal based on the at least two TCI states, for example, based on (e.g., in response to) the prioritizing the PDCCH reception via/on/in the coreset.

The at least two default TCI states may be a first default TCI state (e.g., TCI state 1) and a second default TCI state (e.g., TCI state 2). The at least two TCI states of the coreset may be a third TCI state (e.g., TCI state 3) and a fourth TCI state (e.g., TCI state 4). The first default TCI state may be different from the third TCI state. The first default TCI state may be different from the fourth TCI state. The second default TCI state may be different from the third TCI state. The second default TCI state may be different from the fourth TCI state. The wireless device may prioritize PDCCH reception via/on/in the coreset. The wireless device may prioritize PDCCH reception via/on/in the coreset, for example, based on the first default TCI state being different from the third TCI state and the fourth TCI state of the coreset. The wireless device may prioritize PDCCH reception via/on/in the coreset, for example, based on the second default TCI state being different from the third TCI state and the fourth TCI state of the coreset. The wireless device may receive and/or measure the downlink signal. The wireless device may receive and/or measure the downlink signal, for example, based on the third TCI state (e.g., TCI state 3) and the fourth TCI state (e.g., TCI state 4) of the coreset, for example, based on the prioritizing the PDCCH reception via/on/in the coreset.

The at least two default TCI states may be the same as at least two TCI states of the coreset. The at least two default TCI states may be the same as at least two TCI states activated and/or configured for the coreset. A first and/or second default TCI state of the at least two TCI states may be the same as a first/second TCI state, of the at least two TCI states, of the coreset. The wireless device may monitor, in the (overlapped) at least one symbol, the coreset. The wireless device may monitor, in the (overlapped) at least one symbol, the coreset, for example, based on the at least two TCI states. The wireless device may receive and/or measure the downlink signal. The wireless device may receive and/or measure the downlink signal, for example, based on the at least two default TCI states. The wireless device may receive and/or measure the downlink signal based on the at least two default TCI states, for example, based on the at least two default TCI states being the same as the at least two TCI states of the coreset.

The at least two default TCI states may be a first default TCI state (e.g., TCI state 1) and a second default TCI state (e.g., TCI state 2). The at least two TCI states of the coreset may be a third TCI state (e.g., TCI state 1) and a fourth TCI state (e.g., TCI state 2). The first default TCI state may be same as the third TCI state. The second default TCI state may be same as the fourth TCI state. The wireless device may monitor, in the (overlapped) at least one symbol, the coreset. The wireless device may monitor, in the (overlapped) at least one symbol, the coreset, for example, based on the third TCI state and the fourth TCI state. The wireless device may receive, in the (overlapped) at least one symbol, the downlink signal, for example, based on the first default TCI state and the second default TCI state.

At least one default TCI state, of the at least two default TCI states, may be the same as at least one TCI state, of the at least two TCI states, of the coreset. A default TCI state, of the at least two default TCI states, may be the same as a TCI state, of the at least two TCI states, of the coreset. The wireless device may prioritize PDCCH reception via/on/in the coreset. The wireless device may prioritize the PDCCH reception via/on/in the coreset, for example, based on the at least one default TCI state. The wireless device may prioritize the PDCCH reception via/on/in the coreset, for example, based on the at least one default TCI state, of the at least two default TCI states, being the same as the at least one TCI state, of the at least two TCI states, of the coreset. The wireless device may prioritize the PDCCH reception via/on/in the coreset. The wireless device may prioritize the PDCCH reception via/on/in the coreset, for example, based on the default TCI state, of the at least two default TCI states, being the same as the TCI state, of the at least two TCI states, of the coreset.

At least one default TCI state, of the at least two default TCI states, may be different from the at least two TCI states of the coreset. The at least one default TCI state, of the at least two default TCI states, may be different from each TCI state, of the at least two TCI states, of the coreset. The wireless device may prioritize PDCCH reception via/on/in the coreset. The wireless device may prioritize the PDCCH reception via/on/in the coreset, for example, based on the at least one default TCI state, of the at least two default TCI states, being different from the at least two TCI states of the coreset. The wireless device may prioritize the PDCCH reception via/on/in the coreset, for example, based on the at least one default TCI state, of the at least two default TCI states, being different from each TCI state, of the at least two TCI states, of the coreset. The wireless device may prioritize the PDCCH reception via/on/in the coreset, for example, in the (overlapped) at least one symbol. The wireless device may monitor, in the (overlapped) at least one symbol, the coreset. The wireless device may prioritize the PDCCH reception via/on/in the coreset, for example, based on the at least two TCI states. The wireless device may monitor, in the (overlapped) at least one symbol, the coreset based on the at least two TCI states, for example, based on (e.g., in response to) the prioritizing the PDCCH reception via/on/in the coreset. The wireless device may receive, in the (overlapped) at least one symbol, the downlink signal. The wireless device may receive, in the (overlapped) at least one symbol, the downlink signal, for example, based on the at least two TCI states. The wireless device may receive, in the (overlapped) at least one symbol, the downlink signal based on the at least two TCI states, for example, based on (e.g., in response to) the prioritizing the PDCCH reception via/on/in the coreset.

Referring to the example in FIG. 26, the at least two default TCI states may be a first default TCI state (e.g., TCI state 1) and a second default TCI state (e.g., TCI state 8). The at least two TCI states of the coreset may be a third TCI state (e.g., TCI state 1) and a fourth TCI state (e.g., TCI state 2). The first default TCI state may be the same as the third TCI state. The second default TCI state may be different from the third TCI state. The second default TCI state may be different from the fourth TCI state. The wireless device may prioritize PDCCH reception via/on/in the coreset. The wireless device may prioritize PDCCH reception via/on/in the coreset, for example, based on the second default TCI state being different from the third TCI state and the fourth TCI state of the coreset. The wireless device may monitor the coreset. The wireless device may monitor the coreset, for example, based on the third TCI state (e.g., TCI state 1) and the fourth TCI state (e.g., TCI state 2). The wireless device may monitor the coreset based on the third TCI state (e.g., TCI state 1) and the fourth TCI state (e.g., TCI state 2), for example, based on (e.g., in response to) the prioritizing the PDCCH reception via/on/in the coreset. The wireless device may receive the downlink signal. The wireless device may receive the downlink signal, for example, based on the third TCI state (e.g., TCI state 1) and the fourth TCI state (e.g., TCI state 2) of the coreset. The wireless device may receive the downlink signal based on the third TCI state (e.g., TCI state 1) and the fourth TCI state (e.g., TCI state 2) of the coreset, for example, in the (overlapped) at least one symbol. The wireless device may receive the downlink signal based on the third TCI state (e.g., TCI state 1) and the fourth TCI state (e.g., TCI state 2) of the coreset, for example, based on (e.g., in response to) the prioritizing the PDCCH reception via/on/in the coreset. The wireless device may receive the downlink signal, for example, based on the first default TCI state (e.g., TCI state 1) and the fourth TCI state (e.g., TCI state 2) of the coreset. The wireless device may receive the downlink signal based on the first default TCI state (e.g., TCI state 1) and the fourth TCI state (e.g., TCI state 2) of the coreset, for example, in the (overlapped) at least one symbol. The wireless device may receive the downlink signal based on the first default TCI state (e.g., TCI state 1) and the fourth TCI state (e.g., TCI state 2) of the coreset, for example, based on (e.g., in response to) the prioritizing the PDCCH reception via/on/in the coreset.

Prioritizing a coreset may comprise, for example, prioritizing the coreset over a reception of a downlink signal (e.g., PDSCH, aperiodic CSI-RS) that overlaps with the coreset. Prioritizing a PDCCH reception in the coreset may comprise, for example, prioritizing the PDCCH reception via/on/in the coreset over a reception of a downlink signal (e.g., PDSCH, aperiodic CSI-RS) that overlaps with the coreset. Prioritizing a coreset may comprise, for example, dropping reception of a downlink signal that overlaps with the coreset. Prioritizing a PDCCH reception in the coreset may comprise, for example, dropping reception of a downlink signal that overlaps with the coreset. Prioritizing a coreset may comprise, for example, ignoring reception of a downlink signal that overlaps with the coreset. Prioritizing a PDCCH reception in the coreset may comprise, for example, ignoring reception of a downlink signal that overlaps with the coreset. Prioritizing a coreset may comprise, for example, not receiving and/or measuring a downlink signal that overlaps with the coreset. Prioritizing a PDCCH reception in the coreset may comprise, for example, not receiving and/or measuring a downlink signal that overlaps with the coreset. Prioritizing a coreset may comprise, for example, keep monitoring the coreset in at least one symbol that overlaps with a downlink signal. Prioritizing a PDCCH reception in the coreset may comprise, for example, keep monitoring the coreset in at least one symbol that overlaps with a downlink signal. Prioritizing a coreset may comprise, for example, keep monitoring, for downlink control information (DCI), the coreset in at least one symbol that overlaps with a downlink signal. Prioritizing a PDCCH reception in the coreset may comprise, for example, keep monitoring, for downlink control information (DCI), the coreset in at least one symbol that overlaps with a downlink signal. Prioritizing a coreset (may comprise keep receiving, via the coreset, downlink control information (DCI) in at least one symbol that overlaps with a downlink signal. Prioritizing a PDCCH reception in the coreset may comprise keep receiving, via the coreset, downlink control information (DCI) in at least one symbol that overlaps with a downlink signal.

Prioritizing a coreset may comprise, for example, receiving a downlink signal that overlaps with the coreset, based on one or more TCI states of the coreset. Prioritizing a a PDCCH reception in the coreset may comprise, for example, receiving a downlink signal, that overlaps with the coreset, based on one or more TCI states of the coreset. The wireless device may receive the downlink signal .The wireless device may receive the downlink signal, for example, based on the one or more TCI states of the coreset. The wireless device may receive the downlink signal based on the at least two TCI states. The wireless device may receive the downlink signal based on the at least two TCI states, for example, if the one or more TCI states are at least two TCI states.

The wireless device may receive a downlink signal based on a TCI state. The wireless device receiving a downlink signal based on a TCI state may comprise, for example, at least one DMRS port (or DMRS antenna port) of the downlink signal being quasi co-located with a reference signal (e.g., CSI-RS, SS/PBCH block, SRS, and the like) indicated by the TCI state. The at least one DMRS port of the downlink signal may be quasi co-located with the reference signal indicated by the TCI state. The at least one DMRS port of the downlink signal may be quasi co-located with the reference signal indicated by the TCI state, for example, with respect to a quasi co-location type (e.g., QCL TypeD, QCL TypeA, QCL TypeB, QCL TypeC, and the like) indicated by the TCI state.

The wireless device may receive a downlink signal based on a first TCI state and a second TCI state. At least one first DMRS port of the downlink signal may be quasi co-located with a first reference signal (e.g., CSI-RS, SS/PBCH block, SRS, and the like) indicated by the first TCI state. At least one first DMRS antenna port of the downlink signal may be quasi co-located with a first reference signal (e.g., CSI-RS, SS/PBCH block, SRS, and the like) indicated by the first TCI state. The at least one first DMRS port of the downlink signal may be quasi co-located with the first reference signal indicated by the first TCI state. The at least one first DMRS port of the downlink signal may be quasi co-located with the first reference signal indicated by the first TCI state, for example, with respect to a first quasi co-location type (e.g., QCL TypeD, QCL TypeA, QCL TypeB, QCL TypeC, and the like) indicated by the first TCI state. At least one second DMRS port of the downlink signal may be quasi co-located with a second reference signal (e.g., CSI-RS, SS/PBCH block, SRS, and the like) indicated by the second TCI state. At least one second DMRS antenna port of the downlink signal may be quasi co-located with a second reference signal (e.g., CSI-RS, SS/PBCH block, SRS, and the like) indicated by the second TCI state. The at least one second DMRS port of the downlink signal may be quasi co-located with the second reference signal indicated by the second TCI state. The at least one second DMRS port of the downlink signal may be quasi co-located with the second reference signal indicated by the second TCI state, for example, with respect to a second quasi co-location type (e.g., QCL TypeD, QCL TypeA, QCL TypeB, QCL TypeC, and the like) indicated by the second TCI state.

The wireless device may receive a downlink signal based on a TCI state. The wireless device receiving a downlink signal based on a TCI state may comprise, for example, receiving the downlink signal with and/or using a spatial domain receiving filter and/or beam that is determined based on the TCI state. The wireless device may determine the spatial domain receiving filter and/or beam based on a reference signal indicated by the TCI state. The wireless device may determine the spatial domain receiving filter and/or beam based on a reference signal, for example, CSI-RS, SS/PBCH block, SRS, and the like. The spatial domain receiving filter and/or beam may be the same as, for example, a spatial domain receiving filter/beam used to receive the reference signal. The spatial domain receiving filter and/or beam may be substantially the same as, for example, a spatial domain receiving filter/beam used to receive the reference signal. The spatial domain receiving filter and/or beam may be the same as, for example, a spatial domain transmitting filter/beam used to send (e.g., transmit) the reference signal. The spatial domain receiving filter and/or beam may be substantially the same as, for example, a spatial domain transmitting filter/beam used to send (e.g., transmit) the reference signal

The wireless device may receive a downlink signal based on a first TCI state and a second TCI state. The wireless device may receive the downlink signal with and/or using a first spatial domain receiving filter and/or beam. The wireless device may receive one or more first layers/streams of the downlink signal with and/or using a first spatial domain receiving filter and/or beam. The wireless device may receive the downlink signal (or one or more first layers/streams of the downlink signal), for example, with and/or using a first spatial domain receiving filter and/or beam that is determined based on the first TCI state. The wireless device may determine the first spatial domain receiving filter and/or beam based on a first reference signal (e.g., CSI-RS, SS/PBCH block, SRS, and the like) indicated by the first TCI state. The first spatial domain receiving filter and/or beam may be the same (or substantially the same) as, for example, a spatial domain receiving filter/beam used to receive the first reference signal. The first spatial domain receiving filter and/or beam may be the same (or substantially the same) as, for example, a spatial domain transmitting filter and/or beam used to send (e.g., transmit) the first reference signal. The wireless device may receive the downlink signal with and/or using a second spatial domain receiving filter/beam. The wireless device may receive one or more second layers/streams of the downlink signal with and/or using a second spatial domain receiving filter/beam. The wireless device may receive the downlink signal (or one or more second layers/streams of the downlink signal), for example, with and/or using a second spatial domain receiving filter/beam that is determined based on the second TCI state. The wireless device may determine the second spatial domain receiving filter and/or beam. The wireless device may determine the second spatial domain receiving filter and/or beam, for example, based on a second reference signal (e.g., CSI-RS, SS/PBCH block, SRS, and the like) indicated by the second TCI state. The second spatial domain receiving filter and/or beam may be the same (or substantially the same) as, for example, a spatial domain receiving filter and/or beam used to receive the second reference signal. The second spatial domain receiving filter and/or beam may be the same (or substantially the same) as, for example, a spatial domain transmitting filter/beam used to send (e.g., transmit) the second reference signal.

The wireless device may receive a downlink signal based on a TCI state. The wireless device receiving a downlink signal based on a TCI state may comprise, for example, measuring the downlink signal based on a reference signal indicated by the TCI state. The wireless device may measure and/or assess the downlink signal (e.g., aperiodic CSI-RS) based on a reference signal. The wireless device may measure and/or assess the downlink signal (e.g., aperiodic CSI-RS) based on the reference signal indicated by the TCI state. The wireless device may measure, determine, and/or assess a radio link quality (e.g., L1-RSRP, L3-RSRP, SINR, SNR, BLER) of the downlink signal. The wireless device may measure, determine, and/or assess a radio link quality of the downlink signal, for example, based on the reference signal indicated by the TCI state. The wireless device may measure a radio link quality of the reference signal to determine the radio link quality of the downlink signal. The wireless device may measure, determine, and/or assess the radio link of the downlink signal, for example, based on the radio link quality of the reference signal indicated by the TCI state.

The wireless device may monitor a coreset based on at least two TCI states. The wireless device may monitor, for example, each search space set of the coreset using at least two TCI states. The wireless device monitoring a coreset using at least two TCI states may comprise monitoring a first coreset based on a first TCI state, of the at least two TCI states, and monitoring a second coreset based on a second TCI state of the at least two TCI states. The wireless device may receive a first activation command (e.g., MAC-CE, DCI) indicating, activating, and/or updating, for the first coreset, the first TCI state. The wireless device may monitor, for downlink control information (DCI) repetition, the first coreset based on first TCI state. The wireless device may monitor, for PDCCH repetition, the first coreset based on first TCI state. The wireless device may receive a second activation command (e.g., MAC-CE, DCI) indicating, activating, and/or updating, for the second coreset, the second TCI state. The wireless device may monitor, for DCI repetition or PDCCH repetition, the first coreset based on the first TCI state. The wireless device may monitor, for DCI repetition or PDCCH repetition, the second coreset based on the second TCI state. The wireless device may monitor, for a first repetition of downlink control information (DCI), downlink control channels in the first coreset. The wireless device may monitor, for a first repetition of DCI, downlink control channels in the first coreset, for example, based on the first TCI state. The wireless device may monitor, for a second repetition of the DCI, downlink control channels in the second coreset. The wireless device may monitor, for a second repetition of the DCI, downlink control channels in the second coreset, for example, based on the second TCI state. The DCI repetition or the PDCCH repetition may be, for example, frequency domain multiplexing (FDM) based DCI repetition or PDCCH repetition.

Aspects of the disclosure discussed concerning FIG. 26, for example, a coreset with at least two TCI states overlapping with a downlink signal with at least two default TCI states, may be used for the first coreset with the first TCI state and the second coreset with the second TCI state overlapping with the downlink signal with the at least two default TCI states. The first coreset with the first TCI state may overlap, in at least one symbol, with the downlink signal with the at least two default TCI states. The second coreset with the second TCI state may overlap, in the at least one symbol, with the downlink signal with the at least two default TCI states. The first coreset with the first TCI state may overlap, in the at least one symbol, with the second coreset with the second TCI state. The first coreset and the second coreset may be used for FDM-based DCI repetition or PDCCH repetition. The first coreset and the second coreset may occur (or be configured) in the same time slot/symbols. The first coreset and the second coreset may be configured in the same time slot/symbols. The first coreset and the second coreset may occur (or be configured) in different frequency PRBs. The first coreset and the second coreset may be configured in different frequency PRBs.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising determining, by a wireless device, a first control resource set (coreset) among a plurality of coresets that are overlapping in time.

Clause 2. The method of clause 1, wherein the first coreset is activated with a first transmission configuration indicator (TCI) state and a second TCI state.

Clause 3. The method of any of clauses 1-2, further comprising receiving, via a second coreset of the plurality of coresets, downlink control information (DCI).

Clause 4. The method of clause 3, wherein the receiving via the second coreset is during monitoring, of the second coreset, based on the second coreset being activated with the at least one of: the first TCI state of the first coreset; or the second TCI state of the first coreset.

Clause 5. The method of any of clauses 3-4, monitoring, for the DCI and based on the second coreset being activated with at least one of the first TCI state or the second TCI state, downlink control channels in the second coreset.

Clause 6. The method of any of clauses 1-5, further comprising receiving one or more configuration parameters indicating the plurality of coresets.

Clause 7. The method of any of clauses 1-6, further comprising receiving one or more configuration parameters for one or more cells.

Clause 8. The method of clause 7, wherein one or more active downlink bandwidth parts (BWPs) of the one or more cells comprise the plurality of coresets.

Clause 9. The method of clause 8, further comprising associating each active downlink BWP, of the one or more active downlink BWPs, with a respective cell of the one or more cells.

Clause 10. The method of any of clauses 2-9, further comprising receiving an activation command indicating activation of the first TCI state and the second TCI state for the first coreset.

Clause 11. The method of any of clauses 2-10, further comprising receiving one or more configuration parameters for one or more cells.

Clause 12. The method of any of clauses 1-11, wherein the determining the first coreset among the plurality of coresets is based on the first coreset being associated with a cell index that is lowest among one or more cell indexes of the one or more cells.

Clause 13. The method of any of clauses 2-12, further comprising receiving one or more configuration parameters for one or more cells, wherein the determining the first coreset among the plurality of coresets is based on the one or more configuration parameters indicating, for the first coreset, a search space set.

Clause 14. The method of clause 13, wherein the search space set comprises a search space set index that is lowest among a plurality of search space set indexes of a plurality of search space sets associated with the plurality of coresets.

Clause 15. The method of any of clauses 2-14, further comprising receiving an activation command indicating activation of one of the first TCI state for the second coreset; the second TCI state for the second coreset; or the first TCI state and the second TCI state for the second coreset.

Clause 16. The method of any of clauses 2-15, further comprising dropping, via a third coreset of the plurality of coresets, a second DCI based on the third coreset being activated with a TCI state that is different from: the first TCI state; and the second TCI state.

Clause 17. The method of any of clauses 2-16, further comprising monitoring downlink control channel transmission in the first coreset based on the first TCI state and the second TCI state.

Clause 18. The method of clause 17, wherein the monitoring comprises monitoring at least one demodulation reference signal (DM-RS) of the downlink control channel transmission.

Clause 19. The method of clause 18, wherein the downlink control channel transmission is quasi co-located with a first reference signal indicated by a first TCI state of the first coreset; and a second reference signal indicated by a second TCI state of the first coreset.

Clause 20. The method of any of clauses 2-19, further comprising monitoring one or more coresets, among the plurality of coresets, that are activated with one or each of the first TCI state and the second TCI state.

Clause 21. The method of any of clauses 5-20, wherein the receiving the DCI is based on the monitoring, for the DCI, the downlink control channels in the second coreset.

Clause 22. The method of any of clauses 6-21, wherein the one or more configuration parameters indicate the plurality of coresets for one or more cells.

Clause 23. The method of clause 22, wherein each cell of the one or more cells comprises one or more respective coresets of the plurality of coresets.

Clause 24. The method of clause 23, wherein a first cell of the one or more cells comprises the first coreset.

Clause 25. The method of any of clauses 1-25, wherein the plurality of coresets overlap in at least one physical downlink control channel (PDCCH) monitoring occasion.

Clause 26. The method of any of clauses 13-14, wherein the search space set is a user-specific search space set.

Clause 27. The method of clause 23, wherein each search space set of the plurality of search space sets is a user-specific search space set.

Clause 28. The method of any of clauses 3-27, wherein the receiving the DCI comprises receiving the DCI in the overlapped time.

Clause 29. The method of any of clauses 5-28, wherein the monitoring, for the DCI, the downlink control channels comprises monitoring the downlink control channels in the overlapped time.

Clause 30. The method of any of clauses 5-29, wherein the receiving is based on the first coreset being activated with the first TCI state and the second TCI state.

Clause 31. A wireless device comprising: one or more processors; and memory storing instructions that, when executed by the one or more processors, cause the wireless device to perform the method of any one of clauses 1 to 30.

Clause 32. A system comprising: a wireless device configured to perform the method of any one of clauses 1 to 30; and a computing device configured to send the DCI.

Clause 33. A computer-readable medium storing instructions that, when executed, cause performance of the method of any one of clauses 1 to 30.

Clause 34. A method comprising: receiving, by a wireless device, an activation command indicating activation of a plurality of transmission configuration indicator (TCI) states for a first control resource set (coreset) among a plurality of coresets that are overlapping in time.

Clause 35. The method of clause 34, further comprising: based on a second coreset, of the plurality of coresets, being activated with one or all of the plurality of TCI states of the first coreset, receiving downlink control information (DCI) via the second coreset.

Clause 36. The method of any of clauses 34-35, further comprising monitoring downlink control channel transmission in the first coreset based on the plurality of TCI states of the first coreset.

Clause 37. The method of clause 36, wherein the monitoring comprises monitoring at least one demodulation reference signal (DM-RS) of the downlink control channel transmission.

Clause 38. The method of clause 37, wherein the downlink control channel transmission is quasi co-located with a first reference signal indicated by a first TCI state of the first coreset; and a second reference signal indicated by a second TCI state of the first coreset.

Clause 39. The method of any of clauses 34-38, wherein the plurality of coresets overlap in at least one symbol.

Clause 40. The method of any of clauses 34-39, further comprising determining the first coreset among the plurality of coresets based on the plurality of coresets overlapping in time.

Clause 41. The method of any of clauses 34-40, further comprising receiving one or more configuration parameters for one or more cells.

Clause 42. The method of clause 41, wherein one or more active downlink bandwidth parts (BWPs) of the one or more cells comprise the plurality of coresets.

Clause 43. The method of clause 42, further comprising associating each active downlink BWP, of the one or more active downlink BWPs, with a respective cell of the one or more cells.

Clause 44. The method of any of clauses 34-43, further comprising not receiving, via a third coreset of the plurality coresets, a second DCI based on the third coreset being activated with two TCI states that are different from: a first TCI state of the first coreset; and a second TCI state of the first coreset.

Clause 45. The method of any of clauses 34-44, further comprising monitoring one or more coresets, among the plurality of coresets, that are activated with one or all of the TCI states of the first coreset.

Clause 46. A wireless device comprising: one or more processors; and memory storing instructions that, when executed by the one or more processors, cause the wireless device to perform the method of any one of clauses 34 to 45.

Clause 47. A system comprising: a wireless device configured to perform the method of any one of clauses 34 to 45; and a computing device configured to send the DCI.

Clause 48. A computer-readable medium storing instructions that, when executed, cause performance of the method of any one of clauses 34 to 45.

Clause 49. A method comprising sending, by a base station to a wireless device, an indication to activate a first coreset with a first transmission configuration indicator (TCI) state and a second TCI state.

Clause 50. The method of clause 49, wherein the first coreset is activated with a first transmission configuration indicator (TCI) state and a second TCI state, wherein the first coreset is among a plurality of coresets that are overlapping in time.

Clause 51. The method of clause 50, further comprising sending an indication to configure a second coreset of the plurality of coresets that are overlapping in time.

Clause 52. The method of any one of clauses 50-51, further comprising sending, via a second coreset of the plurality of coresets that are overlapping in time, downlink control information (DCI).

Clause 53. The method of clause 52, wherein the sending via the second coreset is based on the second coreset being activated with at least one of: the first TCI state of the first coreset; or the second TCI state of the first coreset.

Clause 54. The method of any one of clauses 50-53, further comprising sending one or more configuration parameters indicating the plurality of coresets.

Clause 55. The method of any one of clauses 50-54, wherein the plurality of coresets overlap in at least one symbol.

Clause 56. The method of any one of clauses 50-55, wherein the plurality of coresets overlap in at least one physical downlink control channel (PDCCH).

Clause 57. A computing device comprising: one or more processors; and memory storing instructions that, when executed by the one or more processors, cause the wireless device to perform the method of any one of clauses 49 to 56.

Clause 58. A system comprising: a computing device configured to perform the method of any one of clauses 49 to 56; and a wireless device configured to receive the DCI.

Clause 59. A computer-readable medium storing instructions that, when executed, cause performance of the method of any one of clauses 49 to 56.

Clause 60. A method comprising receiving, by a wireless device, one or more messages comprising one or more configuration parameters.

Clause 61. The method of clause 60, further comprising sending, for a random-access procedure, a transport block indicating a reference signal.

Clause 62. The method of any of clauses 60-61, further comprising determining that the one or more configuration parameters do not indicate at least one pathloss reference signal.

Clause 63. The method of clause 62, further comprising after determining the one or more configuration parameters do not indicate at least one pathloss reference signal, sending an uplink signal with a transmission power determined based on the reference signal.

Clause 64. The method of any one of clauses 61-63, wherein the transport block comprises a message 3 (Msg3) transmission of the random-access procedure comprises.

Clause 65. The method of clause 64, wherein the Msg3 transmission comprises a medium-access-control control element (MAC-CE) indicating the reference signal.

Clause 66. The method of clauses 63-65, further comprising determining, for the transmission power, a downlink pathloss estimate based on the reference signal.

Clause 67. The method of any of clauses 61-66, further comprising sending, via a random-access resource, a random-access preamble of the random-access procedure.

Clause 68. The method of clause 67, wherein the reference signal is associated with the random-access preamble; and the random-access resource.

Clause 69. The method of any of clauses 63-68, wherein the one or more configuration parameters do not indicate the at least one pathloss reference signal for physical uplink shared channel (PUSCH) transmissions, and the uplink signal is a PUSCH transmission.

Clause 70. The method of any of clauses 63-68, wherein the one or more configuration parameters do not indicate the at least one pathloss reference signal for physical uplink control channel (PUCCH) transmissions, and the uplink signal is a PUCCH transmission.

Clause 71. The method of any of clauses 63-68, wherein the one or more configuration parameters do not indicate the at least one pathloss reference signal for physical uplink control channel (PUCCH) transmissions, and the uplink signal is a PUCCH transmission

Clause 72. The method of clause 71, wherein the one or more configuration parameters do not comprise an enable-Default-BeamPL-ForSRS parameter.

Clause 73. The method of any of clauses 63-72, wherein the sending the transport block is after the receiving the one or more configuration parameters.

Clause 74. A wireless device comprising: one or more processors; and memory storing instructions that, when executed by the one or more processors, cause the wireless device to perform the method of any one of clauses 60 to 73.

Clause 75. A system comprising: a wireless device configured to perform the method of any one of clauses 60 to 73; and a computing device configured to send the one or more messages.

Clause 76. A computer-readable medium storing instructions that, when executed, cause performance of the method of any one of clauses 60 to 73.

Clause 77. A method comprising obtaining, by a wireless device, a master information block (MIB) based on a first reference signal.

Clause 78. The method of clause 77, further comprising sending a transport block for a random-access procedure.

Clause 79. The method of any of clauses 77-78, further comprising receiving one or more messages comprising one or more configuration parameters.

Clause 80. The method of clause 79, further comprising based on the one or more configuration parameters not indicating at least one pathloss reference signal, determining, for transmission of an uplink signal, a transmission power.

Clause 81. The method of clause 80, wherein the transmission power is determined based on: the first reference signal if the transport block does not indicate a reference signal; and a second reference signal if the transport block indicates the second reference signal.

Clause 82. The method of any of clauses 77-81, further comprising sending the uplink signal with the transmission power.

Clause 83. The method of any of clauses 78-81, wherein the transport block comprises a message 3 (Msg3) transmission of the random-access procedure.

Clause 84. The method of clause 83, wherein the Msg3 transmission comprises a medium-access-control control element (MAC-CE) indicating the second reference signal.

Clause 85. The method of any of clauses 81-84, wherein the first reference signal and the second reference signal are quasi co-located.

Clause 86. The method of any of clauses 78-85, further comprising sending, via a random-access resource, a random-access preamble of the random-access procedure,

Clause 87. The method of clause 86, wherein the first reference signal is associated with: the random-access preamble; and the random-access resource.

Clause 88. The method of any of clauses 80-87, wherein the determining the transmission power is based on the one or more configuration parameters not indicating the at least one pathloss reference signal.

Clause 89. The method of any of clauses 81-88, wherein the determining the transmission power based on the first reference signal comprises determining, for the transmission power, a downlink pathloss estimate based on the first reference signal.

Clause 90. The method of any of clauses 81-89, wherein the determining the transmission power based on the second reference signal comprises determining, for the transmission power, a downlink pathloss estimate based on the second reference signal.

Clause 91. The method of any of clauses 80-90, wherein the one or more configuration parameters do not indicate the at least one pathloss reference signal for physical uplink shared channel (PUSCH) transmissions, and the uplink signal is a PUSCH transmission.

Clause 92. The method of any of clauses 80-90, wherein the one or more configuration parameters do not indicate the at least one pathloss reference signal for physical uplink control channel (PUCCH) transmissions, and the uplink signal is a PUCCH transmission.

Clause 93. The method of any of clauses 80-90, wherein the one or more configuration parameters do not indicate the at least one pathloss reference signal for sounding reference signal (SRS) transmissions, and the uplink signal is an SRS.

Clause 94. The method of clause 80-93, wherein the one or more configuration parameters do not comprise an enable-Default-BeamPL-ForSRS parameter.

Clause 95. The method of clause 79-93, wherein the sending the transport block is after the receiving the one or more configuration parameters.

Clause 96. A wireless device comprising: one or more processors; and memory storing instructions that, when executed by the one or more processors, cause the wireless device to perform the method of any one of clauses 77 to 95.

Clause 97. A system comprising: a wireless device configured to perform the method of any one of clauses 77 to 95; and a computing device configured to send the one or more messages.

Clause 98. A computer-readable medium storing instructions that, when executed, cause performance of the method of any one of clauses 77 to 95.

Clause 99. A method comprising obtaining, by a wireless device, a master information block (MIB) based on a first reference signal.

Clause 100. The method of clause 99, further comprising sending a transport block for a random-access procedure.

Clause 101. The method of any of clauses 99-100, further comprising receiving one or more messages comprising one or more configuration parameters.

Clause 102. The method of clause 101, further comprising based on the one or more configuration parameters not indicating at least one pathloss reference signal, sending an uplink signal with a transmission power.

Clause 103. The method of clause 102, wherein the transmission power is determined based on: the first reference signal if the transport block does not indicate a reference signal; and a second reference signal if the transport block indicates the second reference signal.

Clause 104. A wireless device comprising: one or more processors; and memory storing instructions that, when executed by the one or more processors, cause the wireless device to perform the method of any one of clauses 99 to 103.

Clause 105. A system comprising: a wireless device configured to perform the method of any one of clauses 99 to 103; and a computing device configured to send the one or more messages.

Clause 106. A computer-readable medium storing instructions that, when executed, cause performance of the method of any one of clauses 99 to 103.

Clause 107. A method comprising obtaining, by a wireless device, a master information block (MIB) based on a first reference signal.

Clause 108. The method of clause 107, further comprising sending a transport block for a random-access procedure.

Clause 109. The method of any of clauses 107-108, further comprising sending, before receiving one or more configuration parameters, an uplink signal with a transmission power.

Clause 110. The method of clause 109, wherein the transmission power is determined based on: the first reference signal if the transport block does not indicate a reference signal; and a second reference signal if the transport block indicates the second reference signal.

Clause 111. The method of any of clauses 109-110, wherein the sending the uplink signal is based on not receiving the one or more configuration parameters before transmission of the uplink signal.

Clause 112. A wireless device comprising: one or more processors; and memory storing instructions that, when executed by the one or more processors, cause the wireless device to perform the method of any one of clauses 107 to 111.

Clause 113. A system comprising: a wireless device configured to perform the method of any one of clauses 107 to 111; and a computing device configured to send the one or more messages.

Clause 114. A computer-readable medium storing instructions that, when executed, cause performance of the method of any one of clauses 107 to 111.

Clause 115. A method comprising receiving, by a wireless device, downlink control information (DCI) scheduling reception of a downlink signal.

Clause 116. The method of clause 115, wherein a time offset between the DCI and the downlink signal is less than a threshold.

Clause 117. The method of any of clauses 115-116, wherein the downlink signal overlaps in time with a control resource set (coreset) activated with at least two transmission configuration indicator (TCI) states.

Clause 118. The method of any of clauses 116-117, further comprising determining, for reception of the downlink signal, a default TCI state based on the time offset being less than the threshold.

Clause 119. The method of any of clauses 117-118, further comprising based on the default TCI state being different from each TCI state of the at least two TCI states of the coreset, receiving the downlink signal based on one or more TCI states among the at least two TCI states of the coreset.

Clause 120. The method of any of clauses 115-119, wherein the downlink signal is at least one of: a physical downlink shared channel (PDSCH) transmission; or an aperiodic channel-state-information reference signal (CSI-RS).

Clause 121. The method of any of clauses 116-120, wherein the time offset is between a last symbol of the DCI and a starting symbol of the downlink signal.

Clause 122. The method of any of clauses 116-121, further comprising sending, to a base station, a user-equipment (UE) capability message indicating the threshold.

Clause 123. The method of any of clauses 116-122, wherein the downlink signal overlaps with the coreset in at least one symbol.

Clause 124. The method of any of clauses 117-123, further comprising receiving an activation command indicating activation of the at least two TCI states for the coreset.

Clause 125. The method of any of clauses 116-124, wherein the default TCI state is a TCI state of a second coreset with a lowest coreset index.

Clause 126. The method of any of clauses 117-125, wherein the receiving the downlink signal based on the one or more TCI states of the coreset is after prioritizing a physical downlink control channel (PDCCH) reception in the coreset over reception of the downlink signal in overlapped time.

Clause 127. The method of any of clauses 117-126, wherein the receiving the downlink signal based on the one or more TCI states comprises at least one demodulation reference signal (DM-RS) antenna port of the downlink signal being quasi co-located with one or more reference signals indicated by the one or more TCI states.

Clause 128. The method of clause 127, wherein the at least one DM-RS antenna port of the downlink signal is quasi co-located with the one or more reference signals with respect to one or more quasi-co-location types indicated by the one or more TCI states.

Clause 129. The method of any of clauses 117-128, wherein the receiving the downlink signal based on the one or more TCI states comprises receiving the downlink signal with one or more spatial domain receiving filters that are determined based on one or more reference signals indicated by the one or more TCI states.

Clause 130. A wireless device comprising: one or more processors; and memory storing instructions that, when executed by the one or more processors, cause the wireless device to perform the method of any one of clauses 115 to 129.

Clause 131. A system comprising: a wireless device configured to perform the method of any one of clauses 115 to 129; and a computing device configured to send the DCI.

Clause 132. A computer-readable medium storing instructions that, when executed, cause performance of the method of any one of clauses 115 to 129.

Clause 133. A method comprising receiving, by a wireless device, downlink control information (DCI) scheduling reception of a downlink signal.

Clause 134. The method of clause 133, wherein a time offset between the DCI and the downlink signal is less than a threshold.

Clause 135. The method of any of clauses 133-134, wherein the downlink signal overlaps in time with a control resource set (coreset) activated with at least two transmission configuration indicator (TCI) states.

Clause 136. The method of any of clauses 134-135, further comprising determining, for reception of the downlink signal, two default TCI states based on the time offset being less than the threshold.

Clause 137. The method of clause 136, further comprising based on the two default TCI states being different from the at least two TCI states of the coreset, receiving the downlink signal based on the at least two TCI states of the coreset.

Clause 138. The method of any of clauses 133-137, further comprising receiving one or more messages comprising one or more configuration parameters.

Clause 139. The method of clause 138, wherein the one or more configuration parameters comprise an enable-two-default-TCI-States parameter.

Clause 140. The method of clause 139, wherein the determining the two default TCI states is based on the one or more configuration parameters comprising the enable-two-default-TCI-States parameter.

Clause 141. The method of any of clauses 133-140, wherein at least one TCI codepoint indicates two TCI states.

Clause 142. The method of clause 141, wherein the determining the two default TCI states is based on the at least one TCI codepoint indicating two TCI states.

Clause 143. The method of any of clauses 136-142, wherein the two default TCI states are indicated by a lowest TCI codepoint among one or more TCI codepoints indicating two TCI states.

Clause 144. The method of any of clauses 133-143, wherein the downlink signal is at least one of a physical downlink shared channel (PDSCH) transmission or an aperiodic channel-state-information reference signal (CSI-RS).

Clause 145. The method of any of clauses 134-144, wherein the time offset is between a last symbol of the DCI and a starting symbol of the downlink signal.

Clause 146. The method of any of clauses 134-145, further comprising sending, to a base station, a user-equipment (UE) capability message indicating the threshold.

Clause 147. The method of any of clauses 135-146, wherein the downlink signal overlaps with the coreset in at least one symbol.

Clause 148. The method of any of clauses 135-147, further comprising receiving an activation command indicating activation of the at least two TCI states for the coreset.

Clause 149. The method of any of clauses 137-148, wherein the receiving the downlink signal based on the at least two TCI states of the coreset is after prioritizing a physical downlink control channel (PDCCH) reception in the coreset over reception of the downlink signal in overlapped time.

Clause 150. The method of clause 149, wherein the two default TCI states being different from the at least two TCI states comprises each default TCI state, of the two default TCI states, being different from each TCI state of the at least two TCI state

Clause 151. The method of clause 149, wherein the two default TCI states being different from the at least two TCI states comprises at least one default TCI state, of the two default TCI states, being different from each TCI state of the at least two TCI states.

Clause 152. The method of any of clauses 137-151, wherein the receiving the downlink signal based on the at least two TCI states comprises at least one first demodulation reference signal (DM-RS) antenna port of the downlink signal being quasi co-located with a first reference signal indicated by a first TCI state of the at least two TCI states; and at least one second DM-RS antenna port of the downlink signal being quasi co-located with a second reference signal indicated by a second TCI state of the at least two TCI states.

Clause 153. The method of clause 152, wherein the at least one first DM-RS antenna port of the downlink signal is quasi co-located with the reference signal with respect to a quasi-co-location type indicated by the TCI state.

Clause 154. The method of any of clauses 137-153, wherein the receiving the downlink signal based on the at least two TCI states comprises receiving the downlink signal with: a first spatial domain receiving filter that is determined based on a first reference signal indicated by a first TCI state of the at least two TCI states; and a second spatial domain receiving filter that is determined based on a second reference signal indicated by a second TCI state of the at least two TCI states.

Clause 155. A wireless device comprising: one or more processors; and memory storing instructions that, when executed by the one or more processors, cause the wireless device to perform the method of any one of clauses 133 to 154.

Clause 156. A system comprising: a wireless device configured to perform the method of any one of clauses 133 to 154; and a computing device configured to send the DCI.

Clause 157. A computer-readable medium storing instructions that, when executed, cause performance of the method of any one of clauses 133 to 154.

Clause 158. A method comprising receiving, by a wireless device, downlink control information (DCI) scheduling reception of a downlink signal.

Clause 159. The method of clause 158, wherein a time offset between the DCI and the downlink signal is less than a threshold.

Clause 160. The method of any of clauses 158-159, wherein the downlink signal overlaps in time with a first control resource (coreset) activated with a first transmission configuration indicator (TCI) state.

Clause 161. The method of clause 160, wherein the downlink signal overlaps in time with a second coreset activated with a second TCI state, wherein the first coreset and the second coreset are monitored for physical downlink control channel (PDCCH) repetition.

Clause 162. The method of any of clauses 158-161, further comprising determining, for reception of the downlink signal, two default TCI based on the time offset being less than the threshold.

Clause 163. The method of clause 162, further comprising based on the two default TCI states being different from the first TCI state and the second TCI state, receiving the downlink signal based on the first TCI state and the second TCI state.

Clause 164. A wireless device comprising: one or more processors; and memory storing instructions that, when executed by the one or more processors, cause the wireless device to perform the method of any one of clauses 158 to 163.

Clause 165. A system comprising: a wireless device configured to perform the method of any one of clauses 158 to 163; and a computing device configured to send the DCI.

Clause 166. A computer-readable medium storing instructions that, when executed, cause performance of the method of any one of clauses 158 to 163.

Clause 167. A method comprising based on a downlink signal overlapping in time with a control resource set (coreset) activated with at least two transmission configuration indicator (TCI) states, receiving, by a wireless device, the downlink signal based on a first TCI state of the at least two TCI states of the coreset.

Clause 168. A wireless device comprising: one or more processors; and memory storing instructions that, when executed by the one or more processors, cause the wireless device to perform the method of clause 167.

Clause 169. A system comprising: a wireless device configured to perform the method of clause 167; and a computing device configured to send the downlink signal.

Clause 170. A computer-readable medium storing instructions that, when executed, cause performance of the method of clause 167.

Clause 171. A method comprising receiving, by a wireless device, a downlink signal based on a first transmission configuration indicator (TCI) state of at least two TCI states activated for a control resource set (coreset), wherein the downlink signal overlaps in time with the coreset.

Clause 172. A wireless device comprising: one or more processors; and memory storing instructions that, when executed by the one or more processors, cause the wireless device to perform the method of clause 171.

Clause 173. A system comprising: a wireless device configured to perform the method of clause 171; and a computing device configured to send the downlink signal.

Clause 174. A computer-readable medium storing instructions that, when executed, cause performance of the method of clause 171.

Clause 175. A method comprising receiving, by a wireless device, an activation command indicating activation of a plurality of transmission configuration indicator (TCI) states for a first control resource set (coreset) among a plurality of coresets that are overlapping in time.

Clause 176. The method of clause 175, further comprising based on a second coreset of the plurality of coreset being activated with one or all of the plurality of TCI states of the first coreset, monitoring downlink control information (DCI) via the second coreset.

Clause 177. A wireless device comprising: one or more processors; and memory storing instructions that, when executed by the one or more processors, cause the wireless device to perform the method of any one of clauses 175 - 176.

Clause 178. A system comprising: a wireless device configured to perform the method of any one of clauses 175 - 176; and a computing device configured to send the activation command.

Clause 179. A computer-readable medium storing instructions that, when executed, cause performance of the method of any one of clauses 175 - 176.

A wireless device may perform a method comprising multiple operations. The wireless device may determine a first control resource set (coreset) among a plurality of coresets that are overlapping in time. The wireless device may receive one or more configuration parameters indicating the plurality of coresets. The wireless device may receive one or more configuration parameters for one or more cells. The wireless device may determine the first coreset among the plurality of coresets based on the first coreset being associated with a cell index that is lowest among one or more cell indexes of the one or more cells. The wireless device may determine the first coreset among the plurality of coresets based on the one or more configuration parameters indicating, for the first coreset, a search space set. The search space set may comprise a search space set index that is lowest among a plurality of search space set indexes of a plurality of search space sets associated with the plurality of coresets. One or more active downlink bandwidth parts (BWPs) of the one or more cells may comprise the plurality of coresets. The wireless device may associate each active downlink BWP, of the one or more active downlink BWPs, with a respective cell of the one or more cells. The first coreset may be activated with a first transmission configuration indicator (TCI) state and/or a second TCI state. The wireless device may receive an activation command indicating activation of the first TCI state and the second TCI state for the first coreset. The wireless device may receive an activation command indicating activation of the first TCI state for the second coreset, the second TCI state for the second coreset, or the first TCI state and the second TCI state for the second coreset. The wireless device may receive, via a second coreset of the plurality of coresets, downlink control information (DCI). The wireless device may receive the DCI, via the second coreset, wherein the second coreset is activated with at least one of the first TCI state of the first coreset or the second TCI state of the first coreset. The wireless device receiving the DCI may be during monitoring, of the the second coreset, based on the second coreset being activated with the at least one of the first TCI state of the first coreset or the second TCI state of the first coreset. The wireless device may receive an activation command indicating activation of the first TCI state and the second TCI state for the first coreset. The wireless device may monitor, for the DCI, downlink control channels in the second coreset. The monitoring the downlink control channels may be based on the second coreset being activated with at least one of the first TCI state or the second TCI state. The wireless device may drop, via a third coreset of the plurality of coresets, a second DCI based on the third coreset being activated with a TCI state that is different from the first TCI state and the second TCI state. A system may comprise the wireless device configured to perform the described method, additional operations and/or include the additional elements; and a base station configured to send the DCI. A computer-readable medium may store instructions that, when executed, cause performance of the described method, additional operations and/or include the additional elements. A base station may perform a corresponding method comprising multiple operations. The base station may perform a corresponding method, for example, by sending one or more messages received by the wireless device and/or receiving one or more messages sent by the wireless device.

A wireless device may perform a method comprising multiple operations. The wireless device may receive an activation command indicating activation of a plurality of transmission configuration indicator (TCI) states. The activation command may indicate activation of a plurality of TCI states for a first control resource set (coreset) among a plurality of coresets that are overlapping in time. The plurality of coresets may overlap in at least one symbol. The wireless device may monitor one or more coresets, among the plurality of coresets, that are activated with one or all of the plurality of TCI states of the first coreset. The wireless device may receive downlink control information (DCI) via the second coreset. The wireless device may receive the DCI via a second coreset of the plurality of coresets, wherein the second coreset is activated with one or all of the TCI states of the first coreset. The wireless device may monitor downlink control channel transmission in the first coreset based on the TCI states of the first coreset. The wireless device may monitor the downlink control channel transmission by monitoring at least one demodulation reference signal (DM-RS) of the downlink control channel transmission that is quasi co-located with a first reference signal indicated by a first TCI state of the first coreset, and a second reference signal indicated by a second TCI state of the first coreset. The wireless device may receive one or more configuration parameters for one or more cells. One or more active downlink bandwidth parts (BWPs) of the one or more cells may comprise the plurality of coresets. The wireless device may associate each active downlink BWP, of the one or more active downlink BWPs, with a respective cell of the one or more cells. The wireless device may drop, via a third coreset of the plurality of coresets, a second DCI based on the third coreset being activated with two TCI states that are different from a first TCI state of the first coreset and a second TCI state of the first coreset. A system may comprise the wireless device configured to perform the described method, additional operations and/or include the additional elements; and a base station configured to send the DCI. A computer-readable medium may store instructions that, when executed, cause performance of the described method, additional operations and/or include the additional elements. A base station may perform a corresponding method comprising multiple operations. The base station may perform a corresponding method, for example, by sending one or more messages received by the wireless device and/or receiving one or more messages sent by the wireless device.

A base station may perform a method comprising multiple operations. The base station may send, to a wireless device, an indication to activate a first coreset with a first transmission configuration indicator (TCI) state and a second TCI state. The first coreset may be among a plurality of coresets that are overlapping in time. The plurality of coresets may overlap in at least one symbol. The plurality of coresets may overlap in at least one physical downlink control channel (PDCCH). The base station may send an indication to activate a second coreset of the plurality of coresets that are overlapping in time. The base station may send, via the second coreset, downlink control information (DCI). The sending via the second coreset may be based on the second coreset being activated with at least one of the first TCI state of the first coreset or the second TCI state of the first coreset. The base station may send one or more configuration parameters indicating the plurality of coresets. A system may comprise the base station configured to perform the described method, additional operations and/or include the additional elements; and a wireless device configured to receive the DCI. A computer-readable medium may store instructions that, when executed, cause performance of the described method, additional operations and/or include the additional elements. A wireless device may perform a corresponding method comprising multiple operations. The wireless device may perform a corresponding method, for example, by sending one or more messages received by the base station and/or receiving one or more messages sent by the base station.

A wireless device may perform a method comprising multiple operations. The wireless device may receive downlink control information (DCI) scheduling reception of a downlink signal. The downlink signal may be at least one of a physical downlink shared channel (PDSCH) or an aperiodic channel-state-information reference signal (CSI-RS). The downlink signal may overlap with the coreset in at least one symbol. A time offset between the DCI and the downlink signal may be less than a threshold. The time offset may be between a last symbol of the DCI and a starting symbol of the downlink signal. The downlink signal may overlap in time with a control resource set (coreset) activated with at least two transmission configuration indicator (TCI) states. The wireless device may determine, for reception of the downlink signal, a default TCI state based on the time offset being less than the threshold. The default TCI state may be a TCI state of a second coreset with a lowest coreset index. The wireless device may receive the downlink signal using on one or more TCI states among the at least two TCI states of the coreset. The wireless device may receive the downlink signal based on the default TCI state being different from each TCI state of the at least two TCI states of the coreset. The wireless device may send, to a base station, a user-equipment (UE) capability message indicating the threshold. The wireless device may receive an activation command indicating activation of the at least two TCI states for the coreset. The wireless device receiving the downlink signal based on the one or more TCI states of the coreset may after prioritizing a physical downlink control channel (PDCCH) reception in the coreset over reception of the downlink signal in overlapped time. The wireless device receiving the downlink signal based on the one or more TCI states may comprise at least one demodulation reference signal (DM-RS) antenna port of the downlink signal being quasi co-located with one or more reference signals indicated by the one or more TCI states. The at least one DM-RS antenna port of the downlink signal may be quasi co-located with the one or more reference signals with respect to one or more quasi-co-location types indicated by the one or more TCI states. The wireless device receiving the downlink signal based on the one or more TCI states may comprise receiving the downlink signal with one or more spatial domain receiving filters that are determined based on one or more reference signals indicated by the one or more TCI states. A system may comprise the wireless device configured to perform the described method, additional operations and/or include the additional elements; and a base station configured to send the DCI. A computer-readable medium may store instructions that, when executed, cause performance of the described method, additional operations and/or include the additional elements. A base station may perform a corresponding method comprising multiple operations. The base station may perform a corresponding method, for example, by sending one or more messages received by the wireless device and/or receiving one or more messages sent by the wireless device.

A wireless device may perform a method comprising multiple operations. The wireless device may receive downlink control information (DCI) scheduling reception of a downlink signal. A time offset between the DCI and the downlink signal may be less than a threshold. The wireless device may send, to a base station, a user-equipment (UE) capability message indicating the threshold. The time offset may be between a last symbol of the DCI and a starting symbol of the downlink signal. The downlink signal may overlap in time with a control resource set (coreset) activated with at least two transmission configuration indicator (TCI) states. The downlink signal overlaps with the coreset in at least one symbol. The downlink signal may be at least one of a physical downlink shared channel (PDSCH) transmission

or an aperiodic channel-state-information reference signal (CSI-RS. The wireless device may determine, for reception of the downlink signal, two default TCI states based on the time offset being less than the threshold. Based on the two default TCI states being different from the at least two TCI states of the coreset, the wireless device may receive the downlink signal using the at least two TCI states of the coreset. The wireless device may receive one or more messages comprising one or more configuration parameters. The one or more configuration parameters may comprise an enable-two-default-TCI-States parameter. The wireless device determining the two default TCI states may be based on the one or more configuration parameters comprising the enable-two-default-TCI-States parameter. At least one TCI codepoint may indicate two TCI states. The wireless device determining the two default TCI states may be based on the at least one TCI codepoint indicating two TCI states. The two default TCI states may be indicated by a lowest TCI codepoint among one or more TCI codepoints indicating two TCI states. The wireless device may receive an activation command indicating activation of the at least two TCI states for the coreset. The wireless device receiving the downlink signal based on the one or more TCI states of the coreset may after prioritizing a physical downlink control channel (PDCCH) reception in the coreset over reception of the downlink signal in overlapped time. The wireless device receiving the downlink signal based on the one or more TCI states may comprise at least one demodulation reference signal (DM-RS) antenna port of the downlink signal being quasi co-located with one or more reference signals indicated by the one or more TCI states. The at least one DM-RS antenna port of the downlink signal may be quasi co-located with the one or more reference signals with respect to one or more quasi-co-location types indicated by the one or more TCI states. The wireless device receiving the downlink signal based on the one or more TCI states may comprise receiving the downlink signal with one or more spatial domain receiving filters that are determined based on one or more reference signals indicated by the one or more TCI states. A system may comprise the wireless device configured to perform the described method, additional operations and/or include the additional elements; and a base station configured to send the DCI. A computer-readable medium may store instructions that, when executed, cause performance of the described method, additional operations and/or include the additional elements. A base station may perform a corresponding method comprising multiple operations. The base station may perform a corresponding method, for example, by sending one or more messages received by the wireless device and/or receiving one or more messages sent by the wireless device.

A wireless device may perform a method comprising multiple operations. The wireless device may receive downlink control information (DCI) scheduling reception of a downlink signal. A time offset between the DCI and the downlink signal may be less than a threshold. The downlink signal may overlap in time with a first control resource (coreset) activated with a first transmission configuration indicator (TCI) state. The downlink signal may overlap in time with a second coreset activated with a second TCI state. The first coreset and the second coreset may be monitored for physical downlink control channel (PDCCH) repetition. The wireless device may determine, for reception of the downlink signal, a default TCI state based on the time offset being less than the threshold. Based on the default TCI state being different from the first TCI state and the second TCI state, the wireless device may receive the downlink signal using on one or more TCI states among the first TCI state and the second TCI state. A system may comprise the wireless device configured to perform the described method, additional operations and/or include the additional elements; and a base station configured to send the DCI. A computer-readable medium may store instructions that, when executed, cause performance of the described method, additional operations and/or include the additional elements. A base station may perform a corresponding method comprising multiple operations. The base station may perform a corresponding method, for example, by sending one or more messages received by the wireless device and/or receiving one or more messages sent by the wireless device.

A wireless device may perform a method comprising multiple operations. The wireless device may receive downlink control information (DCI) scheduling reception of a downlink signal. A time offset between the DCI and the downlink signal may be less than a threshold. The downlink signal may overlap in time with a first control resource (coreset) activated with a first transmission configuration indicator (TCI) state. The downlink signal may overlap in time a second coreset activated with a second TCI state, wherein the first coreset and the second coreset are monitored for physical downlink control channel (PDCCH) repetition. The wireless device may determine, for reception of the downlink signal, two default TCI states based on the time offset being less than the threshold. Based on the two default TCI states being different from the first TCI state and the second TCI state, the wireless device may receive the downlink signal based on the first TCI state and the second TCI state. A system may comprise the wireless device configured to perform the described method, additional operations and/or include the additional elements; and a base station configured to send the DCI. A computer-readable medium may store instructions that, when executed, cause performance of the described method, additional operations and/or include the additional elements. A base station may perform a corresponding method comprising multiple operations. The base station may perform a corresponding method, for example, by sending one or more messages received by the wireless device and/or receiving one or more messages sent by the wireless device.

A wireless device may perform a method comprising multiple operations. The wireless device may obtain a master information block (MIB) based on a first reference signal. The wireless device may send a transport block for a random-access procedure. The transport block may comprises a message 3 (Msg3) transmission of the random-access procedure. The Msg3 transmission may comprise a medium-access-control control element (MAC-CE) indicating the second reference signal. The wireless device may receive one or more messages comprising one or more configuration parameters. Based on the one or more configuration parameters not indicating at least one pathloss reference signal, the wireless device may determine, for transmission of an uplink signal, a transmission power using the first reference signal if the transport block does not indicate a reference signal. Based on the one or more configuration parameters not indicating at least one pathloss reference signal, the wireless device may determine, for transmission of an uplink signal, a transmission power using a second reference signal if the transport block indicates the second reference signal. The first reference signal and the second reference signal may be quasi co-located. The wireless device may send the uplink signal with the transmission power. The wireless device may send, via a random-access resource, a random-access preamble of the random-access procedure. The first reference signal may be associated with the random-access preamble and the random-access resource. The wireless device determining the transmission power may be based on the one or more configuration parameters not indicating the at least one pathloss reference signal. The one or more configuration parameters may not indicate the at least one pathloss reference signal for physical uplink shared channel (PUSCH) transmissions, and the uplink signal may comprise a PUSCH transmission. The one or more configuration parameters may not indicate the at least one pathloss reference signal for physical uplink control channel (PUCCH) transmissions, and the uplink signal may comprise a PUCCH transmission. The one or more configuration parameters may not indicate the at least one pathloss reference signal for sounding reference signal (SRS) transmissions, and the uplink signal may comprise an SRS. The one or more configuration parameters may not comprise an enable-Default-BeamPL-ForSRS parameter. The wireless device may send the transport block after receiving the one or more configuration parameters. The wireless device determining the transmission power based on the first reference signal may comprise the wireless device determining, for the transmission power, a downlink pathloss estimate based on the first reference signal. The wireless device determining the transmission power based on the second reference signal may comprise the wireless device determining, for the transmission power, a downlink pathloss estimate based on the second reference signal. A system may comprise the wireless device configured to perform the described method, additional operations and/or include the additional elements; and a base station configured to receive the transport block. A computer-readable medium may store instructions that, when executed, cause performance of the described method, additional operations and/or include the additional elements. A base station may perform a corresponding method comprising multiple operations. The base station may perform a corresponding method, for example, by sending one or more messages received by the wireless device and/or receiving one or more messages sent by the wireless device.

A wireless device may perform a method comprising multiple operations. The wireless device may obtaining a master information block (MIB) based on a first reference signal. The wireless device may send a transport block for a random-access procedure. The wireless device may receive one or more messages comprising one or more configuration parameters. Based on the one or more configuration parameters not indicating at least one pathloss reference signal. The wireless device may send an uplink signal with a transmission power. The transmission power may be determined based on the first reference signal if the transport block does not indicate a reference signal. The transmission power may be determined based on a second reference signal if the transport block indicates the second reference signal. A system may comprise the wireless device configured to perform the described method, additional operations and/or include the additional elements; and a base station configured to receive the transport block. A computer-readable medium may store instructions that, when executed, cause performance of the described method, additional operations and/or include the additional elements. A base station may perform a corresponding method comprising multiple operations. The base station may perform a corresponding method, for example, by sending one or more messages received by the wireless device and/or receiving one or more messages sent by the wireless device.

A wireless device may perform a method comprising multiple operations. The wireless device may receive one or more messages comprising one or more configuration parameters. The wireless device may send, for a random-access procedure, a transport block indicating a reference signal. The wireless device may determine the one or more configuration parameters do not indicate at least one pathloss reference signal. After determining the one or more configuration parameters do not indicate at least one pathloss reference signal, the wireless device may send an uplink signal with a transmission power determined based on the reference signal. A system may comprise the wireless device configured to perform the described method, additional operations and/or include the additional elements; and a base station configured to send the one or more configuration parameters. A computer-readable medium may store instructions that, when executed, cause performance of the described method, additional operations and/or include the additional elements. A base station may perform a corresponding method comprising multiple operations. The base station may perform a corresponding method, for example, by sending one or more messages received by the wireless device and/or receiving one or more messages sent by the wireless device.

A wireless device may perform a method comprising multiple operations. The wireless device may obtain a master information block (MIB) based on a first reference signal. The wireless device may send a transport block for a random-access procedure. The wireless device may send, before receiving one or more configuration parameters, an uplink signal with a transmission power. The transmission power may be determined based on the first reference signal if the transport block does not indicate a reference signal. The transmission power may be determined based on a second reference signal if the transport block indicates the second reference signal. The wireless device sending the transport block may be based on not receiving the one or more configuration parameters before transmission of the uplink signal. A system may comprise the wireless device configured to perform the described method, additional operations and/or include the additional elements; and a base station configured to receive the transport block. A computer-readable medium may store instructions that, when executed, cause performance of the described method, additional operations and/or include the additional elements. A base station may perform a corresponding method comprising multiple operations. The base station may perform a corresponding method, for example, by sending one or more messages received by the wireless device and/or receiving one or more messages sent by the wireless device.

A wireless device may perform a method comprising multiple operations. The wireless device may receive a downlink signal based on a first transmission configuration indicator (TCI) state of at least two TCI states activated for a control resource set (coreset). Based on the downlink signal overlapping in time with the coreset, activated with the at least two TCI states, the wireless device may receive the downlink signal based on the first TCI state of the at least two TCI states of the coreset. A system may comprise the wireless device configured to perform the described method, additional operations and/or include the additional elements; and a base station configured to send the downlink signal. A computer-readable medium may store instructions that, when executed, cause performance of the described method, additional operations and/or include the additional elements. A base station may perform a corresponding method comprising multiple operations. The base station may perform a corresponding method, for example, by sending one or more messages received by the wireless device and/or receiving one or more messages sent by the wireless device.

A wireless device may perform a method comprising multiple operations. The wireless device may receive an activation command indicating activation of a plurality of transmission configuration indicator (TCI) states for a first control resource set (coreset) among a plurality of coresets that are overlapping in time. The wireless device may monitor downlink control information (DCI) via a second coreset of the plurality of coresets that are overlapping in time. The wireless device may monitor the DCI, via the second coreset, based on the second coreset being activated with one or all of the plurality of TCI states of the first coreset. A system may comprise the wireless device configured to perform the described method, additional operations and/or include the additional elements; and a base station configured to send the activation command. A computer-readable medium may store instructions that, when executed, cause performance of the described method, additional operations and/or include the additional elements. A base station may perform a corresponding method comprising multiple operations. The base station may perform a corresponding method, for example, by sending one or more messages received by the wireless device and/or receiving one or more messages sent by the wireless device.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

   determining, by a wireless device, a first control resource set (CORESET) among a plurality of CORESETs that are overlapping in time, wherein the first CORESET is activated with a first transmission configuration indicator (TCI) state and a second TCI state; and
   receiving, via a second CORESET of the plurality of CORESETs, downlink control information (DCI), wherein the second CORESET is activated with at least one of:

   the first TCI state of the first CORESET; or
   the second TCI state of the first CORESET.

2. The method of claim 1, wherein the receiving the DCI is during monitoring, of the second CORESET, based on the second CORESET being activated with at least one of:

the first TCI state of the first CORESET; or
the second TCI state of the first CORESET.

3. The method of any one of claims 1-2, further comprising:
receiving one or more configuration parameters indicating the plurality of CORESETs.

4. The method of any one of claims 1-3, further comprising:

receiving one or more configuration parameters for one or more cells, wherein one or more active downlink bandwidth parts (BWPs) of the one or more cells comprises the plurality of CORESETs; and
associating each active downlink BWP, of the one or more active downlink BWPs, with a respective cell of the one or more cells.

5. The method of any one of claims 1-4, further comprising:
receiving an activation command indicating activation of the first TCI state and the second TCI state for the first CORESET.

6. The method of any one of claims 1-5, further comprising:
receiving one or more configuration parameters for one or more cells, wherein the determining the first CORESET among the plurality of CORESETs is based on the first CORESET being associated with a cell index that is lowest among one or more cell indexes of the one or more cells.

7. The method of any one of claims 1-6, further comprising:
receiving one or more configuration parameters for one or more cells, wherein the determining the first CORESET among the plurality of CORESETs is based on the one or more configuration parameters indicating, for the first CORESET, a search space set with a search space set index that is lowest among a plurality of search space set indexes of a plurality of search space sets associated with the plurality of CORESETs.

8. The method of any one of claims 1-7, further comprising:
monitoring one or more CORESETs, among the plurality of CORESETs, that are activated with one or each of the first TCI state and the second TCI state.

9. A method comprising:

sending, by a base station to a wireless device, an indication to activate a first CORESET with a first transmission configuration indicator (TCI) state and a second TCI state, wherein the first CORESET is among a plurality of CORESETs that are overlapping in time; and
sending, via a second CORESET of the plurality of CORESETs that are overlapping in time, downlink control information (DCI), wherein the second CORESET is activated with at least one of:

the first TCI state of the first CORESET; or
the second TCI state of the first CORESET.

10. The method of claim 9, further comprising:
sending one or more configuration parameters indicating the plurality of CORESETs.

11. The method of any one of claims 9 - 10, wherein the plurality of CORESETs overlap in at least one symbol.

12. The method of any one of claims 9 - 11, wherein the plurality of CORESETs overlap in at least one physical downlink control channel (PDCCH).

13. A computing device comprising:

one or more processors; and
memory storing instructions that, when executed by the one or more processors, cause the computing device to perform:

the method of any one of claims 1-8; or

the method of any one of claims 9-12.

14. A system comprising:

a wireless device configured to perform the method of any one of claims 1-8; and
a base station configured to perform the method of any one of claims 9-12.

15. A computer-readable medium storing instructions that, when executed, cause performance of:

the method of any one of claims 1-8; or
the method of any one of claims 9-12.

FIG. 1A

FIG. 1B

**FIG. 2A**

**FIG. 2B**

**IP Packets**

FIG. 3

EP 4 068 673 A1

| IP Packet | | IP Packet | | IP Packet | |
| --- | --- | --- | --- | --- | --- |
| *n* | | *n+1* | | *m* | |

**SDAP 225** — radio bearer **402** | H | SDAP SDU ... H | SDAP SDU — radio bearer **404** | H | SDAP SDU

SDAP PDU

**PDCP 224** — H | PDCP SDU ... H | PDCP SDU — H | PDCP SDU

**RLC 223** — H | RLC SDU ... H | RLC SDU — H | SDU Seg. ... H | SDU Seg.

**MAC 222** — H | MAC SDU | H | MAC SDU | H | MAC SDU — H | MAC SDU

**PHY 221** — PHY SDU (Transport Block) — PHY SDU

## FIG. 4A

| R | F | LCID | SDU Length |
| --- | --- | --- | --- |

H | MAC CE | H | MAC CE | H | MAC SDU | H | MAC SDU

MAC PDU

## FIG. 4B

EP 4 068 673 A1

Logical
Channels

PCCH    BCCH    CCCH    DCCH    DTCH

Transport
Channels

PCH     BCH                    DL-SCH

DCI

Physical
Channels

PBCH            PDSCH   PDCCH

Physical
Signals

PSS/    CSI-RS   DM-RS   PT-RS
SSS

Downlink

**FIG. 5A**

CCCH    DCCH    DTCH

UL-SCH           RACH

UCI

PUSCH   PUCCH   PRACH

DM-RS   PT-RS    SRS

Uplink

**FIG. 5B**

**FIG. 6**

FIG. 7

FIG. 8

EP 4 068 673 A1

FIG. 9

**FIG. 10A**

**FIG. 10B**

**FIG. 11A**

**FIG. 11B**

FIG. 12A

FIG. 12B

Wireless
Device

Base
Station

Wireless
Device

Base
Station

Wireless
Device

Base
Station

Configuration
1310

Configuration
1320

Configuration
1330

Msg 1
1311

Msg 1
1321

Msg A
1331

Preamble
1341

Msg 2
1312

Msg 2
1322

1342
Transport block

Msg 3
1313

Msg 4
1314

Msg B
1332

**FIG. 13A**

**FIG. 13B**

**FIG. 13C**

EP 4 068 673 A1

CORESET
1403

CORESET
1402

CORESET
1401

Bandwidth

One slot

**FIG. 14A**

CORESET → CCE-to-REG mapping → Search Space → PDCCH candidate

PDCCH candidate

PDCCH candidate

**FIG. 14B**

FIG. 15A

**FIG.15B**

FIG. 16A

FIG. 16B

FIG. 16C

FIG. 16D

FIG. 17

EP 4 068 673 A1

**Base Station 1810**

Reference signal 1820

Msg3 transmission (a new/candidate RS) 1830

Uplink Transmission 1840

Configuration Parameters 1850

$T_1$

$T_2$

$T_3$

$T_4$

**Wireless Device 1815**

Obtain MIB 1805

Determine a transmission power based on the new/candidate RS

**FIG. 18**

```
┌────────────────────────────────────────────┐
│  Indicating a new/candidate RS in a PUSCH   │
│  transmission of a random-access procedure   │
│                  1910                        │
└────────────────────────────────────────────┘
                      │
                      ▼
        ╱─────────────────────────────╲
       ╱ Configuration parameters received? ╲
       ╲            1920              ╱
        ╲─────────────────────────────╱
                      │
                      │  NO
                      ▼
┌────────────────────────────────────────────┐
│   Send an uplink signal with a transmission power │
│ determined based on the new/candidate reference signal │
│                  1930                        │
└────────────────────────────────────────────┘
```

FIG. 19

Configuration parameters received?
2020

NO

YES

PUSCH transmission of a random-access procedure Indicates a new/candidate RS?
2030

NO

Send an uplink signal with a transmission power determined based on the new/candidate reference signal
2040

Send an uplink signal with a transmission power determined based on an RS used to obtain MIB
2050

FIG. 20

Base Station 2110

Reference signal 2120

Msg3 transmission (a new/candidate RS) 2130

Configuration Parameters 2140

Uplink Transmission 2150

Wireless Device 2115

$T_1$

$T_2$

$T_4$

Obtain MIB

No pathloss reference signal

Determine a transmission power based on the new/ candidate RS

**FIG. 21**

EP 4 068 673 A1

Indicating a new/candidate RS in a PUSCH transmission of a random-access procedure
2210

YES / Configuration parameters indicate at least one pathloss RS?
2220 \ NO

Send an uplink signal with a transmission power determined based on one of the at least one pathloss RS
2230

Send an uplink signal with a transmission power determined based on the new/candidate reference signal
2240

FIG. 22

Configuration parameters indicate at
least one pathloss RS?
2310

NO

YES

PUSCH transmission of a random-access
procedure Indicates a new/candidate RS?
2320

NO

Send an uplink signal with a
transmission power
determined based on the new/
candidate reference signal
2330

Send an uplink signal with a
transmission power
determined based on an RS
used to obtain MIB
2340

FIG. 23A

YES / Configuration parameters indicate at least one pathloss RS? 2355 \ NO

Send an uplink signal with a transmission power determined based on one of the at least one pathloss RS 2360

YES / PUSCH transmission of a random-access procedure Indicates a new/candidate RS? 2365 \ NO

Send an uplink signal with a transmission power determined based on the new/candidate reference signal 2370

Send an uplink signal with a transmission power determined based on an RS used to obtain MIB 2380

FIG. 23B

| Serving Cell ID 2410 | | CORESET ID 2420 | Oct 1 |
| CORESET ID 2430 | TCI State $ID_1$ 2440 | | Oct 2 |
| R 2450 | TCI State $ID_2$ 2460 | | Oct 3 |

2400

**FIG. 24**

EP 4 068 673 A1

Coreset 1
(TCI state 1, TCI state 2)

Coreset 2
(TCI state 3)

Coreset 3
(TCI state 2)

Coreset 4
(TCI state 1)

Determine coreset(s), among
the coresets, to monitor
2520

Coreset 1
(TCI state 1, TCI state 2)

Coreset 3
(TCI state 2)

Coreset 4
(TCI state 1)

Determine overlapped
coresets
2510

FIG. 25A

Receive one or more configuration parameters
indicating a plurality of coresets
2530

Determine/Select a first coreset of
the plurality of coresets
2540

Monitor the first coreset
based on at least two TCI states
2550

Monitor a second coreset comprising at least one TCI
state, of the at least two TCI states, of the first coreset
2560

Receive DCI via the second coreset
2570

FIG. 25B

Sending one or more configuration parameters
indicating a plurality of coresets
2580

Sending an indication to activate a first coreset, of
a plurality of coresets that are overlapping, with a
plurality of TCI states
2585

Sending, via a second coreset of the plurality of
coresets, downlink control information (DCI)
2590

# FIG. 25C

FIG. 26

Europäisches
Patentamt

European
Patent Office

Office européen
des brevets

## EUROPEAN SEARCH REPORT

Application Number

EP 22 16 5509

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/022123 A1 (OFINNO LLC [US]) 4 February 2021 (2021-02-04) * paragraphs [0181] – [0184] * * paragraphs [0207] – [0245] * * paragraphs [0287] – [0298] * ----- | 1-15 | INV. H04L5/00 |
| X | US 2020/045569 A1 (SEO INKWON [KR] ET AL) 6 February 2020 (2020-02-06) * paragraphs [0165] – [0217] * * paragraphs [0235] – [0271] * ----- | 1-15 | |

TECHNICAL FIELDS
SEARCHED        (IPC)

H04L

The present search report has been drawn up for all claims

| Place of search | Date of completion of the search | Examiner |
|---|---|---|
| The Hague | 1 July 2022 | Papadogiannis, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 16 5509

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2022

| Patent document cited in search report | | Publication date | Patent family member(s) | | Publication date |
|---|---|---|---|---|---|
| WO 2021022123 | A1 | 04-02-2021 | CN | 114586459 A | 03-06-2022 |
| | | | EP | 4005138 A1 | 01-06-2022 |
| | | | US | 2022159733 A1 | 19-05-2022 |
| | | | WO | 2021022123 A1 | 04-02-2021 |
| US 2020045569 | A1 | 06-02-2020 | CN | 110972515 A | 07-04-2020 |
| | | | EP | 3657725 A1 | 27-05-2020 |
| | | | EP | 3902189 A2 | 27-10-2021 |
| | | | ES | 2894645 T3 | 15-02-2022 |
| | | | JP | 6961073 B2 | 05-11-2021 |
| | | | JP | 2020532900 A | 12-11-2020 |
| | | | KR | 20200014252 A | 10-02-2020 |
| | | | KR | 20200033834 A | 30-03-2020 |
| | | | KR | 20200084853 A | 13-07-2020 |
| | | | US | 2020045569 A1 | 06-02-2020 |
| | | | US | 2020336928 A1 | 22-10-2020 |
| | | | US | 2021289377 A1 | 16-09-2021 |
| | | | WO | 2020027547 A1 | 06-02-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63168019